(19) Europäisches Patentamt
European Patent Office
Office européen des brevets

(11) EP 2 749 594 B1

(12) **EUROPEAN PATENT SPECIFICATION**

(45) Date of publication and mention of the grant of the patent:
**08.06.2016 Bulletin 2016/23**

(21) Application number: **12851673.9**

(22) Date of filing: **26.06.2012**

(51) Int Cl.:
***C08L 15/00*** *(2006.01)* ***B60C 1/00*** *(2006.01)*
***C08C 19/22*** *(2006.01)* ***C08C 19/25*** *(2006.01)*
***C08F 230/08*** *(2006.01)* ***C08F 236/04*** *(2006.01)*
***C08K 3/36*** *(2006.01)* ***C08K 5/548*** *(2006.01)*
***C08L 9/00*** *(2006.01)* ***C08L 47/00*** *(2006.01)*
***C08C 19/44*** *(2006.01)* ***C08L 7/00*** *(2006.01)*
***C08L 9/06*** *(2006.01)*

(86) International application number:
**PCT/JP2012/066217**

(87) International publication number:
**WO 2013/077019 (30.05.2013 Gazette 2013/22)**

(54) **RUBBER COMPOSITION AND STUDLESS TIRE**

KAUTSCHUKZUSAMMENSETZUNG UND SPIKELOSER REIFEN

COMPOSITION DE CAOUTCHOUC ET PNEU SANS CRAMPONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2011 JP 2011256622**
**24.11.2011 JP 2011256623**
**24.11.2011 JP 2011256624**

(43) Date of publication of application:
**02.07.2014 Bulletin 2014/27**

(73) Proprietor: **Sumitomo Rubber Industries, Ltd.**
**Kobe-shi, Hyogo 651-0072 (JP)**

(72) Inventors:
- **MABUCHI Takahiro**
**Kobe-shi**
**Hyogo 651-0072 (JP)**
- **TOKIMUNE Ryuichi**
**Kobe-shi**
**Hyogo 651-0072 (JP)**
- **TORITA Kazuya**
**Kobe-shi**
**Hyogo 651-0072 (JP)**

(74) Representative: **Manitz, Finsterwald & Partner GbR**
**Martin-Greif-Strasse 1**
**80336 München (DE)**

(56) References cited:
**WO-A1-2009/048006** **WO-A1-2010/116988**
**WO-A1-2011/087004** **WO-A1-2012/011571**
**JP-A- H08 193 147** **JP-A- H08 253 520**
**JP-A- 2000 239 444** **JP-A- 2004 137 463**
**JP-A- 2006 233 177** **JP-A- 2010 077 413**
**JP-A- 2011 079 913** **JP-A- 2012 167 257**
**JP-B1- S4 817 674** **US-A1- 2004 152 845**
**US-A1- 2010 056 703** **US-A1- 2010 056 709**
**US-A1- 2010 056 710** **US-A1- 2010 056 712**
**US-A1- 2010 056 713** **US-A1- 2010 144 954**
**US-A1- 2011 166 254** **US-A1- 2011 237 737**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 749 594 B1

## Description

TECHNICAL FIELD

The present invention relates to a rubber composition and a studless winter tire formed from the rubber composition.

BACKGROUND ART

The use of spiked tires has been banned by law for the prevention of dust pollution caused by spiked tires. Thus, studless winter tires are now used instead of spiked tires in cold regions.

The grip performance of these studless winter tires on ice or snow may be enhanced by using a softer rubber to decrease the elastic modulus at low temperatures, thereby enhancing the traction. In particular, as the braking force on ice is greatly affected by the effective contact area between rubber and ice, flexible rubber needs to be used to increase the effective contact area.

However, simply reducing the hardness of rubber by, for example, using a larger amount of oil reduces the stiffness (rigidity) on ice or snow, unfortunately resulting in poor handling stability. Moreover, recent improvements in road construction lead to further demands for grip performance on not only ice or snow but also wet roads (wet-grip performance), handling stability on dry roads (dry handling stability), and fuel economy.

Not only for trucks, buses, and light trucks but also for passenger vehicles, typical rubbers for treads of studless winter tires are mainly based on natural rubber or polybutadiene rubber as such rubbers can achieve both flexibility at low temperatures and high strength. The combined use of natural rubber and polybutadiene rubber can improve the grip performance on ice or snow as well as fuel economy, abrasion resistance, and rubber strength; however, there still remains room for improvement in wet-grip performance and dry handling stability.

Moreover, Patent Literature 1 proposes a method for improving fuel economy and other properties by using a diene rubber (modified rubber) modified by an organosilicon compound.containing an amino group and an alkoxy group. This method still has room for improvement in terms of the performance on ice and snow (e.g. grip performance, handling stability on ice and snow).

CITATION LIST

PATENT LITERATURE

Patent Literature 1: JP 2000-344955 A

SUMMARY OF INVENTION

TECHNICAL PROBLEM

An object of the present invention is to solve the problems identified above by providing a rubber composition capable of not only improving performance on ice and snow, fuel economy, abrasion resistance, and rubber strength, but also achieving good wet-grip performance and dry handling stability, and by providing a studless winter tire including the rubber composition.

SOLUTION TO PROBLEM

The present invention relates to a rubber composition, including:

a conjugated diene polymer,
a high-cis polybutadiene having a cis microstructure content of not less than 95% by mass,
a polyisoprene-based rubber, and
a silica having a nitrogen adsorption specific surface area of 40 to 400 $m^2/g$,
the conjugated diene polymer being obtained by polymerizing a monomer component including a conjugated diene compound and a silicon-containing vinyl compound in the presence of a polymerization initiator represented by the following formula (I):

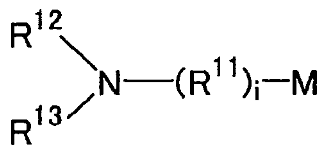

(I)

wherein i represents 0 or 1; $R^{11}$ represents a $C_{1-100}$ hydrocarbylene group; $R^{12}$ and $R^{13}$ each represent an optionally substituted hydrocarbyl group or a trihydrocarbylsilyl group, or $R^{12}$ and $R^{13}$ are bonded to each other to form a hydrocarbylene group optionally containing at least one, as a hetero atom, selected from the group consisting of a silicon atom, a nitrogen atom, and an oxygen atom; and M represents an alkali metal atom, to produce a copolymer, and

then reacting a compound containing at least one of a nitrogen atom and a silicon atom with an active terminal of the copolymer,

wherein the rubber composition includes, based on 100% by mass of a rubber component, 1 to 45% by mass of the conjugated diene polymer, 20 to 64% by mass of the high-cis polybutadiene, and 35 to 60% by mass of the polyisoprene-based rubber, and

the rubber composition includes 5 to 150 parts by mass of the silica for each 100 parts by mass of the rubber component.

$R^{11}$ in the formula (I) is preferably a group represented by the following formula (Ia):

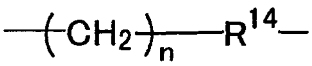

(I a)

wherein $R^{14}$ represents a hydrocarbylene group including at least one of a structural unit derived from a conjugated diene compound and a structural unit derived from an aromatic vinyl compound; and n represents an integer of 1 to 10.

$R^{14}$ in the formula (Ia) is preferably a hydrocarbylene group including from one to ten isoprene-derived structural unit(s).

The silicon-containing vinyl compound is preferably a compound represented by the following formula (II):

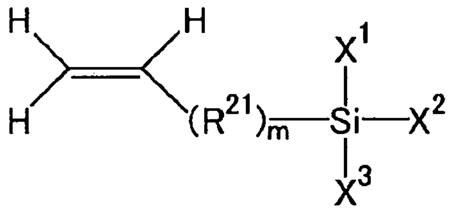

(II)

wherein m represents 0 or 1; $R^{21}$ represents a hydrocarbylene group; and $X^1$, $X^2$, and $X^3$ each represent a substituted amino group, a hydrocarbyloxy group, or an optionally substituted hydrocarbyl group.

The conjugated diene polymer preferably contains a structural unit derived from an aromatic vinyl compound.

The silica preferably includes silica (1) having a nitrogen adsorption specific surface area of at least 40 $m^2/g$ but less than 120 $m^2/g$, and silica (2) having a nitrogen adsorption specific surface area of not less than 120 $m^2/g$.

The rubber composition preferably includes a solid resin having a glass transition temperature of 60 to 120°C in an amount of 1 to 30 parts by mass for each 100 parts by mass of the rubber component.

Preferably, the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$, and the rubber composition includes a solid resin having a glass transition temperature of 60 to 120°C in an amount of 1 to 30 parts by mass for each 100 parts by mass of the rubber component.

The rubber composition preferably includes a mercapto group-containing silane coupling agent in an amount of 0.5 to 20 parts by mass for each 100 parts by mass of the silica.

Preferably, the rubber composition includes a mercapto group-containing silane coupling agent in an amount of 0.5 to 20 parts by mass for each 100 parts by mass of the silica, and the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$.

The rubber composition preferably includes a mercapto group-containing silane coupling agent in an amount of 0.5 to 20 parts by mass for each 100 parts by mass of the silica, and a solid resin having a glass transition temperature

of 60 to 120°C in an amount of 1 to 30 parts by mass for each 100 parts by mass of the rubber component.

Preferably, the rubber composition includes a mercapto group-containing silane coupling agent in an amount of 0.5 to 20 parts by mass for each 100 parts by mass of the silica, the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$, and the rubber composition includes a solid resin having a glass transition temperature of 60 to 120°C in an amount of 1 to 30 parts by mass for each 100 parts by mass of the rubber component.

Preferably, the rubber composition includes a mercapto group-containing silane coupling agent in an amount of 0.5 to 20 parts by mass for each 100 parts by mass of the silica, and the silane coupling agent is at least one of a compound represented by the formula (1) below, and a compound containing a linking unit A represented by the formula (2) below and a linking unit B represented by the formula (3) below,

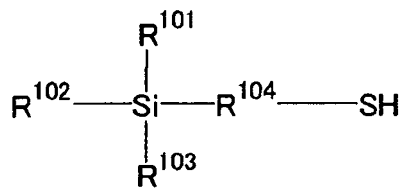

(1)

wherein $R^{101}$ to $R^{103}$ each represent a branched or unbranched $C_{1-12}$ alkyl group, a branched or unbranched $C_{1-12}$ alkoxy group, or a group represented by $-O-(R^{111}-O)_z-R^{112}$ where z $R^{111}$s each represent a branched or unbranched $C_{1-30}$ divalent hydrocarbon group, and z $R^{111}$s may be the same as or different from one another; $R^{112}$ represents a branched or unbranched $C_{1-30}$ alkyl group, a branched or unbranched $C_{2-30}$ alkenyl group, a $C_{6-30}$ aryl group, or a $C_{7-30}$ aralkyl group; and z represents an integer of 1 to 30, and $R^{101}$ to $R^{103}$ may be the same as or different from one another; and $R^{104}$ represents a branched or unbranched $C_{1-6}$ alkylene group;

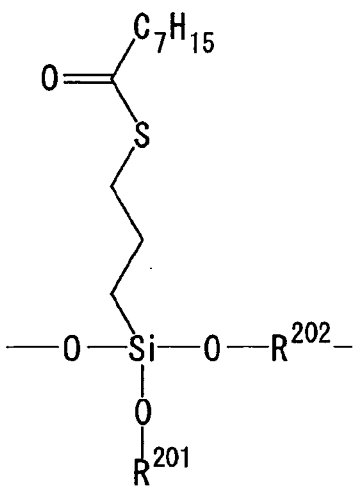

(2)

and

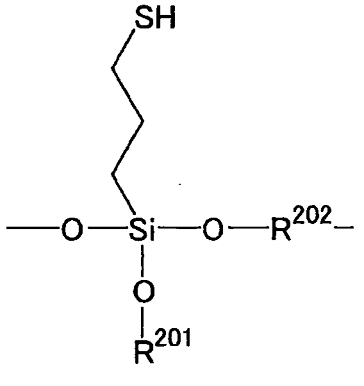

(3)

wherein $R^{201}$ represents a hydrogen atom, a halogen atom, a branched or unbranched $C_{1-30}$ alkyl group, a branched or unbranched $C_{2-30}$ alkenyl group, a branched or unbranched $C_{2-30}$ alkynyl group, or the alkyl group in which a terminal hydrogen atom is replaced with a hydroxy group or a carboxyl group; $R^{202}$ represents a branched or unbranched $C_{1-30}$ alkylene group, a branched or unbranched $C_{2-30}$ alkenylene group, or a branched or unbranched $C_{2-30}$ alkynylene group; and $R^{201}$ and $R^{202}$ may be joined together to form a cyclic structure.

Preferably, the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$, and the nitrogen adsorption specific surface areas and amounts of the silica (1) and the silica (2) satisfy the following inequalities:

(Nitrogen adsorption specific surface area of silica (2))/(Nitrogen adsorption specific surface area of silica (1)) $\geq$ 1.4, and

(Amount of silica (1)) $\times$ 0.06 $\leq$ (Amount of silica (2)) $\leq$ (Amount of silica (1)) $\times$ 15.

The rubber composition is preferably for use in a tread of a studless winter tire.

The present invention also relates to a studless winter tire, formed from the rubber composition.

ADVANTAGEOUS EFFECTS OF INVENTION

The rubber composition of the present invention is a rubber composition including specific amounts of a specific conjugated diene polymer, a high-cis polybutadiene having a cis microstructure content of not less than 95% by mass, a polyisoprene-based rubber, and a silica. Thus, the rubber composition enables to provide a studless winter tire capable of achieving a balanced improvement in performance on ice and snow, abrasion resistance, rubber strength, fuel economy, wet-grip performance, and dry handling stability.

DESCRIPTION OF EMBODIMENTS

As used herein, a hydrocarbyl group denotes a monovalent group provided by removing one hydrogen atom from a hydrocarbon; a hydrocarbylene group denotes a divalent group provided by removing two hydrogen atoms from a hydrocarbon; a hydrocarbyloxy group denotes a monovalent group provided by replacing the hydrogen atom of a hydroxy group with a hydrocarbyl group; a substituted amino group denotes a group provided by replacing at least one hydrogen atom of an amino group with a monovalent atom other than a hydrogen atom or with a monovalent group, or denotes a group provided by replacing the two hydrogen atoms of an amino group with a divalent group; a hydrocarbyl group having a substituent (hereinafter, also referred to as substituted hydrocarbyl group) denotes a monovalent group provided by replacing at least one hydrogen atom of a hydrocarbyl group with a substituent; and a hydrocarbylene group containing a hetero atom (hereinafter, also referred to as hetero atom-containing hydrocarbylene group) denotes a divalent group provided by replacing a hydrogen atom and/or a carbon atom other than the carbon atoms from which a hydrogen atom has been removed in a hydrocarbylene group with a group containing a hetero atom (an atom other than carbon and hydrogen atoms).

The conjugated diene polymer in the present invention is obtained by
polymerizing a monomer component including a conjugated diene compound and a silicon-containing vinyl compound in the presence of a polymerization initiator represented by the following formula (I):

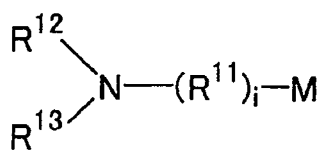

(I)

wherein i represents 0 or 1; $R^{11}$ represents a $C_{1-100}$ hydrocarbylene group; $R^{12}$ and $R^{13}$ each represent an optionally substituted hydrocarbyl group or a trihydrocarbylsilyl group, or $R^{12}$ and $R^{13}$ are bonded to each other to form a hydrocarbylene group optionally containing at least one, as a hetero atom, selected from the group consisting of a silicon

atom, a nitrogen atom, and an oxygen atom; and M represents an alkali metal atom, to produce a copolymer, and then reacting a compound containing a nitrogen atom and/or a silicon atom with an active terminal of the copolymer.

As used herein, the term "modifying" means bonding a copolymer derived from a diene compound alone or with an aromatic vinyl compound, to a compound other than the compounds. The above conjugated diene polymer has a structure in which the polymerization initiation terminal is modified by a polymerization initiator represented by the formula (I); the main chain is modified by copolymerization with a silicon-containing vinyl compound; and the termination terminal is modified by a compound containing a nitrogen atom and/or a silicon atom, a silicon-containing vinyl compound. The use of the conjugated diene polymer in combination with a high-cis polybutadiene having a cis microstructure content of not less than 95% by mass, and a polyisoprene-based rubber enables to disperse silica well while achieving both flexibility at low temperatures and high strength. This makes it possible to simultaneously improve not only the performance on ice and snow, abrasion resistance, rubber strength, and fuel economy, but also the wet-grip performance and dry handling stability, which are conventionally difficult to simultaneously improve. Moreover, the use of the conjugated diene polymer in which each of the initiation terminal, main chain and termination terminal is modified by a specific compound enables to synergistically enhance the effects of improving the properties. Due to these effects, balanced improvements in performance on ice and snow, abrasion resistance, rubber strength, fuel economy, wet-grip performance, and dry handling stability can be achieved at high levels.

In the formula (I), i is 0 or 1, and preferably 1.

$R^{11}$ in the formula (I) is a $C_{1-100}$ hydrocarbylene group, preferably a $C_{6-100}$ hydrocarbylene group, and more preferably a $C_{7-80}$ hydrocarbylene group. If $R^{11}$ has more than 100 carbon atoms, the polymerization initiator has an increased molecular weight, which may reduce the cost efficiency and the workability during the polymerization.

Plural kinds of compounds differing in the carbon number of $R^{11}$ may be used in combination as the polymerization initiator represented by the formula (I).

$R^{11}$ in the formula (I) is preferably a group represented by the following formula (Ia):

$$-\!\left(CH_2\right)_n\!-R^{14}- \qquad (\mathrm{I\,a})$$

wherein $R^{14}$ represents a hydrocarbylene group including a structural unit derived from a conjugated diene compound and/or a structural unit derived from an aromatic vinyl compound; and n represents an integer of 1 to 10.

$R^{14}$ in the formula (Ia) represents a hydrocarbylene group including a structural unit derived from a conjugated diene compound and/or a structural unit derived from an aromatic vinyl compound, preferably a hydrocarbylene group including an isoprene-derived structural unit, and more preferably a hydrocarbylene group including from one to ten isoprene-derived structural unit(s).

The number of the structural unit derived from a conjugated diene compound and/or the structural unit derived from an aromatic vinyl compound in $R^{14}$ preferably ranges from one to ten, and more preferably from one to five.

In the formula (Ia), n represents an integer of 1 to 10, and preferably an integer of 2 to 4.

Examples of $R^{11}$ include a group obtained by bonding from one to ten isoprene-derived structural unit(s) and a methylene group, a group obtained by bonding from one to ten isoprene-derived structural unit(s) and an ethylene group, and a group obtained by bonding from one to ten isoprene-derived structural unit(s) and a trimethylene group, preferably a group obtained by bonding from one to ten isoprene-derived structural unit(s) and a trimethylene group.

In the formula (I), $R^{12}$ and $R^{13}$ each represent an optionally substituted hydrocarbyl group or a trihydrocarbylsilyl group, or $R^{12}$ and $R^{13}$ are bonded to each other to form a hydrocarbylene group optionally containing an atom, as a hetero atom, selected from the group consisting of a silicon atom, a nitrogen atom, and an oxygen atom.

The optionally substituted hydrocarbyl group refers to a hydrocarbyl group or substituted hydrocarbyl group. The substituent in the substituted hydrocarbyl group may be a substituted amino group or a hydrocarbyloxy group. Examples of the hydrocarbyl groups include acyclic alkyl groups such as a methyl group, an ethyl group, an n-propyl group, an isopropyl group, an n-butyl group, an isobutyl group, a sec-butyl group, a tert-butyl group, an n-pentyl group, an n-hexyl group, an n-octyl group, and an n-dodecyl group; cyclic alkyl groups such as a cyclopentyl group and a cyclohexyl group; and aryl groups such as a phenyl group and a benzyl group, preferably acyclic alkyl groups, and more preferably $C_{1-4}$ acyclic alkyl groups. Examples of the substituted hydrocarbyl groups in which the substituent is a substituted amino group include an N,N-dimethylaminomethyl group, a 2-N,N-dimethylaminoethyl group, and a 3-N,N-dimethylaminopropyl group. Examples of the substituted hydrocarbyl groups in which the substituent is a hydrocarbyloxy group include a methoxymethyl group, a methoxyethyl group, and an ethoxymethyl group. Among the above examples, hydrocarbyl groups are preferred; $C_{1-9}$ acyclic alkyl groups are more preferred; and a methyl group or an ethyl group is still more preferred.

Examples of the trihydrocarbylsilyl groups include a trimethylsilyl group, and a tert-butyl-dimethylsilyl group. A trimethylsilyl group is preferred.

The hydrocarbylene group optionally containing at least one, as a hetero atom, selected from the group consisting of a silicon atom, a nitrogen atom, and an oxygen atom refers to a hydrocarbylene group, or a hetero atom-containing hydrocarbylene group in which the hetero atom is at least one selected from the group consisting of a silicon atom, a nitrogen atom and an oxygen atom. Examples of the hetero atom-containing hydrocarbylene groups in which the hetero atom is at least one selected from the group consisting of a silicon atom, a nitrogen atom and an oxygen atom include hetero atom-containing hydrocarbylene groups in which the hetero atom is a silicon atom, hetero atom-containing hydrocarbylene groups in which the hetero atom is a nitrogen atom, and hetero atom-containing hydrocarbylene groups in which the hetero atom is an oxygen atom. Examples of the hydrocarbylene groups include alkylene groups such as a tetramethylene group, a pentamethylene group, a hexamethylene group, a pent-2-ene-1,5-diyl group, and a 2,2,4-trimethylhexane-1,6-diyl group; and alkenediyl groups such as a pent-2-ene-1,5-diyl group, preferably alkylene groups, and more preferably $C_{4-7}$ alkylene groups. Examples of the hetero atom-containing hydrocarbylene groups in which the hetero atom is a silicon atom include a group represented by $-Si(CH_3)_2-CH_2-CH_2-Si(CH_3)_2-$. Examples of the hetero atom-containing hydrocarbylene groups in which the hetero atom is a nitrogen atom include a group represented by -CH=N-CH=CH-and a group represented by $-CH=N-CH_2-CH_2-$. Examples of the hetero atom-containing hydrocarbylene groups in which the hetero atom is an oxygen atom include a group represented by $-CH_2-CH_2-O-CH_2-CH_2-$. Among the above examples, hydrocarbylene groups are preferred; $C_{4-7}$ alkylene groups are more preferred; and a tetramethylene group, a pentamethylene group, and a hexamethylene group are still more preferred.

Preferably, each of $R^{12}$ and $R^{13}$ is a hydrocarbyl group, or $R^{12}$ and $R^{13}$ are bonded to each other to form a hydrocarbylene group. More preferably, each of $R^{12}$ and $R^{13}$ is a $C_{1-4}$ acyclic alkyl group, or $R^{12}$ and $R^{13}$ are bonded to each other to form a $C_{4-7}$ alkylene group. Still more preferably, each of $R^{12}$ and $R^{13}$ is a methyl group or an ethyl group.

M in the formula (I) represents an alkali metal atom. Examples of the alkali metal atoms include Li, Na, K, and Cs, preferably Li.

The polymerization initiator represented by the formula (I) in which i is 1 may be a compound formed from one to five isoprene-derived structural unit(s) polymerized with an aminoalkyllithium compound. Examples of the aminoalkyllithium compounds include N,N-dialkylaminoalkyllithiums such as 3-(N,N-dimethylamino)-1-propyllithium, 3-(N,N-diethylamino)-1-propyllithium, 3-(N,N-di-n-butylamino)-1-propyllithium, 4-(N,N-dimethylamino)-1-butyllithium, 4-(N,N-diethylamino)-1-butyllithium, 4-(N,N-di-n-propylamino)-1-butyllithium, and 3-(N,N-di-n-butylamino)-1-butyllithium; hetero atom-free cyclic aminoalkyllithium compounds such as 3-(1-pyrrolidino)-1-propyllithium, 3-(1-piperidino)-1-propyllithium, 3-(1-hexamethyleneimino)-1-propyllithium, and 3-[1-(1,2,3,6-tetrahydropyridino)]-1-propyllithium; and hetero atom-containing cyclic aminoalkyllithium compounds such as 3-(1-morpholino)-1-propyllithium, 3-(1-imidazolyl)-1-propyllithium, 3-(4,5-dihydro-1-imidazolyl)-1-propyllithium, and 3-(2,2,5,5-tetramethyl-1-aza-2,5-disila-1-cyclopentyl)-1-propyllithium, preferably N,N-dialkylaminoalkyllithiums, and more preferably 3-(N,N-dimethylamino)-1-propyllithium or 3-(N,N-diethylamino)-1-propyllithium.

Examples of the polymerization initiators represented by the formula (I) in which i is 0 include lithium hexamethyleneimide, lithium pyrrolidide, lithium piperidide, lithium heptamethyleneimide, lithium dodecamethyleneimide, lithium dimethylamide, lithium diethylamide, lithium dipropylamide, lithium dibutylamide, lithium dihexylamide, lithium diheptylamide, lithium dioctylamide, lithium di-2-ethylhexylamide, lithium didecylamide, lithium-N-methylpiperadide, lithium ethylpropylamide, lithium ethylbutylamide, lithium methylbutylamide, lithium ethylbenzylamide, and lithium methylphenethylamide.

The polymerization initiator represented by the formula (I) in which i is 0 may be prepared in advance from a secondary amine and a hydrocarbyllithium compound before it is used in the polymerization reaction, or may be prepared in the polymerization system. Examples of the secondary amines include dimethylamine, diethylamine, dibutylamine, dioctylamine, dicyclohexylamine, and diisobutylamine. Other examples thereof include cyclic amines such as azacycloheptane (i.e. hexamethyleneimine), 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-ene, 3-isobutyl-1-azacyclododecane, 2-methyl-7-t-butyl-1-azacyclododecane, 5-nonyl-1-azacyclododecane, 8-(4-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, and 1,5,5-trimethyl-3-azabicyclo[4.4.0]decane.

The polymerization initiator represented by the formula (I) is preferably a compound in which i is 1, more preferably a compound formed from one to five isoprene-derived structural unit(s) polymerized with an N,N-aminoalkyllithium, and still more preferably a compound formed from one to five isoprene-derived structural unit(s) polymerized with 3-(N,N-dimethylamino)-1-propyllithium or 3-(N,N-diethylamino)-1-propyllithium.

The amount of the polymerization initiator represented by the formula (1) to be used is preferably 0.01 to 15 mmol, and more preferably 0.1 to 10 mmol, for each 100 g of the monomer component used in the polymerization.

In the present invention, other polymerization initiators, such as n-butyllithium, may be used in combination, if necessary.

Examples of the conjugated diene compounds include 1,3-butadiene, isoprene, 1,3-pentadiene, 2,3-dimethyl-1,3-butadiene, 1,3-hexadiene, and myrcene. These may be used alone or two or more of these may be used in combination. In view of easy availability, the conjugated diene compound is preferably 1,3-butadiene or isoprene.

The silicon-containing vinyl compound is preferably a compound represented by the following formula (II):

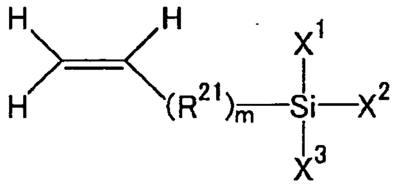

(II)

wherein m represents 0 or 1; $R^{21}$ represents a hydrocarbylene group; and $X^1$, $X^2$, and $X^3$ each represent a substituted amino group, a hydrocarbyloxy group, or an optionally substituted hydrocarbyl group.

In the formula (II), m is 0 or 1, and preferably 0.

The hydrocarbylene group in the formula (II) may be an alkylene group, an alkenediyl group, an arylene group, or a group in which an arylene group and an alkylene group are bonded. Examples of the alkylene groups include a methylene group, an ethylene group, and a trimethylene group. Examples of the alkenediyl groups include a vinylene group and an ethylene-1,1-diyl group. Examples of the arylene groups include a phenylene group, a naphthylene group, and a biphenylene group. Examples of the groups in which an arylene group and an alkylene group are bonded include a group in which a phenylene group and a methylene group are bonded, and a group in which a phenylene group and an ethylene group are bonded.

$R^{21}$ is preferably an arylene group, and more preferably a phenylene group.

In the formula (II), $X^1$, $X^2$ and $X^3$ each represent a substituted amino group, a hydrocarbyloxy group, or an optionally substituted hydrocarbyl group. Preferably, at least one of $X^1$, $X^2$ and $X^3$ is a substituted amino group. More preferably, two of $X^1$, $X^2$ and $X^3$ are substituted amino groups.

In the formula (II), the substituted amino group is preferably a group represented by the following formula (IIa) :

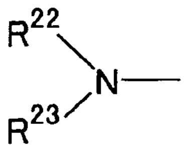

(IIa)

wherein $R^{22}$ and $R^{23}$ each represent an optionally substituted hydrocarbyl group or a trihydrocarbylsilyl group, or $R^{22}$ and $R^{23}$ are bonded to each other to form a hydrocarbylene group optionally containing a nitrogen atom and/or an oxygen atom as a hetero atom.

The optionally substituted hydrocarbyl group in the formula (IIa) refers to a hydrocarbyl group or a substituted hydrocarbyl group. The substituted hydrocarbyl group may be a substituted hydrocarbyl group in which the substituent is a hydrocarbyloxy group. Examples of the hydrocarbyl groups include acyclic alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; and aryl groups such as a phenyl group, a benzyl group, and a naphthyl group, preferably acyclic alkyl groups, and more preferably a methyl group or an ethyl group. Examples of the substituted hydrocarbyl groups in which the substituent is a hydrocarbyloxy group include alkoxyalkyl groups such as a methoxymethyl group, an ethoxymethyl group, and a methoxyethyl group; and aryloxyalkyl groups such as a phenoxymethyl group.

Examples of the trihydrocarbylsilyl groups for the formula (IIa) include trialkylsilyl groups such as a trimethylsilyl group, a triethylsilyl group, and a tertbutyldimethylsilyl group.

The hydrocarbylene group optionally containing a nitrogen atom and/or an oxygen atom as a hetero atom in the formula (IIa) refers to a hydrocarbylene group, or a hetero atom-containing hydrocarbylene group in which the hetero atom is a nitrogen atom and/or an oxygen atom. The hetero atom-containing hydrocarbylene group in which the hetero atom is a nitrogen atom and/or an oxygen atom may be a hydrocarbylene group containing a nitrogen atom as a hetero atom, or a hydrocarbylene group containing an oxygen atom as a hetero atom. Examples of the hydrocarbylene groups include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; and alkenediyl groups such as a pent-2-ene-1,5-diyl group. Examples of the hetero atom-containing hydrocarbylene groups in which the hetero atom is a nitrogen atom include a group represented by $-CH=N-CH=CH-$ and a group represented by $-CH=N-CH_2-CH_2-$. Examples of the hetero atom-containing hydrocarbylene

groups in which the hetero atom is an oxygen atom include a group represented by $-CH_2-CH_2-O-CH_2-CH_2-$.

Preferably, each of $R^{22}$ and $R^{23}$ is an alkyl group, or $R^{22}$ and $R^{23}$ are bonded to each other to form an alkylene group. Each of $R^{22}$ and $R^{23}$ is more preferably an alkyl group, and still more preferably a methyl group or an ethyl group.

Examples of the substituted amino groups represented by the formula (IIa) in which each of $R^{22}$ and $R^{23}$ is a hydrocarbyl group include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a ditert-butylamino group; and diarylamino groups such as a diphenylamino group, preferably dialkylamino groups, and more preferably a dimethylamino group, a diethylamino group, and a di-n-butylamino group. Examples of the substituted amino groups in which each of $R^{22}$ and $R^{23}$ is a substituted hydrocarbyl group in which the substituent is a hydrocarbyloxy group include di(alkoxyalkyl)amino groups such as a di(methoxymethyl)amino group and a di(ethoxymethyl)amino group. Examples of the substituted amino groups in which $R^{22}$ or $R^{23}$ is a trihydrocarbylsilyl group include trialkylsilyl group-containing amino groups such as a bis(trimethylsilyl)amino group, a bis(tert-butyldimethylsilyl)amino group, and an N-trimethylsilyl-N-methylamino group.

Examples of the substituted amino groups represented by the formula (IIa) in which $R^{22}$ and $R^{23}$ are bonded to each other to form a hydrocarbylene group include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group. Examples of the substituted amino groups with a hydrocarbylene group containing a nitrogen atom as a hetero atom include a 1-imidazolyl group and a 4,5-dihydro-1-imidazolyl group. Examples of the substituted amino groups with a hydrocarbylene group containing an oxygen atom as a hetero atom include a morpholino group.

The substituted amino group represented by the formula (IIa) is preferably a dialkylamino group or a 1-alkyleneimino group; more preferably a dialkylamino group; and still more preferably a dimethylamino group, a diethylamino group, or a di-n-butylamino group.

Examples of the hydrocarbyloxy groups for the formula (II) include alkoxy groups such as a methoxy group, an ethoxy group, an n-propoxy group, an isopropoxy group, an n-butoxy group, a sec-butoxy group, and a tert-butoxy group; and aryloxy groups such as a phenoxy group and a benzyloxy group.

The optionally substituted hydrocarbyl group in the formula (II) refers to a hydrocarbyl group or a substituted hydrocarbyl group. The substituted hydrocarbyl group may be a substituted hydrocarbyl group in which the substituent is a hydrocarbyloxy group. Examples of the hydrocarbyl groups include alkyl groups such as a methyl group, an ethyl group, an n-propyl group, an isopropyl group, an n-butyl group, a sec-butyl group, and a tert-butyl group; and aryl groups such as a phenyl group, a 4-methyl-1-phenyl group, and a benzyl group. Examples of the substituted hydrocarbyl groups in which the substituent is a hydrocarbyloxy group include alkoxyalkyl groups such as a methoxymethyl group, an ethoxymethyl group, and an ethoxyethyl group.

Examples of the silicon-containing vinyl compounds represented by the formula (II) in which one of $X^1$, $X^2$, and $X^3$ is a substituted amino group, and m is 0 include:

(dialkylamino)dialkylvinylsilanes such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane, (ethylmethylamino)diethylvinylsilane, (di-n-propylamino)diethylvinylsilane, and (diisopropylamino)diethylvinylsilane; [bis(trialkylsilyl)amino]dialkylvinylsilanes such as [bis(trimethylsilyl)amino]dimethylvinylsilane, [bis(t-butyldimethylsilyl)amino]dimethylvinylsilane, [bis(trimethylsilyl)amino]diethylvinylsilane, and [bis(t-butyldimethylsilyl)amino]diethylvinylsilane; (dialkylamino)di(alkoxyalkyl)vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino)di(ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; and cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane.

Examples of the silicon-containing vinyl compounds represented by the formula (II) in which one of $X^1$, $X^2$, and $X^3$ is a substituted amino group, and m is 1 include:

(dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (di-n-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane.

Examples of the silicon-containing vinyl compounds represented by the formula (II) in which two of $X^1$, $X^2$, and $X^3$ are substituted amino groups, and m is 0 include:

bis(dialkylamino)alkylvinylsilanes such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane; bis(dialkylamino)alkoxyalkylsilanes such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethylvinylsilane, bis(diethylamino)ethoxymethylvinylsilane, and bis(dimethylamino)ethoxyethylvinylsilane; and bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane.

Examples of the silicon-containing vinyl compounds represented by the formula (II) in which two of $X^1$, $X^2$, and $X^3$ are substituted amino groups, and m is 1 include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(di-n-butylamino)ethyl-4-vinylphenylsilane, and bis(di-n-butylamino)ethyl-3-vinylphenylsilane.

Examples of the silicon-containing vinyl compounds represented by the formula (II) in which the three of $X^1$, $X^2$, and $X^3$ are substituted amino groups, and m is 0 include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane.

Examples of the silicon-containing vinyl compounds represented by the formula (II) in which the three of $X^1$, $X^2$, and $X^3$ are substituted amino groups, and m is 1 include tris(dialkylamino)vinylphenylsilanes such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane.

Examples of the silicon-containing vinyl compounds represented by the formula (II) in which each of $X^1$, $X^2$, and $X^3$ is not a substituted amino group, and m is 0 include:

trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tert-butoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; and substituted alkoxyvinylsilane compounds such as tris(β-methoxyethoxy)vinylsilane.

Other examples of the silicon-containing vinyl compounds include bis(trialkylsilyl)aminostyrenes such as 4-N,N-bis(trimethylsilyl)aminostyrene and 3-N,N-bis(trimethylsilyl)aminostyrene; and bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene.

The silicon-containing vinyl compound is preferably a compound represented by the formula (II), more preferably a compound represented by the formula (II) in which m is 0, and still more preferably a compound represented by the formula (II) in which two of $X^1$, $X^2$ and $X^3$ are dialkylamino groups.

The silicon-containing vinyl compound is particularly preferably bis(dimethylamino)methylvinylsilane, bis(diethylamino)methylvinylsilane, or bis(di-n-butylamino)methylvinylsilane.

The amount of the silicon-containing vinyl compound used in the production of the conjugated diene polymer is preferably not less than 0.01% by mass, more preferably not less than 0.02% by mass, and still more preferably not less than 0.05% by mass, based on 100% by mass of the total amount of the monomer component used in the polymerization in terms of achieving a balanced enhancement in performance on ice and snow, abrasion resistance, rubber

strength, fuel economy, wet-grip performance, and dry handling stability. The amount is preferably not more than 20% by mass, more preferably not more than 2% by mass, and still more preferably not more than 1% by mass in terms of increasing cost efficiency and rubber strength.

In the production of the conjugated diene polymer, the monomer component may further include polymerizable monomers, in addition to the conjugated diene compound and silicon-containing vinyl compound. Examples of these monomers include aromatic vinyl compounds, vinyl nitriles, and unsaturated carboxylic acid esters. Examples of the aromatic vinyl compounds include styrene, $\alpha$-methylstyrene, vinyltoluene, vinylnaphthalene, divinylbenzene, trivinylbenzene, and divinylnaphthalene. Examples of the vinyl nitriles include acrylonitrile. Examples of the unsaturated carboxylic acid esters include methyl acrylate, ethyl acrylate, methyl methacrylate, and ethyl methacrylate. Aromatic vinyl compounds, more preferably styrene, are preferred among the above examples.

In the case where an aromatic vinyl compound is used in the production of the conjugated diene polymer, the amount of the aromatic vinyl compound based on 100% by mass of the combined amount of the conjugated diene compound and the aromatic vinyl compound is preferably not less than 10% by mass (the amount of the conjugated diene compound is not more than 90% by mass), and more preferably not less than 15% by mass (the amount of the conjugated diene compound is not more than 85% by mass). Moreover, from the viewpoint of the performance on ice and snow and fuel economy, the amount of the aromatic vinyl compound is preferably not more than 50% by mass (the amount of the conjugated diene compound is not less than 50% by mass), and more preferably not more than 45% by mass (the amount of the conjugated diene compound is not less than 55% by mass).

In the production of the conjugated diene polymer, polymerization is preferably performed in a hydrocarbon solvent. Hydrocarbon solvents do not inactivate the polymerization initiator represented by the formula (I). Examples of the hydrocarbon solvents include aliphatic hydrocarbons, aromatic hydrocarbons, and alicyclic hydrocarbons. Examples of the aliphatic hydrocarbons include propane, n-butane, iso-butane, n-pentane, isopentane, n-hexane, n-heptane, and n-octane. Examples of the aromatic hydrocarbons include benzene, toluene, xylene, and ethylbenzene. Examples of the alicyclic hydrocarbons include cyclopentane and cyclohexane. The hydrocarbon solvent may be a mixture of different components, such as industrial hexane. It is preferably a $C_{2-12}$ hydrocarbon.

The polymerization reaction may be performed in the presence of an agent for adjusting the vinyl bond content in conjugated diene units, or an agent for adjusting the distribution of a conjugated diene unit and a monomer unit based on a monomer other than conjugated dienes in conjugated diene polymer chains (hereinafter, referred to collectively as "adjusting agents"). Examples of the agents include ether compounds, tertiary amine compounds, and phosphine compounds. Examples of the ether compounds include cyclic ethers such as tetrahydrofuran, tetrahydropyran, and 1,4-dioxane; aliphatic monoethers such as diethyl ether and dibutyl ether; aliphatic diethers such as ethylene glycol dimethyl ether, ethylene glycol diethyl ether, ethylene glycol dibutyl ether, diethylene glycol diethyl ether, and diethylene glycol dibutyl ether; and aromatic ethers such as diphenyl ether and anisole. Examples of the tertiary amine compounds include triethylamine, tripropylamine, tributylamine, N,N,N',N'-tetramethylethylenediamine, N,N-diethylaniline, pyridine, and quinoline. Examples of the phosphine compounds include trimethylphosphine, triethylphosphine, and triphenylphosphine. One or more of them may be used.

In the production of the conjugated diene polymer, the polymerization initiator may be supplied to a polymerization reactor before the monomer component is supplied to the polymerization reactor; or the polymerization initiator may be supplied to a polymerization reactor after the whole amount of the monomer component used in the polymerization is supplied to the polymerization reactor; or the polymerization initiator may be supplied to a polymerization reactor after a part of the monomer component used in the polymerization is supplied to the polymerization reactor. The polymerization initiator may be supplied at once or continuously to the polymerization reactor.

In the production of the conjugated diene polymer, the monomer component may be supplied at once, continuously, or intermittently to the polymerization reactor. Moreover, monomers may be supplied individually or simultaneously to the polymerization reactor.

In the production of the conjugated diene polymer, the polymerization temperature is usually 25 to 100°C, preferably 35 to 90°C, and more preferably 50 to 80°C. The polymerization time usually ranges from 10 minutes to 5 hours.

The conjugated diene polymer is obtained by polymerizing a monomer component including a conjugated diene compound and a silicon-containing vinyl compound in the presence of a polymerization initiator represented by the formula (I) to produce a copolymer, and then reacting a compound containing a nitrogen atom and/or a silicon atom with an active terminal of the copolymer (the active terminal of the copolymer is considered to contain an alkali metal derived from the polymerization initiator) (terminal modification reaction). More specifically, the conjugated diene polymer is obtained by adding the compound containing a nitrogen atom and/or a silicon atom to the polymerization solution and then mixing them. The amount of the compound containing a nitrogen atom and/or a silicon atom to be added to the polymerization solution is usually 0.1 to 3 mol, preferably 0.5 to 2 mol, and more preferably 0.7 to 1.5 mol, per mol of the alkali metal derived from the polymerization initiator represented by the formula (I).

The terminal modification reaction is usually performed at a temperature of 25 to 100°C, preferably 35 to 90°C, and more preferably 50 to 80°C. The time period for the reaction is usually 60 seconds to 5 hours, preferably 5 minutes

to 1 hour, and more preferably 15 minutes to 1 hour.

Preferred examples of the compound containing a nitrogen atom and/or a silicon atom include compounds containing a nitrogen atom and a carbonyl group.

The compound containing a nitrogen atom and a carbonyl group is preferably a compound represented by the following formula (III):

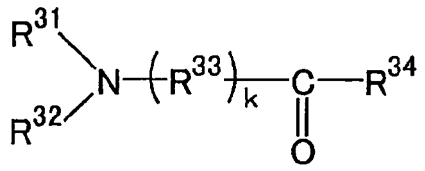

(III)

wherein $R^{31}$ represents an optionally substituted hydrocarbyl group, or is joined to $R^{32}$ to form a hydrocarbylene group optionally containing a nitrogen atom and/or an oxygen atom as a hetero atom, or is joined to $R^{34}$ to form a divalent group; $R^{32}$ represents an optionally substituted hydrocarbyl group, or is joined to $R^{31}$ to form a hydrocarbylene group optionally containing a nitrogen atom and/or an oxygen atom as a hetero atom; and $R^{34}$ represents an optionally substituted hydrocarbyl group or a hydrogen atom, or is joined to $R^{31}$ to form a divalent group; $R^{33}$ represents a divalent group; and k represents 0 or 1.

In the formula (III), the optionally substituted hydrocarbyl group for $R^{31}$, $R^{32}$ or $R^{34}$ refers to a hydrocarbyl group or a substituted hydrocarbyl group. The substituted hydrocarbyl group may be a substituted hydrocarbyl group in which the substituent is a hydrocarbyloxy group, or a substituted hydrocarbyl group in which the substituent is a substituted amino group. Examples of the hydrocarbyl groups include alkyl groups such as a methyl group, an ethyl group, an n-propyl group, an isopropyl group, and an n-butyl group; alkenyl groups such as a vinyl group, an allyl group, and an isopropenyl group; and aryl groups such as a phenyl group. Examples of the substituted hydrocarbyl groups in which the substituent is a hydrocarbyloxy group include alkoxyalkyl groups such as a methoxymethyl group, an ethoxymethyl group, and an ethoxyethyl group. Examples of the substituted hydrocarbyl groups in which the substituent is a substituted amino group include (N,N-dialkylamino)alkyl groups such as a 2-(N,N-dimethylamino)ethyl group, a 2-(N,N-diethylamino)ethyl group, a 3-(N,N-dimethylamino)propyl group, and a 3-(N,N-diethylamino)propyl group; (N,N-dialkylamino)aryl groups such as a 4-(N,N-dimethylamino)phenyl group, a 3-(N,N-dimethylamino)phenyl group, a 4-(N,N-diethylamino)phenyl group, and a 3-(N,N-diethylamino)phenyl group; (N,N-dialkylamino)alkylaryl groups such as a 4-(N,N-dimethylamino)methylphenyl group and a 4-(N,N-dimethylamino)ethylphenyl group; cyclic amino group-containing alkyl groups such as a 3-pyrrolidinopropyl group, a 3-piperidinopropyl group, and a 3-imidazolylpropyl group; cyclic amino group-containing aryl groups such as a 4-pyrrolidinophenyl group, a 4-piperidinophenyl group, and a 4-imidazolylphenyl group; and cyclic amino group-containing alkylaryl groups such as a 4-pyrrolidinoethylphenyl group, a 4-piperidinoethylphenyl group, and a 4-imidazolylethylphenyl group.

In the formula (III), the hydrocarbylene group optionally containing a nitrogen atom and/or an oxygen atom as a hetero atom, formed by joining $R^{31}$ and $R^{32}$ refers to a hydrocarbylene group or a hetero atom-containing hydrocarbylene group in which the hetero atom is a nitrogen atom and/or an oxygen atom. The hetero atom-containing hydrocarbylene group in which the hetero atom is a nitrogen atom and/or an oxygen atom may be a hetero atom-containing hydrocarbylene group in which the hetero atom is a nitrogen atom or a hetero atom-containing hydrocarbylene group in which the hetero atom is an oxygen atom. Examples of the hydrocarbylene groups include alkylene groups such as a trimethylene group, a tetramethylene group, a pentamethylene group, a hexamethylene group, a pentan-2-en-1,5-diyl group, and a 2,2,4-trimethylhexane-1,6-diyl group; and arylene groups such as a 1,4-phenylene group. Examples of the hetero atom-containing hydrocarbylene groups in which the hetero atom is a nitrogen atom include a group represented by -CH=N-CH=CH- and a group represented by-CH=N-$CH_2$-$CH_2$-. Examples of the hetero atom-containing hydrocarbylene groups in which the hetero atom is an oxygen atom include groups represented by $-(CH_2)_s-O-(CH_2)_t-$ where s and t each represent an integer of 1 or more.

In the formula (III), each of the divalent group formed by joining $R^{31}$ and $R^{34}$, and the divalent group for $R^{33}$ may be a hydrocarbylene group, a hetero atom-containing hydrocarbylene group in which the hetero atom is a nitrogen atom, a hetero atom-containing hydrocarbylene group in which the hetero atom is an oxygen atom, a group in which a hydrocarbylene group and an oxygen atom are bonded, or a group in which a hydrocarbylene group and a group represented by $-NR^{35}-$ (wherein $R^{35}$ represents a hydrocarbyl group or a hydrogen atom) are bonded. Examples of the hydrocarbylene groups include alkylene groups such as a trimethylene group, a tetramethylene group, a pentamethylene group, a hexamethylene group, a pentan-2-en-1,5-diyl group, and a 2,2,4-trimethylhexane-1,6-diyl group; and arylene groups such as a 1,4-phenylene group. Examples of the hetero atom-containing hydrocarbylene groups in which the hetero atom is a nitrogen atom include a group represented by -CH=N-CH=CH- and a group represented by-CH=N-$CH_2$-$CH_2$-. Examples of the hetero atom-containing hydrocarbylene groups in which the hetero atom is an oxygen atom

include groups represented by $-(CH_2)_s-O-(CH_2)_t-$ where s and t each represent an integer of 1 or more. Examples of the groups in which a hydrocarbylene group and an oxygen atom are bonded include groups represented by $-(CH_2)_r-O-$ where r represents an integer of 1 or more. Examples of the groups in which a hydrocarbylene group and a group represented by $-NR^{35}-$ (wherein $R^{35}$ represents a hydrocarbyl group or a hydrogen atom) are bonded include groups represented by $-(CH_2)_p-NR^{35}-$ where $R^{35}$ represents a hydrocarbyl group (preferably a $C_{1-6}$ hydrocarbyl group), or a hydrogen atom; and p represents an integer of 1 or more.

Preferred examples of the compound represented by the formula (III) include compounds represented by the formula (III) in which k is 0, and $R^{34}$ is an optionally substituted hydrocarbyl group or a hydrogen atom, represented by the following formula (IIIa):

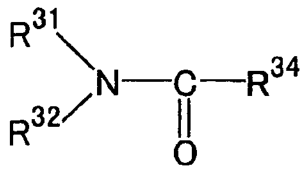

(IIIa)

wherein $R^{31}$ represents an optionally substituted hydrocarbyl group, or is joined to $R^{32}$ to form a hydrocarbylene group optionally containing a nitrogen atom and/or an oxygen atom as a hetero atom; $R^{32}$ represents an optionally substituted hydrocarbyl group, or is joined to $R^{31}$ to form a hydrocarbylene group optionally containing a nitrogen atom and/or an oxygen atom as a hetero atom; and $R^{34}$ represents an optionally substituted hydrocarbyl group or a hydrogen atom.

In the formula (IIIa), the description and examples of the optionally substituted hydrocarbyl group for $R^{31}$, $R^{32}$ or $R^{34}$, and the hydrocarbylene group optionally containing a nitrogen atom and/or an oxygen atom as a hetero atom, formed by joining $R^{31}$ and $R^{32}$, are the same as described for the formula (III).

In the formula (IIIa), preferably, $R^{31}$ is a $C_{1-10}$ hydrocarbyl group, or is joined to $R^{32}$ to form a $C_{3-10}$ hydrocarbylene group or a hetero atom-containing $C_{3-10}$ hydrocarbylene group in which the hetero atom is a nitrogen atom. More preferably, $R^{31}$ is a $C_{1-10}$ alkyl group or a $C_{6-10}$ aryl group, or is joined to $R^{32}$ to form a $C_{3-10}$ alkylene group, a group represented by -CH=N-CH=CH-, or a group represented by $-CH=N-CH_2-CH_2-$. $R^{31}$ is still more preferably a $C_{1-6}$ alkyl group, and particularly preferably a methyl group or an ethyl group.

In the formula (IIIa), preferably, $R^{32}$ is a $C_{1-10}$ hydrocarbyl group, or is joined to $R^{31}$ to form a $C_{3-10}$ hydrocarbylene group or a hetero atom-containing $C_{3-10}$ hydrocarbylene group in which the hetero atom is a nitrogen atom. More preferably, $R^{32}$ is a $C_{1-10}$ alkyl group or a $C_{6-10}$ aryl group, or is joined to $R^{31}$ to form a $C_{3-10}$ alkylene group, a group represented by -CH=N-CH=CH-, or a group represented by $-CH=N-CH_2-CH_2-$. $R^{32}$ is still more preferably a $C_{1-6}$ alkyl group, and particularly preferably a methyl group or an ethyl group.

In the formula (IIIa), $R^{34}$ is preferably a hydrocarbyl group or a hydrogen atom, more preferably a $C_{1-10}$ hydrocarbyl group or a hydrogen atom, still more preferably a $C_{1-6}$ alkyl group or a hydrogen atom, and particularly preferably a hydrogen atom, a methyl group or an ethyl group.

Examples of the compounds represented by the formula (IIIa) in which $R^{34}$ is a hydrocarbyl group include N,N-dihydrocarbylacetamides such as N,N-dimethylacetamide, N,N-diethylacetamide, and N-methyl-N-ethylacetamide; N,N-dihydrocarbylacrylamides such as N-dimethylacrylamide, N,N-diethylacrylamide, and N-methyl-N-ethylacrylamide; and N,N-dihydrocarbylmethacrylamides such as N,N-dimethylmethacrylamide, N,N-diethylmethacrylamide, and N-methyl-N-ethylmethacrylamide.

Examples of the compounds represented by the formula (IIIa) in which $R^{34}$ is a hydrogen atom include N,N-dihydrocarbylformamides such as N,N-dimethylformamide, N,N-dimethylformamide, and N-methyl-N-ethylformamide.

Preferred examples of the compound represented by the formula (III) include compounds represented by the formula (III) in which k is 0, and $R^{34}$ is joined to $R^{31}$ to form a divalent group, represented by the following formula (IIIb):

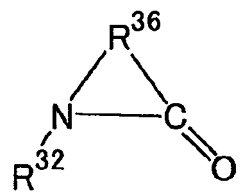

(IIIb)

wherein $R^{32}$ represents an optionally substituted hydrocarbyl group; and $R^{36}$ represents a hydrocarbylene group, or a group in which a hydrocarbylene group and a group represented by $-NR^{35}-$ are bonded, where $R^{35}$ represents a hydrocarbyl group or a hydrogen atom.

In the formula (IIIb), the description and examples of the optionally substituted hydrocarbyl group for $R^{32}$ are the same as described for the formula (III).

In the formula (IIIb), examples of the hydrocarbylene groups for $R^{36}$ include alkylene groups such as a trimethylene group, a tetramethylene group, a pentamethylene group, a hexamethylene group, a pentan-2-en-1,5-diyl group, and a 2,2,4-trimethylhexane-1,6-diyl group; and arylene groups such as a 1,4-phenylene group. Examples of the groups in which a hydrocarbylene group and a group represented by $-NR^{35}-$ (wherein $R^{35}$ represents a hydrocarbyl group or a hydrogen atom) are bonded for $R^{36}$ include groups represented by $-(CH_2)_p-NR^{35}-$ where $R^{35}$ represents a hydrocarbyl group or a hydrogen atom, and p represents an integer of 1 or more.

In the formula (IIIb), $R^{32}$ is preferably a $C_{1-10}$ hydrocarbyl group, more preferably a $C_{1-10}$ alkyl group or a $C_{6-10}$ aryl group, still more preferably a $C_{1-6}$ alkyl group or a phenyl group, and particularly preferably a methyl group, an ethyl group, or a phenyl group.

In the formula (IIIb), $R^{36}$ is preferably a $C_{1-10}$ hydrocarbylene group, or a group in which a $C_{1-10}$ hydrocarbylene group and a group represented by $-NR^{35}-$(wherein $R^{35}$ represents a hydrocarbyl group (preferably a $C_{1-10}$ hydrocarbyl group) or a hydrogen atom) are bonded, more preferably a $C_{3-6}$ alkylene group or a group represented by $-(CH_2)_p-NR^{35}-$ (wherein $R^{35}$ represents a hydrocarbyl group (preferably a $C_{1-10}$ hydrocarbyl group), and p represents an integer of 1 or more (preferably an integer of 2 to 5)), and further preferably a trimethylene group, a tetramethylene group, a pentamethylene group, or a group represented by $-(CH_2)_2-N(CH_3)-$.

Examples of the compounds represented by the formula (IIIb) in which $R^{36}$ is a hydrocarbylene group include N-hydrocarbyl-β-propiolactams such as N-methyl-β-propiolactam and N-phenyl-β-propiolactam; N-hydrocarbyl-2-pyrrolidones such as N-methyl-2-pyrrolidone, N-vinyl-2-pyrrolidone, N-phenyl-2-pyrrolidone, N-tert-butyl-2-pyrrolidone, and N-methyl-5-methyl-2-pyrrolidone; N-hydrocarbyl-2-piperidones such as N-methyl-2-piperidone, N-vinyl-2-piperidone, and N-phenyl-2-piperidone; N-hydrocarbyl-ε-caprolactams such as N-methyl-ε-caprolactam and N-phenyl-ε-caprolactam; and N-hydrocarbyl-ω-laurilolactams such as N-methyl-ω-laurilolactam and N-vinyl-ω-laurilolactam. N-phenyl-2-pyrrolidone and N-methyl-ε-caprolactam are preferred among the above examples.

Examples of the compounds represented by the formula (IIIb) in which $R^{36}$ is a group in which a hydrocarbylene group and a group represented by $-NR^{35}-$ (wherein $R^{35}$ represents a hydrocarbyl group or a hydrogen atom) are bonded include 1,3-dihydrocarbyl-2-imidazolidinones such as 1,3-dimethyl-2-imidazolidinone, 1,3-diethyl-2-imidazolidinone, 1,3-divinyl-2-imidazolidinone, and 1-methyl-3-ethyl-2-imidazolidinone. Preferred among the above examples is 1,3-dimethyl-2-imidazolidinone.

Preferred examples of the compound represented by the formula (III) include compounds represented by the formula (III) in which k is 1, and $R^{33}$ is a hydrocarbylene group, represented by the following formula (IIIc):

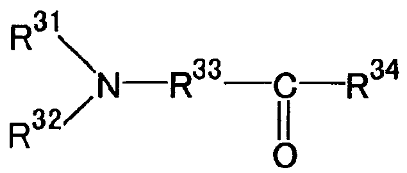

(IIIc)

wherein $R^{31}$ represents an optionally substituted hydrocarbyl group, or is joined to $R^{32}$ to form a hydrocarbylene group optionally containing a nitrogen atom and/or an oxygen atom as a hetero atom; $R^{32}$ represents an optionally substituted hydrocarbyl group, or is joined to $R^{31}$ to form a hydrocarbylene group optionally containing a nitrogen atom and/or an oxygen atom as a hetero atom; $R^{33}$ represents a hydrocarbylene group; and $R^{34}$ represents an optionally substituted hydrocarbyl group or a hydrogen atom.

In the formula (IIIc), the description and examples of the optionally substituted hydrocarbyl group for $R^{31}$, $R^{32}$ or $R^{34}$, the hydrocarbylene group optionally containing a nitrogen atom and/or an oxygen atom as a hetero atom, formed by joining $R^{31}$ and $R^{32}$, and the hydrocarbylene group for $R^{33}$ are the same as described for the formula (III).

In the formula (IIIc), $R^{33}$ is preferably a $C_{1-10}$ hydrocarbylene group, more preferably a $C_{1-10}$ alkylene group or a $C_{6-10}$ arylene group, still more preferably a $C_{1-6}$ alkylene group or a phenylene group, and particularly preferably an ethylene group, a trimethylene group, or a 1,4-phenylene group.

In the formula (IIIc), $R^{34}$ is preferably a $C_{1-10}$ hydrocarbyl group, or a substituted $C_{1-10}$ hydrocarbyl group in which the substituent is a dialkylamino group, more preferably a $C_{1-6}$ alkyl group, a $C_{6-10}$ aryl group, a $C_{1-6}$ dialkylaminoalkyl group, or a $C_{6-10}$ dialkylaminoaryl group, and still more preferably a methyl group, an ethyl group, a phenyl group, a 3-dimethylaminoethyl group, or a 4-diethylaminophenyl group.

In the formula (IIIc), preferably, $R^{31}$ is a $C_{1-10}$ hydrocarbyl group, or is joined to $R^{32}$ to form a $C_{3-10}$ hydrocarbylene group, or a hetero atom-containing $C_{3-10}$ hydrocarbylene group in which the hetero atom is a nitrogen atom or an oxygen atom. More preferably, $R^{31}$ is a $C_{1-10}$ alkyl group or a $C_{6-10}$ aryl group, or is joined to $R^{32}$ to form a $C_{3-10}$ alkylene group, a group represented by $-CH=N-CH=CH-$, a group represented by $-CH=N-CH_2-CH_2-$, or a group represented by

$-(CH_2)_2-O-(CH_2)_2-$. Still more preferably, $R^{31}$ is a $C_{1-6}$ alkyl group, or is joined to $R^{32}$ to form a $C_{3-6}$ alkylene group, a group represented by -CH=N-CH=CH-, or a group represented by $-CH=N-CH_2-CH_2-$. Particularly preferably, $R^{31}$ is a methyl group or an ethyl group, or is joined to $R^{32}$ to form a tetramethylene group, a hexamethylene group, or a group represented by -CH=N-CH=CH-.

In the formula (IIIc), preferably, $R^{32}$ is a $C_{1-10}$ hydrocarbyl group, or is joined to $R^{31}$ to form a $C_{3-10}$ hydrocarbylene group, or a hetero atom-containing $C_{3-10}$ hydrocarbylene group in which the hetero atom is a nitrogen atom or an oxygen atom. More preferably, $R^{32}$ is a $C_{1-10}$ alkyl group or a $C_{6-10}$ aryl group, or is joined to $R^{31}$ to form a $C_{3-10}$ alkylene group, a group represented by -CH=N-CH=CH-, a group represented by $-CH=N-CH_2-CH_2-$, or a group represented by $-(CH_2)_2-O-(CH_2)_2-$. Still more preferably, $R^{32}$ is a $C_{1-6}$ alkyl group, or is joined to $R^{31}$ to form a $C_{3-6}$ alkylene group, a group represented by -CH=N-CH=CH-, or a group represented by $-CH=N-CH_2-CH_2-$. Particularly preferably, $R^{32}$ is a methyl group or an ethyl group, or is joined to $R^{31}$ to form a tetramethylene group, a hexamethylene group, or a group represented by -CH=N-CH=CH-.

Examples of the compounds represented by the formula (IIIc) in which $R^{34}$ is a hydrocarbyl group include 4-N,N-dihydrocarbylaminoacetophenones such as 4-(N,N-dimethylamino)acetophenone, 4-N-methyl-N-ethylaminoacetophenone, and 4-N,N-diethylaminoacetophenone; and 4-cyclic-aminoacetophenone compounds such as 4'-(imidazol-1-yl)acetophenone and 4-pyrazolylacetophenone. Preferred among the above examples are 4-cyclic-aminoacetophenone compounds, with 4'-(imidazol-1-yl)acetophenone being more preferred.

Examples of the compounds represented by the formula (IIIc) in which $R^{34}$ is a substituted hydrocarbyl group include bis(dihydrocarbylaminoalkyl)ketones such as 1,7-bis(methylethylamino)-4-heptanone and 1,3-bis(diphenylamino)-2-propanone; 4-(dihydrocarbylamino)benzophenones such as 4-N,N-dimethylaminobenzophenone, 4-N,N-di-t-butylaminobenzophenone, and 4-N,N-diphenylaminobenzophenone; and 4,4'-bis(dihydrocarbylamino)benzophenones such as 4,4'-bis(dimethylamino)benzophenone, 4,4'-bis(diethylamino)benzophenone, and 4,4'-bis(diphenylamino)benzophenone. Preferred among the above examples are 4,4'-bis(dihydrocarbylamino)benzophenones, with 4,4'-bis(diethylamino)benzophenone being more preferred.

Preferred examples of the compound represented by the formula (III) include compounds represented by the formula (III) in which k is 1, and $R^{33}$ is a group in which a hydrocarbylene group and an oxygen atom are bonded, or a group in which a hydrocarbylene group and a group represented by $-NR^{35}-$ (wherein $R^{35}$ represents a hydrocarbyl group or a hydrogen atom) are bonded, represented by the following formula (IIId):

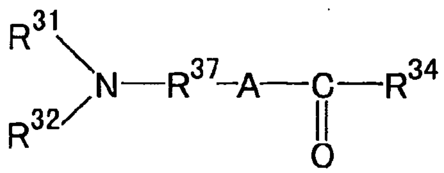

(IIId)

wherein $R^{31}$ represents an optionally substituted hydrocarbyl group, or is joined to $R^{32}$ to form a hydrocarbylene group optionally containing a nitrogen atom and/or an oxygen atom as a hetero atom; $R^{32}$ represents an optionally substituted hydrocarbyl group, or is joined to $R^{31}$ to form a hydrocarbylene group optionally containing a nitrogen atom and/or an oxygen atom as a hetero atom; $R^{37}$ represents a hydrocarbylene group; A represents an oxygen atom or $-NR^{35}-$ wherein $R^{35}$ represents a hydrocarbyl group or a hydrogen atom; and $R^{34}$ represents an optionally substituted hydrocarbyl group or a hydrogen atom.

In the formula (IIId), the description and examples of the optionally substituted hydrocarbyl group for $R^{31}$, $R^{32}$ or $R^{34}$, and the hydrocarbylene group optionally containing a nitrogen atom and/or an oxygen atom as a hetero atom, formed by joining $R^{31}$ and $R^{32}$, are the same as described for the formula (III). The hydrocarbyl group for $R^{35}$ is as described for the hydrocarbyl group for $R^{31}$, $R^{32}$, or $R^{34}$.

In the formula (IIId), A is preferably an oxygen atom or a group represented by $-NR^{35}-$ (wherein $R^{35}$ is a hydrocarbyl group (preferably a $C_{1-5}$ hydrocarbyl group) or a hydrogen atom), more preferably an oxygen atom or a group represented by -NH-, and still more preferably a group represented by -NH-.

In the formula (IIId), examples of the hydrocarbylene groups for $R^{37}$ include alkylene groups such as a trimethylene group, a tetramethylene group, a pentamethylene group, a hexamethylene group, a pentan-2-en-1,5-diyl group, and a 2,2,4-trimethylhexane-1,6-diyl group; and arylene groups such as a 1,4-phenylene group.

In the formula (IIId), $R^{34}$ is preferably a $C_{1-10}$ hydrocarbyl group, more preferably a $C_{2-5}$ alkenyl group, and still more preferably a vinyl group.

In the formula (IIId), $R^{37}$ is preferably a $C_{1-10}$ hydrocarbylene group, more preferably a $C_{1-6}$ alkylene group, still more preferably an ethylene group or a trimethylene group, and particularly preferably a trimethylene group.

In the formula (IIId), preferably, $R^{31}$ is a $C_{1-10}$ hydrocarbyl group, or is joined to $R^{32}$ to form a $C_{3-10}$ hydrocarbylene group, or a hetero atom-containing $C_{3-10}$ hydrocarbylene group in which the hetero atom is a nitrogen atom or an oxygen

atom. More preferably, $R^{31}$ is a $C_{1-10}$ alkyl group or a $C_{6-10}$ aryl group, or is joined to $R^{32}$ to form a $C_{3-10}$ alkylene group, a group represented by -CH=N-CH=CH-, a group represented by -CH=N-$CH_2$-$CH_2$-, or a group represented by -$(CH_2)_2$-O-$(CH_2)_2$-. Still more preferably, $R^{31}$ is a $C_{1-6}$ alkyl group, or is joined to $R^{32}$ to form a $C_{3-6}$ alkylene group, a group represented by -CH=N-CH=CH-, or a group represented by -CH=N-$CH_2$-$CH_2$-. Particularly preferably, $R^{31}$ is a methyl group or an ethyl group, or is joined to $R^{32}$ to form a tetramethylene group, a hexamethylene group, or a group represented by -CH=N-CH=CH-.

In the formula (IIId), preferably, $R^{32}$ is a $C_{1-10}$ hydrocarbyl group, or is joined to $R^{31}$ to form a $C_{3-10}$ hydrocarbylene group, or a hetero atom-containing $C_{3-10}$ hydrocarbylene group in which the hetero atom is a nitrogen atom or an oxygen atom. More preferably, $R^{32}$ is a $C_{1-10}$ alkyl group or a $C_{6-10}$ aryl group, or is joined to $R^{31}$ to form a $C_{3-10}$ alkylene group, a group represented by -CH=N-CH=CH-, a group represented by -CH=N-$CH_2$-$CH_2$-, or a group represented by -$(CH_2)_2$-O-$(CH_2)_2$-. Still more preferably, $R^{32}$ is a $C_{1-6}$ alkyl group, or is joined to $R^{31}$ to form a $C_{3-6}$ alkylene group, a group represented by -CH=N-CH=CH-, or a group represented by -CH=N-$CH_2$-$CH_2$-. Particularly preferably, $R^{32}$ is a methyl group or an ethyl group, or is joined to $R^{31}$ to form a tetramethylene group, a hexamethylene group, or a group represented by -CH=N-CH=CH-.

Examples of the compounds represented by the formula (IIId) in which A is an oxygen atom include 2-N,N-dihydrocarbylaminoethyl acrylates such as 2-N,N-dimethylaminoethyl acrylate and 2-N,N-diethylaminoethyl acrylate; 3-N,N-dihydrocarbylaminopropyl acrylates such as 3-N,N-dimethylaminopropyl acrylate; 2-N,N-dihydrocarbylaminoethyl methacrylates such as 2-N,N-dimethylaminoethyl methacrylate and 2-N,N-diethylaminoethyl methacrylate; and 3-N,N-dihydrocarbylaminopropyl methacrylates such as 3-N,N-dimethylaminopropyl methacrylate. Preferred are 3-N,N-dihydrocarbylaminopropyl acrylates, with 3-N,N-dimethylaminopropyl acrylate being more preferred.

Examples of the compounds represented by the formula (IIId) in which A is a group represented by -$NR^{35}$- (wherein $R^{35}$ represents a hydrocarbyl group or a hydrogen atom) include N,N-dihydrocarbylaminoethyl acrylamides such as N,N-dimethylaminoethyl acrylamide and N,N-diethylaminoethyl acrylamide; N,N-dihydrocarbylaminopropyl acrylamides such as N,N-dimethylaminopropyl acrylamide and N,N-diethylaminopropyl acrylamide; N,N-dihydrocarbylaminobutyl acrylamides such as N,N-dimethylaminobutyl acrylamide and N,N-diethylaminobutyl acrylamide; N,N-dihydrocarbylaminoethyl methacrylamides such as N,N-dimethylaminoethyl methacrylamide and N,N-diethylaminoethyl methacrylamide; N,N-dihydrocarbylaminopropyl methacrylamides such as N,N-dimethylaminopropyl methacrylamide and N,N-diethylaminopropyl methacrylamide; and N,N-dihydrocarbylaminobutyl methacrylamides such as N,N-dimethylaminobutyl methacrylamide and N,N-diethylaminobutyl methacrylamide. Preferred are N,N-dihydrocarbylaminopropyl acrylamides, with N,N-dimethylaminopropyl acrylamide being more preferred.

The compound represented by the formula (III) is preferably a compound represented by the formula (IIId), particularly preferably an N,N-dihydrocarbylaminopropyl acrylamide, and most preferably N,N-dimethylaminopropyl acrylamide.

In addition to those described above, preferred examples of the compound containing a nitrogen atom and/or a silicon atom include alkoxysilyl group-containing compounds.

The alkoxysilyl group-containing compound is preferably a compound containing a nitrogen atom and an alkoxysilyl group, and more preferably a compound represented by the following formula (IV):

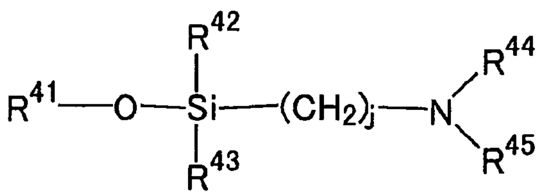

(IV)

wherein $R^{41}$ represents a hydrocarbyl group; $R^{42}$ and $R^{43}$ each represent a hydrocarbyl group or a hydrocarbyloxy group; $R^{44}$ represents an optionally substituted hydrocarbyl group or a trihydrocarbylsilyl group, or is joined to $R^{45}$ to form a hydrocarbylene group optionally containing at least one, as a hetero atom, selected from the group consisting of a silicon atom, a nitrogen atom and an oxygen atom; $R^{45}$ represents an optionally substituted hydrocarbyl group or a trihydrocarbylsilyl group, or is joined to $R^{44}$ to form a hydrocarbylene group optionally containing at least one, as a hetero atom, selected from the group consisting of a silicon atom, a nitrogen atom and an oxygen atom; and j represents an integer of 1 to 5.

In the formula (IV), the optionally substituted hydrocarbyl group refers to a hydrocarbyl group or a substituted hydrocarbyl group. Examples of the hydrocarbyl groups include alkyl groups such as a methyl group, an ethyl group, an n-propyl group, an isopropyl group, and an n-butyl group; alkenyl groups such as a vinyl group, an allyl group, and an isopropenyl group; and aryl groups such as a phenyl group, preferably alkyl groups, and more preferably a methyl group or an ethyl group. Examples of the substituted hydrocarbyl groups include oxacycloalkyl groups such as an oxiranyl

group and a tetrahydrofuranyl group, preferably a tetrahydrofuranyl group.

Herein, an oxacycloalkyl group refers to a group in which the $CH_2$ on an alicycle of a cycloalkyl group is replaced with an oxygen atom.

Examples of the hydrocarbyloxy groups include alkoxy groups such as a methoxy group, an ethoxy group, an n-propoxy group, an isopropoxy group, an n-butoxy group, a sec-butoxy group, and a tert-butoxy group; and aryloxy groups such as a phenoxy group and a benzyloxy group. Preferred are alkoxy groups, with a methoxy group or an ethoxy group being more preferred.

Examples of the trihydrocarbylsilyl groups include a trimethylsilyl group and a tert-butyl-dimethylsilyl group, preferably a trimethylsilyl group.

The hydrocarbylene group optionally containing at least one, as a hetero atom, selected from the group consisting of a silicon atom, a nitrogen atom and an oxygen atom refers to a hydrocarbylene group, or a hetero atom-containing hydrocarbylene group in which the hetero atom is at least one selected from the group consisting of a silicon atom, a nitrogen atom and an oxygen atom. The hetero atom-containing hydrocarbylene group in which the hetero atom is at least one selected from the group consisting of a silicon atom, a nitrogen atom and an oxygen atom may be a hetero atom-containing hydrocarbylene group in which the hetero atom is a silicon atom, a hetero atom-containing hydrocarbylene group in which the hetero atom is a nitrogen atom, or a hetero atom-containing hydrocarbylene group in which the hetero atom is an oxygen atom. Examples of the hydrocarbylene groups include alkylene groups such as a tetramethylene group, a pentamethylene group, a hexamethylene group, a pentan-2-en-1,5-diyl group, and a 2,2,4-trimethylhexane-1,6-diyl group. Preferred among them are $C_{4-7}$ alkylene groups, with a pentamethylene group or a hexamethylene group being particularly preferred. Examples of the hetero atom-containing hydrocarbylene groups in which the hetero atom is a silicon atom include a group represented by $-Si(CH_3)_2-CH_2-CH_2-Si(CH_3)_2-$. Examples of the hetero atom-containing hydrocarbylene groups in which the hetero atom is a nitrogen atom include a group represented by -CH=N-CH=CH-, and a group represented by $-CH=N-CH_2-CH_2-$. Examples of the hetero atom-containing hydrocarbylene groups in which the hetero atom is an oxygen atom include a group represented by $-CH_2-CH_2-O-CH_2-CH_2-$.

In the formula (IV), $R^{41}$ is preferably a $C_{1-4}$ alkyl group, and more preferably a methyl group or an ethyl group. Each of $R^{42}$ and $R^{43}$ is preferably a hydrocarbyloxy group, more preferably a $C_{1-4}$ alkoxy group, and still more preferably a methoxy group or an ethoxy group. Each of $R^{44}$ and $R^{45}$ is preferably a hydrocarbyl group, more preferably a $C_{1-4}$ alkyl group, and still more preferably a methyl group or an ethyl group. Moreover, j is preferably an integer of 2 to 4.

Examples of the compounds represented by the formula (IV) include [(dialkylamino)alkyl]alkoxysilane compounds such as 3-dimethylaminopropyltriethoxysilane, 3-dimethylaminopropyltrimethoxysilane, 3-diethylaminopropyltriethoxysilane, 3-diethylaminopropyltrimethoxysilane, 3-dimethylaminopropylmethyldiethoxysilane, 2-dimethylaminoethyltriethoxysilane, and 2-dimethylaminoethyltrimethoxysilane; cyclic aminoalkylalkoxysilane compounds such as hexamethyleneiminomethyltrimethoxysilane, 3-hexamethyleneiminopropyltriethoxysilane, N-(3-triethoxysilylpropyl)-4,5-dihydroimidazole, and N-(3-trimethoxysilylpropyl)-4,5-imidazole; [di(tetrahydrofuranyl)amino]alkylalkoxysilane compounds such as 3-[di(tetrahydrofuranyl)amino]propyltrimethoxysilane and 3-[di(tetrahydrofuranyl)amino]propyltriethoxysilane; and N,N-bis(trialkylsilyl)aminoalkylalkoxysilane compounds such as N,N-bis(trimethylsilyl)aminopropylmethyldimethoxysilane and N,N-bis(trimethylsilyl)aminopropylmethyldiethoxysilane. Preferred among the above examples are [(dialkylamino)alkyl]alkoxysilane compounds, with 3-dimethylaminopropyltriethoxysilane, 3-dimethylaminopropyltrimethoxysilane, 3-diethylaminopropyltriethoxysilane, and 3-diethylaminopropyltrimethoxysilane being more preferred.

Examples of the alkoxysilyl group-containing compounds include, in addition to the aforementioned compounds containing a nitrogen atom and an alkoxysilyl group, tetraalkoxysilanes such as tetramethoxysilane, tetraethoxysilane, and tetra-n-propoxysilane; trialkoxyhydrocarbylsilanes such as methyltrimethoxysilane, methyltriethoxysilane, ethyltrimethoxysilane, and phenyltrimethoxysilane; trialkoxyhalosilanes such as trimethoxychlorosilane, triethoxychlorosilane, and tri-n-propoxychlorosilane; dialkoxydihydrocarbylsilanes such as dimethoxydimethylsilane, diethoxydimethylsilane, and dimethoxydiethylsilane; dialkoxydihalosilanes such as dimethoxydichlorosilane, diethoxydichlorosilane, and di-n-propoxydichlorosilane; monoalkoxytrihydrocarbylsilanes such as methoxytrimethylsilane; monoalkoxytrihalosilanes such as methoxytrichlorosilane and ethoxytrichlorosilane; (glycidoxyalkyl)alkoxysilane compounds such as 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, and (3-glycidoxypropyl)methyldimethoxysilane; (3,4-epoxycyclohexyl)alkylalkoxysilane compounds such as 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane; alkoxysilylalkylsuccinic anhydrides such as 3-trimethoxysilylpropylsuccinic anhydride and 3-triethoxysilylpropylsuccinic anhydride; and (methacryloyloxyalkyl)alkoxysilane compounds such as 3-methacryloyloxypropyltrimethoxysilane and 3-methacryloyloxypropyltriethoxysilane.

The alkoxysilyl group-containing compound may contain a nitrogen atom and a carbonyl group. Examples of the compounds containing a nitrogen atom and a carbonyl group as well as an alkoxysilyl group include tris[(alkoxysilyl)alkyl]isocyanurate compounds such as tris[3-(trimethoxysilyl)propyl]isocyanurate, tris[3-(triethoxysilyl)propyl]isocyanurate, tris[3-(tripropoxysilyl)propyl]isocyanurate, and tris[3-(tributoxysilyl)propyl]isocyanurate. Preferred among them

is tris[3-(trimethoxysilyl)propyl]isocyanurate.

Other examples of the compounds containing a nitrogen atom and/or a silicon atom include N,N-dialkyl-substituted carboxylic acid amide dialkyl acetal compounds. Examples of the N,N-dialkyl-substituted carboxylic acid amide dialkyl acetal compounds include N,N-dialkylformamide dialkyl acetals such as N,N-dimethylformamide dimethyl acetal and N,N-diethylformamide dimethyl acetal; N,N-dialkylacetamide dialkyl acetals such as N,N-dimethylacetamide dimethyl acetal and N,N-diethylacetamide dimethyl acetal; and N,N-dialkylpropionamide dialkyl acetals such as N,N-dimethylpropionamide dimethyl acetal and N,N-diethylpropionamide dimethyl acetal. Preferred among them are N,N-dialkylformamide dialkyl acetals, with N,N-dimethylformamide dimethyl acetal being more preferred.

In the method of producing the conjugated diene polymer, a coupling agent may be added to a solution of the conjugated diene polymer in a hydrocarbon at any time from the initiation of the polymerization of monomers before the recovery of the polymer described later. Examples of the coupling agents include compounds represented by the following formula (V):

$$R^{51}{}_{a}ML_{4-a} \qquad (V)$$

wherein $R^{51}$ represents an alkyl group, an alkenyl group, a cycloalkenyl group, or an aryl group; M represents a silicon atom or a tin atom; L represents a halogen atom or a hydrocarbyloxy group; and a represents an integer of 0 to 2.

Examples of the coupling agents represented by the formula (V) include silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, and diethoxydiethylsilane.

In terms of enhancing the processability of the conjugated diene polymer, the amount of the coupling agent to be added per mol of the alkali metal derived from an alkali metal catalyst is preferably not less than 0.03 mol and more preferably not less than 0.05 mol. In terms of enhancing fuel economy, the amount is preferably not more than 0.4 mol and more preferably not more than 0.3 mol.

In the method of producing the conjugated diene polymer, unreacted active terminals may be treated with alcohol, such as methanol or isopropyl alcohol, before the recovery of the polymer described later.

The conjugated diene polymer may be recovered from the solution of the conjugated diene polymer in a hydrocarbon by a known method. Examples of this method include (A) a method of adding a coagulant to the solution of the conjugated diene polymer in a hydrocarbon, and (B) a method of adding steam to the solution of the conjugated diene polymer in a hydrocarbon (steam stripping treatment). The recovered conjugated diene polymer may be dried with a known dryer, such as a band dryer or an extrusion dryer.

In terms of achieving a balanced enhancement in performance on ice and snow, abrasion resistance, rubber strength, fuel economy, wet-grip performance, and dry handling stability, the amount of the structural unit derived from the polymerization initiator represented by the formula (I) in the conjugated diene polymer, when expressed per unit mass of the polymer, is preferably not less than 0.0001 mmol/g polymer, and more preferably not less than 0.001 mmol/g polymer, whereas it is preferably not more than 0.15 mmol/g polymer, and more preferably not more than 0.1 mmol/g polymer.

In terms of achieving a balanced enhancement in performance on ice and snow, abrasion resistance, rubber strength, fuel economy, wet-grip performance, and dry handling stability, the amount of the structural unit derived from the silicon-containing vinyl compound in the conjugated diene polymer, when expressed per unit mass of the polymer, is preferably not less than 0.01 mmol/g polymer, and more preferably not less than 0.02 mmol/g polymer, whereas it is preferably not more than 0.4 mmol/g polymer, and more preferably not more than 0.2 mmol/g polymer.

In terms of achieving a balanced enhancement in performance on ice and snow, abrasion resistance, rubber strength, fuel economy, wet-grip performance, and dry handling stability, the conjugated diene polymer preferably contains a structural unit derived from the compound represented by the formula (II). The structural unit derived from the compound represented by the formula (II) in the conjugated diene polymer refers to a structural unit represented by the following formula (IIb):

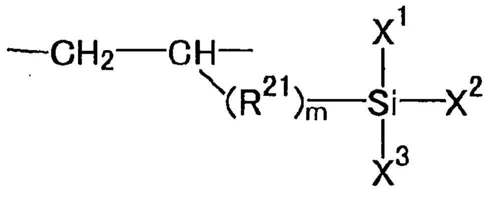

(IIb)

wherein m, $R^{21}$, $X^1$, $X^2$, and $X^3$ are as defined in the formula (II).

In the conjugated diene polymer in the present invention, preferably, at least one of $X^1$, $X^2$ and $X^3$ in the structural unit derived from the compound represented by the formula (II) is replaced by a hydroxy group, more preferably two or more of $X^1$, $X^2$ and $X^3$ are replaced by hydroxy groups, and still more preferably two of $X^1$, $X^2$ and $X^3$ are replaced by hydroxy groups. This can enhance the effects of improving the performance on ice and snow, abrasion resistance, rubber strength, fuel economy, wet-grip performance, and dry handling stability. Non-limiting examples of the method of replacing at least one of $X^1$, $X^2$, and $X^3$ with a hydroxy group include steam stripping treatment.

In terms of achieving a balanced enhancement in performance on ice and snow, abrasion resistance, rubber strength, fuel economy, wet-grip performance, and dry handling stability, the conjugated diene polymer preferably contains a structural unit (aromatic vinyl unit) derived from an aromatic vinyl compound. When the conjugated diene polymer contains an aromatic vinyl unit, the amount of the aromatic vinyl unit in the conjugated diene polymer, based on 100% by mass of the combined amount of the structural unit (conjugated diene unit) derived from the conjugated diene compound and the aromatic vinyl unit, is preferably not less than 10% by mass (the amount of the conjugated diene unit is not more than 90% by mass), and more preferably not less than 15% by mass (the amount of the conjugated diene unit is not more than 85% by mass). Also, from the viewpoint of the performance on ice and snow and fuel economy, the amount of the aromatic vinyl unit is preferably not more than 50% by mass (the amount of the conjugated diene unit is not less than 50% by mass), and more preferably not more than 45% by mass (the amount of the conjugated diene unit is not less than 55% by mass).

When the conjugated diene polymer contains a structural unit derived from an aromatic vinyl compound, in terms of fuel economy, the vinyl bond content (vinyl content) in the conjugated diene polymer is preferably not more than 80 mol%, and more preferably not more than 70 mol%, based on 100 mol% of the conjugated diene unit content. From the viewpoint of wet-grip performance, the vinyl bond content is preferably not less than 10 mol%, more preferably not less than 15 mol%, still more preferably not less than 20 mol%, and particularly preferably not less than 40 mol%.

Particularly in terms of enhancing abrasion resistance, the conjugated diene polymer preferably contains no structural unit derived from an aromatic vinyl compound. In this case, the vinyl bond content (vinyl content) in the conjugated diene polymer is preferably not more than 20 mol%, and more preferably not more than 15 mol%, based on 100 mol% of the conjugated diene unit content.

The vinyl bond content in the conjugated diene polymer can be measured by the method described later in examples.

In terms of enhancing fuel economy, the molecular weight distribution of the conjugated diene polymer is preferably 1 to 5, and more preferably 1 to 2. The molecular weight distribution can be determined by measuring a number-average molecular weight (Mn) and a weight-average molecular weight (Mw) using gel permeation chromatography (GPC), and dividing Mw by Mn.

The conjugated diene polymer can be used as the rubber component in the rubber composition of the present invention.

The amount of the conjugated diene polymer based on 100% by mass of the rubber component is not more than 45% by mass, preferably not more than 35% by mass, and more preferably not more than 25% by mass. An amount of more than 45% by mass tends to not only decrease abrasion resistance but also drive up the cost. The amount of the conjugated diene polymer is not less than 1% by mass, preferably not less than 5% by mass, more preferably not less than 10% by mass, and still more preferably not less than 15% by mass. An amount of less than 1% by mass tends not to easily improve fuel economy.

The rubber composition of the present invention includes a high-cis polybutadiene having a cis (cis-1,4) microstructure (bonding mode of monomer units) content (cis content) of not less than 95% by mass. The high-cis polybutadiene is not particularly limited as long as it has a cis content of not less than 95% by mass, and examples thereof include those generally used in the tire industry, for example, BR1220 (produced by ZEON Corporation), and BR130B and BR150B (produced by Ube Industries, Ltd.).

The cis content is calculated by infrared absorption spectrometry.

The amount of the high-cis polybutadiene based on 100% by mass of the rubber component is not less than 20% by mass, preferably not less than 25% by mass, and more preferably not less than 30% by mass. An amount of less than 20% by mass tends not to ensure sufficient flexibility at low temperatures and thus to reduce the performance on ice and snow, and also tends to result in reduced abrasion resistance. The amount of the high-cis polybutadiene is not more than 64% by mass, preferably not more than 60% by mass. An amount of more than 64% by mass tends to result in reduced wet-grip performance.

The rubber composition of the present invention includes a polyisoprene-based rubber. Examples of the polyisoprene-based rubbers include natural rubber (NR), and polyisoprene rubber (IR). The NR is not particularly limited, and examples thereof include those generally used in the tire industry, such as SIR20, RSS#3, TSR20, deproteinized natural rubber (DPNR), highly purified natural rubber (HPNR), and epoxidized natural rubber (ENR). Similarly, IRs generally used in the tire industry may be used.

The amount of the polyisoprene-based rubber based on 100% by mass of the rubber component is not less

than 35% by mass, preferably not less than 40% by mass. If the amount is less than 35% by mass, the rubber strength may decrease and the cohesion of the rubber compound during mixing may be so poor that productivity can be deteriorated. The amount of the polyisoprene-based rubber is not more than 60% by mass, preferably not more than 50% by mass, and more preferably not more than 45% by mass. If the amount of the polyisoprene-based rubber exceeds 60% by mass, sufficient wet-grip performance may not be achieved.

Examples of materials that can be used in the rubber component, other than the high-cis polybutadiene and polyisoprene-based rubber, include conventional rubbers such as styrene-butadiene copolymer rubber (SBR), butadiene-isoprene copolymer rubber, and butyl rubber. Ethylene-propylene copolymers, and ethylene-octene copolymers may also be mentioned. Two or more kinds of the rubber materials may be used in combination.

The rubber composition of the present invention contains a silica having a nitrogen adsorption specific surface area ($N_2SA$) of 40 to 400 $m^2/g$. Non-limiting examples of the silicas include dry silica (anhydrous silica) and wet silica (hydrous silica). Wet silica is preferred because it has more silanol groups.

The silica has a nitrogen adsorption specific surface area ($N_2SA$) of not less than 40 $m^2/g$, preferably not less than 50 $m^2/g$, and more preferably not less than 60 $m^2/g$. If the silica has a $N_2SA$ of less than 40 $m^2/g$, the silica tends to have a little reinforcement, and thus the abrasion resistance and rubber strength tend to decrease. The silica has a $N_2SA$ of not more than 400 $m^2/g$, preferably not more than 360 $m^2/g$, and more preferably not more than 300 $m^2/g$. A silica with a $N_2SA$ of more than 400 $m^2/g$ tends not to easily disperse, and thus the fuel economy tends to deteriorate.

The $N_2SA$ of silica is determined by the BET method in accordance with ASTM D3037-93.

The amount of the silica (the combined amount if two or more kinds of silica are used) for each 100 parts by mass of the rubber component is not less than 5 parts by mass, preferably not less than 10 parts by mass, more preferably not less than 30 parts by mass, and still more preferably not less than 45 parts by mass. If the amount is less than 5 parts by mass, the effect of silica added tends not to be sufficiently achieved, and thus the abrasion resistance and rubber strength tend to decrease. The amount of the silica is not more than 150 parts by mass, preferably not more than 100 parts by mass. If the amount exceeds 150 parts by mass, the fuel economy tends to deteriorate.

Two or more kinds of silica are preferably used in combination although one kind of silica may be used alone. A combination of silica (1) having a nitrogen adsorption specific surface area of at least 40 $m^2/g$ but less than 120 $m^2/g$ and silica (2) having a nitrogen adsorption specific surface area of not less than 120 $m^2/g$ is more preferably used. When the silica (1) and the silica (2) are used together with the conjugated diene polymer, the silica (1) and the silica (2) disperse so well that the effects of improving the properties can be synergistically enhanced. Further, when the silica (1) and the silica (2) are used together with a mercapto group-containing silane coupling agent or a specific solid resin, which are described later, the effects of improving the properties can further be enhanced.

The $N_2SAs$ of silica (1) and silica (2) preferably satisfy the inequality: ($N_2SA$ of silica (2))/($N_2SA$ of silica (1)) ≥ 1.4, more preferably the inequality: ($N_2SA$ of silica (2))/($N_2SA$ of silica (1)) ≥ 2.0. If the ratio is less than 1.4, the difference in particle size between the silica (1) and the silica (2) is small, and thus such a blend of two kinds of silica tends not to sufficiently provide a dispersibility-improving effect.

The silica (1) has a $N_2SA$ of not less than 40 $m^2/g$, preferably not less than 50 $m^2/g$. If the silica (1) has a $N_2SA$ of less than 40 $m^2/g$, the silica may have an insufficient reinforcement, so that the rubber strength, abrasion resistance, and dry handling stability may be deteriorated. The silica (1) has a $N_2SA$ of less than 120 $m^2/g$, preferably not more than 100 $m^2/g$, and more preferably not more than 80 $m^2/g$. If the silica (1) has a $N_2SA$ of not less than 120 $m^2/g$, the effect of a combination of the silica (1) and the silica (2) may not be sufficiently achieved.

The silica (2) has a $N_2SA$ of not less than 120 $m^2/g$, preferably not less than 150 $m^2/g$. If the silica (2) has a $N_2SA$ of less than 120 $m^2/g$, the effect of a combination of the silica (1) and the silica (2) may not be sufficiently achieved. The silica (2) preferably has a $N_2SA$ of not more than 250 $m^2/g$, more preferably not more than 220 $m^2/g$. If the silica (2) has a $N_2SA$ of more than 250 $m^2/g$, the fuel economy tends to deteriorate.

The amounts of silica (1) and silica (2) preferably satisfy the following inequalities:

$$(\text{Amount of silica (1)}) \times 0.06 \leq (\text{Amount of silica (2)}) \leq (\text{Amount of silica (1)}) \times 15.$$

If the amount of silica (2) is less than 0.06 times the amount of silica (1), a sufficient rubber strength tends not to be achieved. If the amount of silica (2) is more than 15 times the amount of silica (1), the rolling resistance tends to increase. The amount of silica (2) is more preferably at least 0.3 times the amount of silica (1), and still more preferably at least 0.5 times the amount of silica (1). Also, the amount of silica (2) is more preferably at most 7 times the amount of silica (1), and still more preferably at most 4 times the amount of silica (1).

The amount of silica (1) for each 100 parts by mass of the rubber component is preferably not less than 5 parts by mass, and more preferably not less than 10 parts by mass. If the amount of silica (1) is less than 5 parts by mass, the fuel economy may not be sufficiently improved. Also, the amount of silica (1) is preferably not more than 60 parts

by mass, and more preferably not more than 40 parts by mass. If the amount of silica (1) is more than 60 parts by mass, while good fuel economy is achieved, the rubber strength, abrasion resistance, and dry handling stability tend to decrease.

The amount of silica (2) for each 100 parts by mass of the rubber component is preferably not less than 5 parts by mass, more preferably not less than 20 parts by mass, and still more preferably not less than 40 parts by mass. If the amount of silica (2) is less than 5 parts by mass, sufficient rubber strength, abrasion resistance, and dry handling stability may not be achieved. Also, the amount of silica (2) is preferably not more than 90 parts by mass, and more preferably not more than 70 parts by mass. If the amount of silica (2) is more than 90 parts by mass, while good rubber strength, abrasion resistance, and dry handling stability are achieved, the fuel economy tends to deteriorate.

The combined amount of silica (1) and silica (2) for each 100 parts by mass of the rubber component is preferably not less than 5 parts by mass, more preferably not less than 10 parts by mass, still more preferably not less than 30 parts by mass, and particularly preferably not less than 45 parts by mass. If the combined amount is less than 5 parts by mass, the effect of the silica (1) and the silica (2) added tends not to be sufficiently achieved, and thus the abrasion resistance and rubber strength tend to decrease. The combined amount of silica (1) and silica (2) is preferably not more than 150 parts by mass, and more preferably not more than 100 parts by mass. If the combined amount exceeds 150 parts by mass, the processability tends to deteriorate.

The rubber composition of the present invention preferably includes a mercapto group-containing silane coupling agent. When a mercapto group-containing silane coupling agent is used together with the conjugated diene polymer and the silica, the properties can be synergistically improved. Further, when a mercapto group-containing silane coupling agent is used together with the silica (1) and the silica (2) or a specific solid resin mentioned later, the effects of improving the properties can further be enhanced.

The mercapto group-containing silane coupling agent may suitably be a compound represented by the formula (1) below, and/or a compound containing a linking unit A represented by the formula (2) below and a linking unit B represented by the formula (3) below,

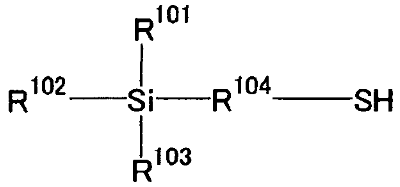

(1)

wherein $R^{101}$ to $R^{103}$ each represent a branched or unbranched $C_{1-12}$ alkyl group, a branched or unbranched $C_{1-12}$ alkoxy group, or a group represented by $-O-(R^{111}-O)_z-R^{112}$ where z $R^{111}$s each represent a branched or unbranched $C_{1-30}$ divalent hydrocarbon group, and z $R^{111}$s may be the same as or different from one another; $R^{112}$ represents a branched or unbranched $C_{1-30}$ alkyl group, a branched or unbranched $C_{2-30}$ alkenyl group, a $C_{6-30}$ aryl group, or a $C_{7-30}$ aralkyl group; and z represents an integer of 1 to 30, and $R^{101}$ to $R^{103}$ may be the same as or different from one another; and $R^{104}$ represents a branched or unbranched $C_{1-6}$ alkylene group;

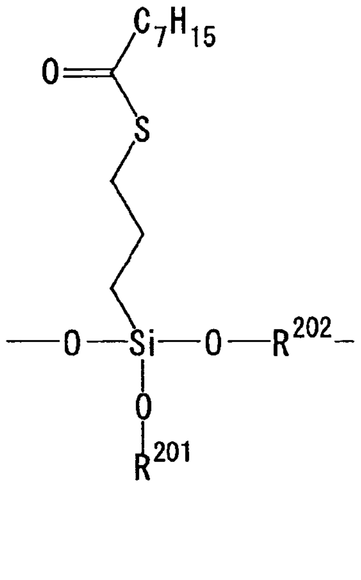

(2)

and

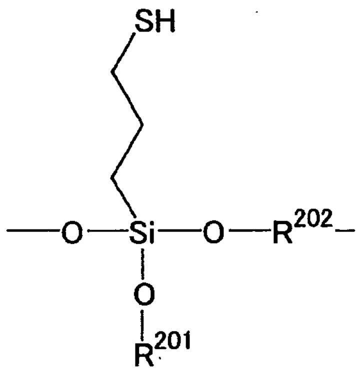

(3)

wherein $R^{201}$ represents a hydrogen atom, a halogen atom, a branched or unbranched $C_{1-30}$ alkyl group, a branched or unbranched $C_{2-30}$ alkenyl group, a branched or unbranched $C_{2-30}$ alkynyl group, or the alkyl group in which a terminal hydrogen atom is replaced with a hydroxy group or a carboxyl group; $R^{202}$ represents a branched or unbranched $C_{1-30}$ alkylene group, a branched or unbranched $C_{2-30}$ alkenylene group, or a branched or unbranched $C_{2-30}$ alkynylene group; and $R^{201}$ and $R^{202}$ may be joined together to form a cyclic structure.

The following describes the compound represented by the formula (I).

The use of the compound represented by the formula (1) allows the silica to disperse well, and thus the effects of the present invention can be well achieved. In particular, the use of this compound can greatly improve wet-grip performance.

$R^{101}$ to $R^{103}$ each represent a branched or unbranched $C_{1-12}$ alkyl group, a branched or unbranched $C_{1-12}$ alkoxy group, or a group represented by $-O-(R^{111}-O)_z-R^{112}$. In terms of achieving the effects of the present invention well, preferably at least one of $R^{101}$ to $R^{103}$ is a group represented by $-O-(R^{111}-O)_z-R^{112}$, and more preferably two of $R^{101}$ to $R^{103}$ are groups represented by $-O-(R^{111}-O)_z-R^{112}$ while the other is a branched or unbranched $C_{1-12}$ alkoxy group.

Examples of the branched or unbranched $C_{1-12}$ (preferably $C_{1-5}$) alkyl groups for $R^{101}$ to $R^{103}$ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, and a nonyl group.

Examples of the branched or unbranched $C_{1-12}$ (preferably $C_{1-5}$) alkoxy groups for $R^{101}$ to $R^{103}$ include a methoxy group, an ethoxy group, an n-propoxy group, an isopropoxy group, an n-butoxy group, an iso-butoxy group, a sec-butoxy group, a tert-butoxy group, a pentyloxy group, a hexyloxy group, a heptyloxy group, a 2-ethylhexyloxy group, an octyloxy group, and a nonyloxy group.

$R^{111}$ in the group represented by $-O-(R^{111}-O)_z-R^{112}$ for $R^{101}$ to $R^{103}$ represents a branched or unbranched $C_{1-30}$ (preferably $C_{1-15}$, more preferably $C_{1-3}$) divalent hydrocarbon group.

Examples of these hydrocarbon groups include branched or unbranched $C_{1-30}$ alkylene groups, branched or unbranched $C_{2-30}$ alkenylene groups, branched or unbranched $C_{2-30}$ alkynylene groups, and $C_{6-30}$ arylene groups. Branched or unbranched $C_{1-30}$ alkylene groups are preferred among the examples.

Examples of the branched or unbranched $C_{1-30}$ (preferably $C_{1-15}$, more preferably $C_{1-3}$) alkylene groups for $R^{111}$ include a methylene group, an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group.

Examples of the branched or unbranched $C_{2-30}$ (preferably $C_{2-15}$, more preferably $C_{2-3}$) alkenylene groups for $R^{111}$ include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group.

Examples of the branched or unbranched $C_{2-30}$ (preferably $C_{2-15}$, more preferably $C_{2-3}$) alkynylene groups for $R^{111}$ include an ethynylene group, a propynylene group, a butynylene group, a pentynylene group, a hexynylene group, a heptynylene group, an octynylene group, a nonynylene group, a decynylene group, an undecynylene group, and a dodecynylene group.

Examples of the $C_{6-30}$ (preferably $C_{6-15}$) arylene groups for $R^{111}$ include a phenylene group, a tolylene group, a xylylene group, and a naphthylene group.

Here, z represents an integer of 1 to 30 (preferably 2 to 20, more preferably 3 to 7, and still more preferably 5 or 6).

$R^{112}$ represents a branched or unbranched $C_{1-30}$ alkyl group, a branched or unbranched $C_{2-30}$ alkenyl group, a $C_{6-30}$ aryl group, or a $C_{7-30}$ aralkyl group. $R^{112}$ is especially preferably a branched or unbranched $C_{1-30}$ alkyl group.

Examples of the branched or unbranched $C_{1-30}$ (preferably $C_{3-25}$, more preferably $C_{10-15}$) alkyl groups for $R^{112}$ include a methyl group, an ethyl group, an n-propyl group, an isopropyl group, an n-butyl group, an iso-butyl group, a

sec-butyl group, a tert-butyl group, a pentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, and an octadecyl group.

Examples of the branched or unbranched $C_{2-30}$ (preferably $C_{3-25}$, more preferably $C_{10-15}$) alkenyl groups for $R^{112}$ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, a 1-octenyl group, a decenyl group, an undecenyl group, a dodecenyl group, a tridecenyl group, a tetradecenyl group, a pentadecenyl group, and an octadecenyl group.

Examples of the $C_{6-30}$ (preferably $C_{10-20}$) aryl groups for $R^{112}$ include a phenyl group, a tolyl group, a xylyl group, a naphthyl group, and a biphenyl group.

Examples of the $C_{7-30}$ (preferably $C_{10-20}$) aralkyl groups for $R^{112}$ include a benzyl group and a phenethyl group.

Specific examples of the group represented by $-O-(R^{111}-O)_z-R^{112}$ include groups represented by $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{19}H_{29}$, $-O-(C_2H_4-)5-C_{15}H_{31}$, $-O-(C_2H_4-)_3-C_{13}H_{27}$, $-O-(C_2H_4-O)_4-C_{13}H_{27}$, $-O-(C_2H_4-O)_6-C_{13}H_{27}$ and $-O-(C_2H_4-O)_7-C_{13}H_{27}$. Preferred among the examples are groups represented by $-O-(C_2H_4-O)_5-C_{11}H_{23}$, $-O-(C_2H_4-O)_5-C_{13}H_{27}$, $-O-(C_2H_4-O)_5-C_{15}H_{31}$, and $-O-(C_2H_4-O)_6-C_{13}H_{27}$.

Examples of the branched or unbranched $C_{1-6}$ (preferably $C_{1-5}$) alkylene groups for $R^{104}$ include groups as mentioned for the branched or unbranched $C_{1-30}$ alkylene group for $R^{111}$.

Examples of the compounds represented by the formula (1) include 3-mercaptopropyltrimethoxysilane, 3-mercaptopropyltriethoxysilane, 2-mercaptoethyltrimethoxysilane, 2-mercaptoethyltriethoxysilane, and a compound represented by the following formula (Si363 produced by Evonik Degussa). The compound represented by the following formula may be suitably used. These compounds may be used alone or two or more of these may be used in combination.

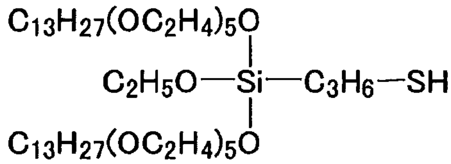

The following describes the compound containing a linking unit A represented by the formula (2) and a linking unit B represented by the formula (3).

In the case where the compound containing a linking unit A represented by the formula (2) and a linking unit B represented by the formula (3) is used, the increase in viscosity during the processing is suppressed as compared to the case where polysulfide silane such as bis-(3-triethoxysilylpropyl)tetrasulfide is used. This is presumably because, since the sulfide moiety of the linking unit A is a C-S-C bond, the compound is thermally more stable than tetrasulfide or disulfide, and thus the Mooney viscosity is less likely to greatly increase.

Further, the decrease in scorch time is suppressed as compared to the case where mercapto silane such as 3-mercaptopropyltrimethoxysilane is used. This is presumably because, though the linking unit B has a mercaptosilane structure, the $-C_7H_{15}$ moiety of the linking unit A covers the -SH group of the linking unit B, as a result of which the SH group is less likely to react with polymers and therefore scorch is less likely to occur.

From the viewpoint of enhancing the effects of suppressing the increase in viscosity during the processing and of suppressing the decrease in scorch time as mentioned above, the linking unit A content in the silane coupling agent having the aforementioned structure is preferably not less than 30 mol%, and more preferably not less than 50 mol%, whereas it is preferably not more than 99 mol%, and more preferably not more than 90 mol%. The linking unit B content is preferably not less than 1 mol%, more preferably not less than 5 mol%, and still more preferably not less than 10 mol%, whereas it is preferably not more than 70 mol%, more preferably not more than 65 mol%, and still more preferably not more than 55 mol%. The combined content of the linking unit A and the linking unit B is preferably not less than 95 mol%, more preferably not less than 98 mol%, and particularly preferably 100 mol%.

The linking unit A or B content refers to the amount including the linking unit A or B that is present at the terminals of the silane coupling agent, if any. In the case where the linking unit A or B is present at the terminal of the silane coupling agent, its form is not particularly limited as long as it forms a unit corresponding to the formula (2) representing the linking unit A or the formula (3) representing the linking unit B.

Examples of the halogen atoms for $R^{201}$ include chlorine, bromine, and fluorine.

Examples of the branched or unbranched $C_{1-30}$ alkyl groups for $R^{201}$ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group. The alkyl group preferably has 1 to 12 carbon atom(s).

Examples of the branched or unbranched $C_{2-30}$ alkenyl groups for $R^{201}$ include a vinyl group, a 1-propenyl

group, a 2-propenyl group, a 1-butenyl group, a 2-butenyl group, a 1-pentenyl group, a 2-pentenyl group, a 1-hexenyl group, a 2-hexenyl group, and a 1-octenyl group. The alkenyl group preferably has 2 to 12 carbon atoms.

Examples of the branched or unbranched $C_{2-30}$ alkynyl groups for $R^{201}$ include an ethynyl group, a propynyl group, a butynyl group, a pentynyl group, a hexynyl group, a heptynyl group, an octynyl group, a nonynyl group, a decynyl group, an undecynyl group, and a dodecynyl group. The alkynyl group preferably has 2 to 12 carbon atoms.

Examples of the branched or unbranched $C_{1-30}$ alkylene groups for $R^{202}$ include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. The alkylene group preferably has 1 to 12 carbon atom(s).

Examples of the branched or unbranched $C_{2-30}$ alkenylene groups for $R^{202}$ include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group. The alkenylene group preferably has 2 to 12 carbon atoms.

Examples of the branched or unbranched $C_{2-30}$ alkynylene groups for $R^{202}$ include an ethynylene group, a propynylene group, a butynylene group, a pentynylene group, a hexynylene group, a heptynylene group, an octynylene group, a nonynylene group, a decynylene group, an undecynylene group, and a dodecynylene group. The alkynylene group preferably has 2 to 12 carbon atoms.

In the compound containing the linking unit A represented by the formula (2) and the linking unit B represented by the formula (3), the total number of repetitions (x + y) of the number of repetitions (x) of the linking unit A and the number of repetitions (y) of the linking unit B is preferably in the range of 3 to 300. When the total number of repetitions falls within the range mentioned above, the $-C_7H_{15}$ moiety of the linking unit A covers the mercaptosilane of the linking unit B, which makes it possible not only to suppress the decrease in scorch time but also to ensure good reactivity to silica and the rubber component.

Examples of the compounds containing the linking unit A represented by the formula (2) and the linking unit B represented by the formula (3) include NXT-Z30, NXT-Z45, and NXT-Z60 (produced by Momentive Performance Materials). These may be used alone, or two or more of these may be used in combination.

The amount of the mercapto group-containing silane coupling agent for each 100 parts by mass of silica is preferably not less than 0.5 parts by mass, more preferably not less than 2 parts by mass, and still more preferably not less than 3 parts by mass. If the amount is less than 0.5 parts by mass, the effect of the mercapto group-containing silane coupling agent added tends not to be sufficiently achieved. Also, the amount of the mercapto group-containing silane coupling agent is preferably not more than 20 parts by mass, and more preferably not more than 10 parts by mass. If the amount exceeds 20 parts by mass, the rubber strength and abrasion resistance tend to decrease.

The rubber composition of the present invention may preferably contain another silane coupling agent together with the mercapto group-containing silane coupling agent. This can enhance the effects of improving the properties. Examples of other silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, 3-trimethoxysilylpropyl-N,N-dimethylthiocarbamoyl tetrasulfide, bis(3-trimethoxysilylpropyl)tetrasulfide, bis(2-trimethoxysilylethyl)tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazole tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazole tetrasulfide, with bis(3-triethoxysilylpropyl)tetrasulfide being suitable.

The amount of the other silane coupling agents for each 100 parts by mass of silica is preferably not less than 0.5 parts by mass, and more preferably not less than 3 parts by mass. If the amount is less than 0.5 parts by mass, the effects of the other silane coupling agents added tend not to be sufficiently achieved. The amount of the other silane coupling agents is preferably not more than 20 parts by mass, and more preferably not more than 10 parts by mass. If the amount exceeds 20 parts by mass, the rubber strength and abrasion resistance tend to decrease.

The total amount of silane coupling agents for each 100 parts by mass of silica is preferably not less than 0.5 parts by mass, and more preferably not less than 3 parts by mass. If the total amount is less than 0.5 parts by mass, the resulting unvulcanized rubber composition may have so high viscosity that good processability cannot be ensured. Also, the total amount of silane coupling agents is preferably not more than 20 parts by mass, and more preferably not more than 10 parts by mass. If the total amount exceeds 20 parts by mass, the rubber strength and abrasion resistance tend to decrease.

The rubber composition of the present invention preferably includes a solid resin having a glass transition temperature of 60 to 120°C. When the solid resin is used together with the conjugated diene polymer, the effects of improving the properties can be synergistically enhanced. Further, when the solid resin is used together with the mercapto group-containing silane coupling agent, or the silica (1) and the silica (2), the effects of improving the properties can

further be enhanced.

The solid resin has a glass transition temperature (Tg) of not lower than 60°C, preferably not lower than 75°C. If the solid resin has a glass transition temperature lower than 60°C, the effect of improving wet-grip performance may not be sufficiently achieved. The solid resin has a Tg of not higher than 120°C, preferably not higher than 100°C. If the solid resin has a Tg of higher than 120°C, the loss elastic modulus at high temperature ranges tends to increase so greatly that the fuel economy can be deteriorated.

The Tg (midpoint glass transition temperature) values of the solid resin are measured at a rate of temperature rise of 10°C/min. with a differential scanning calorimeter Q200 (produced by TA Instruments Japan Inc.) in accordance with JIS-K7121.

Any solid resin may be used as the solid resin as long as it has a Tg mentioned above. Examples of the solid resins include aromatic resins such as aromatic vinyl polymers formed by polymerizing α-methylstyrene and/or styrene, coumarone-indene resins, and indene resins; terpene resins; and rosin resins. Derivatives of these resins may also be used. Aromatic resins are preferred among the examples mentioned above, and aromatic vinyl polymers formed by polymerizing α-methylstyrene and/or styrene and coumarone-indene resins are more preferred, as the use of such a solid resin provides good adhesion properties to the unvulcanized rubber composition and also provides good fuel economy.

Styrene and/or α-methylstyrene is used as an aromatic vinyl monomer (unit) of the aromatic vinyl polymer formed by polymerizing α-methylstyrene and/or styrene (resin formed by polymerizing α-methylstyrene and/or styrene). The aromatic vinyl polymer may be a homopolymer of one monomer, or a copolymer of both monomers. Preferably, the aromatic vinyl polymer is a homopolymer of α-methylstyrene, or a copolymer of α-methylstyrene and styrene as the use of such a polymer is cost efficient, and provides good processability and excellent wet-grip performance.

The aromatic vinyl polymer preferably has a weight-average molecular weight (Mw) of not less than 500, more preferably not less than 800. If the Mw is less than 500, the effect of improving wet-grip performance is less likely to be sufficiently achieved. The aromatic vinyl polymer preferably has a weight-average molecular weight of not more than 3000, more preferably not more than 2000. If the Mw is more than 3000, the dispersibility of filler tends to decrease so that the fuel economy can be deteriorated.

Herein, the weight-average molecular weight can be measured using gel permeation chromatography (GPC) (GPC-8000 series produced by Tosoh Corporation, detector: differential refractometer) and expressed relative to polystyrene standards.

The coumarone-indene resin and the indene resin refer to coal or petroleum resins derived from coumarone having eight carbon atoms and indene having nine carbon atoms, and indene, respectively, as principal monomer. Specific examples thereof include vinyltoluene-α-methylstyrene-indene resin, vinyltoluene-indene resin, α-methylstyrene-indene resin, and α-methylstyrene-vinyltoluene-indene copolymer resin.

The terpene resin refers to a resin derived from, as principal monomer, a terpene compound having a terpene backbone, such as a monoterpene, a sesquiterpene or a diterpene. Examples thereof include α-pinene resin, β-pinene resin, limonene resin, dipentene resin, β-pinene/limonene resin, aromatic modified terpene resin, terpene phenolic resin, and hydrogenated terpene resin. Examples of the rosin resins include natural rosin resins (polymerized rosins) such as gum rosin, wood rosin and tall oil rosin, which can be produced by processing pine resin, and mainly contain a resin acid such as abietic acid or pimaric acid; hydrogenated rosin resins, maleic acid-modified rosin resins, rosin-modified phenolic resins, rosin glycerol esters, and disproportionated rosin resins.

The amount of the solid resin for each 100 parts by mass of the rubber component is preferably not less than 1 part by mass, more preferably not less than 3 parts by mass, and still more preferably not less than 5 parts by mass. If the amount is less than 1 part by mass, the effect of improving wet-grip performance tends not to be sufficiently achieved. The amount of the solid resin is preferably not more than 30 parts by mass, and more preferably not more than 15 parts by mass. If the amount is more than 30 parts by mass, the elastic modulus of the rubber composition at low temperature ranges tends to increase so greatly that the performance on ice and snow can be reduced.

Known additives may be used, and examples thereof include vulcanizing agents such as sulfur; vulcanization accelerators such as thiazole vulcanization accelerators, thiuram vulcanization accelerators, sulfenamide vulcanization accelerators, and guanidine vulcanization accelerators; vulcanization activators such as stearic acid and zinc oxide; organic peroxides; fillers such as carbon black, calcium carbonate, talc, alumina, clay, aluminum hydroxide, and mica; processing aids such as extender oils and lubricants; and antioxidants.

Examples of the carbon black include furnace black (furnace carbon black) such as SAF, ISAF, HAF, MAF, FEF, SRF, GPF, APF, FF, CF, SCF or ECF; acetylene black (acetylene carbon black); thermal black (thermal carbon black) such as FT or MT; channel black (channel carbon black) such as EPC, MPC or CC; and graphite. These may be used alone or two or more of these may be used in combination.

The amount of carbon black for each 100 parts by mass of the rubber component is preferably not less than 1 part by mass, and more preferably not less than 3 parts by mass. If the amount is less than 1 part by mass, sufficient reinforcement may not be achieved. Also, the amount of carbon black is preferably not more than 60 parts by mass,

more preferably not more than 30 parts by mass, still more preferably not more than 15 parts by mass, and particularly preferably not more than 10 parts by mass. If the amount is more than 60 parts by mass, the fuel economy tends to deteriorate.

The nitrogen adsorption specific surface area ($N_2SA$) of carbon black is usually 5 to 200 $m^2/g$; preferably, the lower limit and the upper limit thereof are 50 $m^2/g$ and 150 $m^2/g$, respectively. The dibutyl phthalate (DBP) absorption of carbon black is usually 5 to 300 mL/100 g; preferably, the lower limit and the upper limit thereof are 80 mL/100 g and 180 mL/100 g, respectively. If the $N_2SA$ or DBP absorption of carbon black is lower than the lower limit of the range mentioned above, the reinforcement effect tends to be so small that the abrasion resistance can be decreased. If the $N_2SA$ or DBP absorption of carbon black is larger than the upper limit of the range mentioned above, the carbon black tends to poorly disperse, and thus the hysteresis loss tends to increase so that the fuel economy can be reduced. The nitrogen adsorption specific surface area is measured in accordance with ASTM D4820-93. The DBP absorption is measured in accordance with ASTM D2414-93. Examples of commercially available carbon black include SEAST 6, SEAST 7HM, and SEAST KH (trade name, produced by Tokai Carbon Co., Ltd.), and CK 3 and Special Black 4A (trade name, produced by Evonik Degussa).

Examples of the extender oils include aromatic mineral oils (viscosity-gravity constant (V.G.C. value): 0.900 to 1.049), naphthenic mineral oils (V.G.C. value: 0.850 to 0.899), and paraffinic mineral oils (V.G.C. value: 0.790 to 0.849). The polycyclic aromatics content in the extender oil is preferably less than 3% by mass, and more preferably less than 1% by mass. The polycyclic aromatics content is measured according to the British Institute of Petroleum 346/92 method. The aromatic compound content (CA) in the extender oil is preferably not less than 20% by mass. Two or more kinds of these extender oils may be used in combination.

From the viewpoint of achieving the effects of the present invention well, the amount of extender oil (oil) for each 100 parts by mass of the rubber component is preferably not less than 25 parts by mass, more preferably not less than 35 parts by mass, whereas it is preferably not more than 100 parts by mass, and more preferably not more than 80 parts by mass.

Examples of the vulcanization accelerators include thiazole vulcanization accelerators such as 2-mercaptobenzothiazole, dibenzothiazyl disulfide, and N-cyclohexyl-2-benzothiazylsulfenamide; thiuram vulcanization accelerators such as tetramethylthiuram monosulfide and tetramethylthiuram disulfide; sulfenamide vulcanization accelerators such as N-cyclohexyl-2-benzothiazolesulfenamide, N-t-butyl-2-benzothiazolesulfenamide, N-oxyethylene-2-benzothiazolesulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. The amount thereof to be used is preferably 0.1 to 5 parts by mass, and more preferably 0.2 to 3 parts by mass, for each 100 parts by mass of the rubber component.

The rubber composition may be prepared from the conjugated diene polymer combined with other rubber materials, additives and the like according to a known method, for example, by kneading components with a known mixer such as a roll mill or a Banbury mixer.

With regard to the kneading conditions when additives other than vulcanizing agents and vulcanization accelerators are mixed, the kneading temperature is usually 50 to 200°C, and preferably 80 to 190°C, and the kneading time is usually 30 seconds to 30 minutes, and preferably 1 minute to 30 minutes.

When a vulcanizing agent and a vulcanization accelerator are mixed, the kneading temperature is usually not higher than 100°C, and preferably ranges from room temperature to 80°C. The composition containing a vulcanizing agent and a vulcanization accelerator is usually used after it is vulcanized by press vulcanization or the like. The vulcanization temperature is usually 120 to 200°C, and preferably 140 to 180°C.

The rubber composition of the present invention is excellent in the balance among the performance on ice and snow, abrasion resistance, rubber strength, fuel economy, wet-grip performance, and dry handling stability, and thus provides effects of significantly improving these properties.

The rubber composition of the present invention can be used for various components of a tire, suitably in a tread of a studless winter tire.

The studless winter tire of the present invention can be formed from the rubber composition by a conventional method. Specifically, the unvulcanized rubber composition optionally containing additives is extruded and processed into the shape of a tire component (e.g. tread), and then formed in a conventional manner on a tire building machine and assembled with other tire components to build an unvulcanized tire. Then, the unvulcanized tire is heated and pressed in a vulcanizer to produce a studless winter tire of the present invention.

The studless winter tire of the present invention can be suitably used as studless winter tires for passenger vehicles.

## EXAMPLES

The present invention is more specifically described with reference to examples. However, the present invention

is not limited thereto.

The following is a list of chemical agents used in the synthesis or polymerization. The chemical agents were purified, if needed, by usual methods.

THF: anhydrous tetrahydrofuran, produced by Kanto Chemical Co., Inc.
Sodium hydride: produced by Kanto Chemical Co., Inc.
Diethylamine: produced by Kanto Chemical Co., Inc.
Methylvinyldichlorosilane: produced by Shin-Etsu Chemical Co., Ltd.
Anhydrous hexane: produced by Kanto Chemical Co., Inc. Styrene: produced by Kanto Chemical Co., Inc.
Butadiene: 1,3-butadiene, produced by Tokyo Chemical Industry Co., Ltd.
TMEDA: tetramethylethylenediamine, produced by Kanto Chemical Co., Inc.
n-Butyllithium solution: 1.6 M n-butyllithium in hexane, produced by Kanto Chemical Co., Inc.
Initiator (1): AI-200CE2 (compound formed by bonding 3-(N,N-dimethylamino)-1-propyllithium and two isoprene-derived structural units, represented by the following formula) (0.9 M), produced by FMC

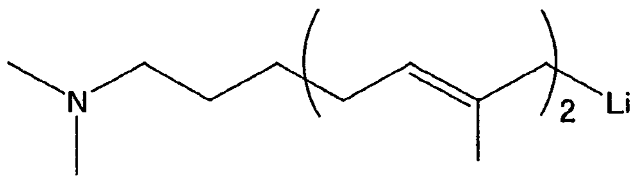

Piperidine: produced by Tokyo Chemical Industry Co., Ltd.
Diamylamine: produced by Tokyo Chemical Industry Co., Ltd.
2,6-Di-tert-butyl-p-cresol: Nocrac 200, produced by Ouchi Shinko Chemical Industrial Co., Ltd.
Bis(dimethylamino)methylvinylsilane: produced by Shin-Etsu Chemical Co., Ltd.
N,N-dimethylaminopropyl acrylamide: produced by Tokyo Chemical Industry Co., Ltd.
3-Diethylaminopropyltriethoxysilane: produced by Azmax Co 1,3-Dimethyl-2-imidazolidinone: produced by Tokyo Chemical Industry Co., Ltd.
N-phenyl-2-pyrrolidone: produced by Tokyo Chemical Industry Co., Ltd.
N-methyl-ε-caprolactam: produced by Tokyo Chemical Industry Co., Ltd.
Tris[3-(trimethoxysilyl)propyl]isocyanurate: produced by Shin-Etsu Chemical Co., Ltd.
N,N-dimethylformamide dimethyl acetal: produced by Tokyo Chemical Industry Co., Ltd.
1,3-Diisopropenylbenzene: produced by Tokyo Chemical Industry Co., Ltd.
sec-Butyllithium solution: produced by Kanto Chemical Co., Inc. (1.0 mol/L)
Cyclohexane: produced by Kanto Chemical Co., Inc.

<Preparation of modifier (1) (main-chain modifier)>

In a nitrogen atmosphere, 15.8 g of bis(dimethylamino)methylvinylsilane was charged into a 100-mL volumetric flask, and anhydrous hexane was also added to increase the total amount to 100 mL. In this manner, a modifier (1) was prepared.

<Preparation of modifier (2) (terminal modifier)>

In a nitrogen atmosphere, 15.6 g of N,N-dimethylaminopropyl acrylamide was charged into a 100-mL volumetric flask, and anhydrous hexane was also added to increase the total amount to 100 mL. In this manner, a modifier (2) was prepared.

<Preparation of modifier (3) (main-chain modifier)>

THF (1000 mL) and sodium hydride (13 g) were charged into a sufficiently nitrogen-purged 2-L three-necked flask, and diethylamine (36.5 g) was slowly added dropwise thereto on an ice water bath while stirring. After stirring for 30 minutes, methylvinyldichlorosilane (36 g) was added dropwise over 30 minutes, followed by stirring for 2 hours. The resulting solution was concentrated, filtered, and purified by distillation under reduced pressure to synthesize bis(diethylamino)methylvinylsilane. The bis(diethylamino)methylvinylsilane (21.4 g) was charged into a 100-mL volumetric flask in a nitrogen atmosphere, and anhydrous hexane was also added to increase the total amount to 100 mL.

<Preparation of initiator (2)>

Anhydrous hexane (127.6 mL) and piperidine (8.5 g) were charged into a sufficiently nitrogen-purged 200-mL recovery flask, and cooled to 0°C. Then, an n-butyllithium solution (62.5 mL) was slowly added over 1 hour to prepare an initiator (2).

<Preparation of initiator (3)>

Anhydrous hexane (117 mL) and diamylamine (15.7 g) were charged into a sufficiently nitrogen-purged 200-mL recovery flask, and cooled to 0°C. Then, an n-butyllithium solution (62.5 mL) was slowly added over 1 hour to prepare an initiator (3).

<Preparation of modifier (4) (terminal modifier)>

In a nitrogen atmosphere, 3-diethylaminopropyltriethoxysilane (27.7 g) was charged into a 100-mL volumetric flask, and anhydrous hexane was also added to increase the total amount to 100 mL. In this manner, a modifier (4) was prepared.

<Preparation of initiator (4) (bifunctional initiator)>

Cyclohexane (550 mL), TMEDA (27 mL), and a sec-butyllithium solution (200 mL) were charged into a sufficiently dried and nitrogen-purged 1-L recovery flask. While the mixture was stirred at 45°C, 1,3-diisopropenylbenzene (17 mL) was slowly added thereto over 30 minutes. The resulting mixed solution was further stirred for 1 hour, and then cooled to room temperature to prepare an initiator (4).

<Preparation of modifier (5) (terminal modifier)>

In a nitrogen atmosphere, 1,3-dimethyl-2-imidazolidinone (11.4 g) was charged into a 100-mL volumetric flask, and anhydrous hexane was also added to increase the total amount to 100 mL. In this manner, a modifier (5) was prepared.

<Preparation of modifier (6) (terminal modifier)>

In a nitrogen atmosphere, N-phenyl-2-pyrrolidone (16.1 g) was charged into a 100-mL volumetric flask, and anhydrous hexane was also added to increase the total amount to 100 mL. In this manner, a modifier (6) was prepared.

<Preparation of modifier (7) (terminal modifier)>

In a nitrogen atmosphere, N-methyl-ε-caprolactam (12.7 g) was charged into a 100-mL volumetric flask, and anhydrous hexane was also added to increase the total amount to 100 mL. In this manner, a modifier (7) was prepared.

<Preparation of modifier (8) (terminal modifier)>

In a nitrogen atmosphere, tris[3-(trimethoxysilyl)propyl]isocyanurate (30.7 g) was charged into a 100-mL volumetric flask, and anhydrous hexane was also added to increase the total amount to 200 mL. In this manner, a modifier (8) was prepared.

<Preparation of modifier (9) (terminal modifier)>

In a nitrogen atmosphere, N,N-dimethylformamide dimethyl acetal (11.9 g) was charged into a 100-mL volumetric flask, and anhydrous hexane was also added to increase the total amount to 200 mL. In this manner, a modifier (9) was prepared.

<Copolymer analysis>

Copolymers (conjugated diene polymers) obtained as mentioned later were analyzed by the following methods.

<Measurement of weight-average molecular weight (Mw) and number-average molecular weight (Mn)>

The weight-average molecular weight (Mw) and number-average molecular weight (Mn) of each copolymer were measured using gel permeation chromatography (GPC) (GPC-8000 series produced by Tosoh Corporation, detector: differential refractometer, column: TSKGEL SUPERMULTIPORE HZ-M produced by Tosoh Corporation), and expressed relative to polystyrene standards. A molecular weight distribution Mw/Mn was calculated from the measurement results.

<Structural identification of copolymers>

The structures (styrene content, vinyl content) of copolymers were identified with a device of JNM-ECA series produced by JEOL Ltd. Each polymer (0.1 g) was dissolved in toluene (15 mL), and the solution was slowly poured in methanol (30 mL) for reprecipitation. The resulting precipitate was dried under reduced pressure and then measured.

<Synthesis of copolymer (1)>

n-Hexane (18 L), styrene (600 g), butadiene (1400 g), the modifier (1) (40 mL), and TMEDA (10 mmol) were charged into a sufficiently nitrogen-purged 30-L pressure resistant container, and heated to 40°C. After further addition of the initiator (2) (34 mL), the mixture was heated to 50°C, and stirred for 3 hours. Next, the modifier (2) (20 mL) was added, followed by stirring for 30 minutes. The reaction solution was mixed with methanol (15 mL) and 2,6-tert-butyl-p-cresol (0.1 g). Then, a coagulum was recovered from the polymer solution by steam stripping treatment, and the coagulum was dried under reduced pressure for 24 hours to give a copolymer (1). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (2)>

A copolymer (2) was produced based on the same formulation as that for the synthesis of the copolymer (1), except that the initiator (3) (34 mL) was used instead of the initiator (2) (34 mL). Here, 0.32 g of the silicon-containing vinyl compound (modifier (1)) was introduced for each 100 g of the monomer component; 0.85 mmol of the polymerization initiator (initiator (3)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (3)>

A copolymer (3) was produced based on the same formulation as that for the synthesis of the copolymer (1), except that the amounts of styrene and butadiene were changed to 900 g and 1100 g, respectively. Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (4)>

A copolymer (4) was produced based on the same formulation as that for the synthesis of the copolymer (1), except that the initiator (1) (19 mL) was used instead of the initiator (2) (34 mL). Here, 0.32 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (5)>

n-Hexane (18 L), styrene (600 g), butadiene (1400 g), the modifier (1) (75 mL), and TMEDA (10 mmol) were charged into a sufficiently nitrogen-purged 30-L pressure resistant container, and heated to 40°C. After further addition

of the initiator (1) (19 mL), the mixture was heated to 50°C and stirred for 30 minutes. Further, the modifier (1) (75 mL) was added, and the mixture was then stirred for 2.5 hours. Next, the modifier (2) (20 mL) was added, followed by stirring for 30 minutes. The reaction solution was mixed with methanol (1 mL) and 2,6-tert-butyl-p-cresol (0.1 g). Then, a coagulum was recovered from the polymer solution by steam stripping treatment, and the coagulum was dried under reduced pressure for 24 hours to give a copolymer (5). Here, 1.19 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (6)>

A copolymer (6) was produced based on the same formulation as that for the synthesis of the copolymer (4), except that the amounts of styrene and butadiene were changed to 0 g and 2000 g, respectively; THF (5 mmol) was used instead of TMEDA (10 mmol); and the initiator (1) (23 mL) was used instead of the initiator (1) (19 mL). Here, 0.32 g of the silicon-containing vinyl compound (modifier (1)) was introduced for each 100 g of the monomer component; 1.05 mmol of the polymerization initiator (initiator (1)) was introduced for each 100 g of the monomer component; and 0.95 mol of the compound (modifier (2)) containing a nitrogen atom and/or a silicon atom was introduced per mol of the alkali metal derived from the polymerization initiator introduced.

<Synthesis of copolymer (7)>

A copolymer (7) was produced based on the same formulation as that for the synthesis of the copolymer (4), except that the modifier (3) (40 mL) was used instead of the modifier (1) (40 mL). Here, 0.43 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (8)>

A copolymer (8) was produced based on the same formulation as that for the synthesis of the copolymer (7), except that an n-butyllithium solution (10.6 mL) was used instead of the initiator (1) (19 mL). Here, 0.43 g of the silicon-containing vinyl compound (modifier (3)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (9)>

A copolymer (9) was produced based on the same formulation as that for the synthesis of the copolymer (6), except that an n-butyllithium solution (13 mL) was used instead of the initiator (1) (23 mL). Here, 0.43 g of the silicon-containing vinyl compound (modifier (1)) was introduced for each 100 g of the monomer component; and 0.95 mol of the compound (modifier (2)) containing a nitrogen atom and/or a silicon atom was introduced per mol of the alkali metal derived from the polymerization initiator introduced.

<Synthesis of copolymer (10)>

A copolymer (10) was produced based on the same formulation as that for the synthesis of the copolymer (1), except that the amount of the modifier (1) was changed from 40 mL to 0 mL. Here, 0.85 mmol of the polymerization initiator (initiator (2)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (11)>

A copolymer (11) was produced based on the same formulation as that for the synthesis of the copolymer (1), except that the amount of the modifier (2) was changed from 20 mL to 0 mL. Here, 0.32 g of the silicon-containing vinyl compound (modifier (1)) was introduced for each 100 g of the monomer component; and 0.85 mmol of the polymerization initiator (initiator (2)) was introduced for each 100 g of the monomer component.

<Synthesis of copolymer (12)>

n-Hexane (18 L), styrene (600 g), butadiene (1400 g), and TMEDA (10 mmol) were charged into a sufficiently nitrogen-purged 30-L pressure resistant container, and heated to 40°C. After further addition of an n-butyllithium solution (11 mL), the mixture was heated to 50°C, and stirred for 3 hours. Next, the reaction solution was mixed with methanol (1 mL) and 2,6-tert-butyl-p-cresol (0.1 g). Then, a coagulum was recovered from the polymer solution by steam stripping treatment, and the coagulum was dried under reduced pressure for 24 hours to give a copolymer (12).

<Synthesis of copolymer (13)>

A copolymer (13) was produced based on the same formulation as that for the synthesis of the copolymer (7), except that a coagulum was recovered from the polymer solution by, instead of steam stripping treatment, evaporating the polymer solution at room temperature for 24 hours, followed by drying under reduced pressure. Here, 0.43 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (14)>

A copolymer (14) was produced based on the same formulation as that for the synthesis of the copolymer (7), except that the amounts of the modifier (3) (40 mL) and the modifier (2) (20 mL) were both changed to 0 mL. Here, 8.5 mmol of the polymerization initiator (initiator (1)) was introduced for each 100 g of the monomer component.

<Synthesis of copolymer (15)>

A copolymer (15) was produced based on the same formulation as that for the synthesis of the copolymer (7), except that an n-butyllithium solution (6.8 mL) was used instead of the initiator (1) (19 mL), and the amount of the modifier (2) was changed from 20 mL to 0 mL. Here, 0.43 g of the silicon-containing vinyl compound (modifier (3)) was introduced for each 100 g of the monomer component.

<Synthesis of copolymer (16)>

A copolymer (16) was produced based on the same formulation as that for the synthesis of the copolymer (7), except that an n-butyllithium solution (6.8 mL) was used instead of the initiator (1) (19 mL), and the amount of the modifier (3) was changed from 40 mL to 0 mL. Here, 1.18 mol of the compound (modifier (2)) containing a nitrogen atom and/or a silicon atom was introduced per mol of the alkali metal derived from the polymerization initiator introduced.

<Synthesis of copolymer (17)>

A copolymer (17) was produced based on the same formulation as that for the synthesis of the copolymer (1), except that the initiator (4) (bifunctional initiator, 68 mL) was used instead of the initiator (2) (34 mL), and the amount of the modifier (2) was changed from 20 mL to 40 mL. Here, 0.32 g of the silicon-containing vinyl compound (modifier (1)) was introduced for each 100 g of the monomer component; and 2.28 mol (1.14 mol for each terminal) of the compound (modifier (2)) containing a nitrogen atom and/or a silicon atom was introduced per mol of the alkali metal derived from the polymerization initiator introduced.

<Synthesis of copolymer (18)>

A copolymer (18) was produced based on the same formulation as that for the synthesis of the copolymer (7), except that the amounts of styrene and butadiene were changed to 0 g and 2000 g, respectively; THF (5 mmol) was used instead of TMEDA (10 mmol); and the amount of the initiator (1) was changed from 19 mL to 23 mL. Here, 0.43 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (19)>

A copolymer (19) was produced based on the same formulation as that for the synthesis of the copolymer (8), except that the amounts of styrene and butadiene were changed to 0 g and 2000 g, respectively, and THF (5 mmol) was used instead of TMEDA (10 mmol). Here, 0.43 g of the silicon-containing vinyl compound (modifier (3)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (20)>

n-Hexane (18 L), butadiene (2000 g), and THF (5 mmol) were charged into a sufficiently nitrogen-purged 30-L pressure resistant container, and heated to 40°C. After further addition of an n-butyllithium solution (11 mL), the mixture was heated to 50°C, and stirred for 3 hours. Next, the reaction solution was mixed with methanol (1 mL) and 2,6-tert-butyl-p-cresol (0.1 g). Then, a coagulum was recovered from the polymer solution by steam stripping treatment, and the coagulum was dried under reduced pressure for 24 hours to give a copolymer (20).

<Synthesis of copolymer (21)>

A copolymer (21) was produced based on the same formulation as that for the synthesis of the copolymer (18), except that a coagulum was recovered from the polymer solution by, instead of steam stripping treatment, evaporating the polymer solution at room temperature for 24 hours, followed by drying under reduced pressure. Here, 0.43 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (2)) containing a nitrogen atom and/or a silicon atom was introduced per mol of the alkali metal derived from the polymerization initiator introduced.

<Synthesis of copolymer (22)>

A copolymer (22) was produced based on the same formulation as that for the synthesis of the copolymer (1), except that the modifier (4) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (23)>

A copolymer (23) was produced based on the same formulation as that for the synthesis of the copolymer (2), except that the modifier (4) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (3)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (24)>

A copolymer (24) was produced based on the same formulation as that for the synthesis of the copolymer (3), except that the modifier (4) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (25)>

A copolymer (25) was produced based on the same formulation as that for the synthesis of the copolymer (4), except that the modifier (4) (20 mL) was used instead of the modifier (2) (20 mL). Here, 0.32 g of the silicon-containing vinyl compound (modifier (1)) was introduced for each 100 g of the monomer component; 0.85 mmol of the polymerization

initiator (initiator (1)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (26)>

A copolymer (26) was produced based on the same formulation as that for the synthesis of the copolymer (5), except that the modifier (4) (20 mL) was used instead of the modifier (2) (20 mL). Here, 1.19 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (27)>

A copolymer (27) was produced based on the same formulation as that for the synthesis of the copolymer (6), except that the modifier (4) (20 mL) was used instead of the modifier (2) (20 mL). Here, 0.32 g of the silicon-containing vinyl compound (modifier (1)) was introduced for each 100 g of the monomer component; 1.05 mmol of the polymerization initiator (initiator (1)) was introduced for each 100 g of the monomer component; and 0.95 mol of the compound (modifier (4)) containing a nitrogen atom and/or a silicon atom was introduced per mol of the alkali metal derived from the polymerization initiator introduced.

<Synthesis of copolymer (28)>

A copolymer (28) was produced based on the same formulation as that for the synthesis of the copolymer (7), except that the modifier (4) (20 mL) was used instead of the modifier (2) (20 mL). Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (29)>

A copolymer (29) was produced based on the same formulation as that for the synthesis of the copolymer (28), except that a coagulum was recovered from the polymer solution by, instead of steam stripping treatment, evaporating the polymer solution at room temperature for 24 hours, followed by drying under reduced pressure. Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (30)>

A copolymer (30) was produced based on the same formulation as that for the synthesis of the copolymer (28), except that an n-butyllithium solution (10.6 mL) was used instead of the initiator (1) (19 mL), and the amount of the modifier (3) was changed from 40 mL to 0 mL. Here, 1.18 mol of the compound (modifier (4)) containing a nitrogen atom and/or a silicon atom was introduced per mol of the alkali metal derived from the polymerization initiator introduced.

<Synthesis of copolymer (31)>

A copolymer (31) was produced based on the same formulation as that for the synthesis of the copolymer (18), except that the modifier (4) (20 mL) was used instead of the modifier (2) (20 mL). Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (32)>

A copolymer (32) was produced based on the same formulation as that for the synthesis of the copolymer (31), except that a coagulum was recovered from the polymer solution by, instead of steam stripping treatment, evaporating the polymer solution at room temperature for 24 hours, followed by drying under reduced pressure. Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (4)) containing a nitrogen atom and/or a silicon atom was introduced per mol of the alkali metal derived from the polymerization initiator introduced.

<Synthesis of copolymer (33)>

A copolymer (33) was produced based on the same formulation as that for the synthesis of the copolymer (1), except that the modifier (5) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (5)) containing a nitrogen atom and/or a silicon atom was introduced per mol of the alkali metal derived from the polymerization initiator introduced.

<Synthesis of copolymer (34)>

A copolymer (34) was produced based on the same formulation as that for the synthesis of the copolymer (2), except that the modifier (5) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (3)) was introduced for each 100 g of the monomer component; and 1.18 mol of the compound (modifier (5)) containing a nitrogen atom and/or a silicon atom was introduced per mol of the alkali metal derived from the polymerization initiator introduced.

<Synthesis of copolymer (35)>

A copolymer (35) was produced based on the same formulation as that for the synthesis of the copolymer (3), except that the modifier (5) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (5)) containing a nitrogen atom and/or a silicon atom was introduced per mol of the alkali metal derived from the polymerization initiator introduced.

<Synthesis of copolymer (36)>

A copolymer (36) was produced based on the same formulation as that for the synthesis of the copolymer (4), except that the modifier (5) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (5)) containing a nitrogen atom and/or a silicon atom was introduced per mol of the alkali metal derived from the polymerization initiator introduced.

<Synthesis of copolymer (37)>

A copolymer (37) was produced based on the same formulation as that for the synthesis of the copolymer (5), except that the modifier (5) (20 mL) was used instead of the modifier (2) (20 mL). Here, 1.19 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (5)) containing a nitrogen atom and/or a silicon atom was introduced per mol of the alkali metal derived from the polymerization initiator introduced.

<Synthesis of copolymer (38)>

A copolymer (38) was produced based on the same formulation as that for the synthesis of the copolymer (7),

except that the modifier (5) (20 mL) was used instead of the modifier (2) (20 mL). Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (5)) containing a nitrogen atom and/or a silicon atom was introduced per mol of the alkali metal derived from the polymerization initiator introduced.

<Synthesis of copolymer (39)>

A copolymer (39) was produced based on the same formulation as that for the synthesis of the copolymer (38), except that a coagulum was recovered from the polymer solution by, instead of steam stripping treatment, evaporating the polymer solution at room temperature for 24 hours, followed by drying under reduced pressure. Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (5)) containing a nitrogen atom and/or a silicon atom was introduced per mol of the alkali metal derived from the polymerization initiator introduced.

<Synthesis of copolymer (40)>

A copolymer (40) was produced based on the same formulation as that for the synthesis of the copolymer (7), except that the modifier (6) (20 mL) was used instead of the modifier (2) (20 mL). Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (6)) containing a nitrogen atom and/or a silicon atom was introduced per mol of the alkali metal derived from the polymerization initiator introduced.

<Synthesis of copolymer (41)>

A copolymer (41) was produced based on the same formulation as that for the synthesis of the copolymer (7), except that the modifier (7) (20 mL) was used instead of the modifier (2) (20 mL). Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (7)) containing a nitrogen atom and/or a silicon atom was introduced per mol of the alkali metal derived from the polymerization initiator introduced.

<Synthesis of copolymer (42)>

A copolymer (42) was produced based on the same formulation as that for the synthesis of the copolymer (38), except that a butyllithium solution (10.6 mL) was used instead of the initiator (1) (19 mL), and the amount of the modifier (3) was changed from 40 mL to 0 mL. Here, 1.18 mol of the compound (modifier (5)) containing a nitrogen atom and/or a silicon atom was introduced per mol of the alkali metal derived from the polymerization initiator introduced.

<Synthesis of copolymer (43)>

A copolymer (43) was produced based on the same formulation as that for the synthesis of the copolymer (1), except that the modifier (8) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (8)) containing a nitrogen atom and/or a silicon atom was introduced per mol of the alkali metal derived from the polymerization initiator introduced.

<Synthesis of copolymer (44)>

A copolymer (44) was produced based on the same formulation as that for the synthesis of the copolymer (2), except that the modifier (8) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (3)) was introduced for each 100 g of the monomer component; and 1.18 mol of the compound (modifier (8)) containing a nitrogen atom and/or a silicon atom was introduced per mol of the alkali metal derived from the polymerization initiator introduced.

<Synthesis of copolymer (45)>

A copolymer (45) was produced based on the same formulation as that for the synthesis of the copolymer (3), except that the modifier (8) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (8)) containing a nitrogen atom and/or a silicon atom was introduced per mol of the alkali metal derived from the polymerization initiator introduced.

<Synthesis of copolymer (46)>

A copolymer (46) was produced based on the same formulation as that for the synthesis of the copolymer (4), except that the modifier (8) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (8)) containing a nitrogen atom and/or a silicon atom was introduced per mol of the alkali metal derived from the polymerization initiator introduced.

<Synthesis of copolymer (47)>

A copolymer (47) was produced based on the same formulation as that for the synthesis of the copolymer (5), except that the modifier (8) (20 mL) was used instead of the modifier (2) (20 mL). Here, 1.19 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (8)) containing a nitrogen atom and/or a silicon atom was introduced per mol of the alkali metal derived from the polymerization initiator introduced.

<Synthesis of copolymer (48)>

A copolymer (48) was produced based on the same formulation as that for the synthesis of the copolymer (7), except that the modifier (8) (20 mL) was used instead of the modifier (2) (20 mL). Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (8)) containing a nitrogen atom and/or a silicon atom was introduced per mol of the alkali metal derived from the polymerization initiator introduced.

<Synthesis of copolymer (49)>

A copolymer (49) was produced based on the same formulation as that for the synthesis of the copolymer (48), except that a coagulum was recovered from the polymer solution by, instead of steam stripping treatment, evaporating the polymer solution at room temperature for 24 hours, followed by drying under reduced pressure. Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (8)) containing a nitrogen atom and/or a silicon atom was introduced per mol of the alkali metal derived from the polymerization initiator introduced.

<Synthesis of copolymer (50)>

A copolymer (50) was produced based on the same formulation as that for the synthesis of the copolymer (48), except that a butyllithium solution (10.6 mL) was used instead of the initiator (1) (19 mL), and the amount of the modifier (3) was changed from 40 mL to 0 mL. Here, 1.18 mol of the compound (modifier (8)) containing a nitrogen atom and/or a silicon atom was introduced per mol of the alkali metal derived from the polymerization initiator introduced.

<Synthesis of copolymer (51)>

A copolymer (51) was produced based on the same formulation as that for the synthesis of the copolymer (1), except that the modifier (9) (20 mL) was used instead of the modifier (2) (20 mL). Here, 0.32 g of the silicon-containing vinyl compound (modifier (1)) was introduced for each 100 g of the monomer component; 0.85 mmol of the polymerization

initiator (initiator (2)) was introduced for each 100 g of the monomer component; and 1.18 mol of the compound (modifier (9)) containing a nitrogen atom and/or a silicon atom was introduced per mol of the alkali metal derived from the polymerization initiator introduced.

<Synthesis of copolymer (52)>

A copolymer (52) was produced based on the same formulation as that for the synthesis of the copolymer (2), except that the modifier (9) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (3)) was introduced for each 100 g of the monomer component; and 1.18 mol of the compound (modifier (9)) containing a nitrogen atom and/or a silicon atom was introduced per mol of the alkali metal derived from the polymerization initiator introduced.

<Synthesis of copolymer (53)>

A copolymer (53) was produced based on the same formulation as that for the synthesis of the copolymer (3), except that the modifier (9) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (2)) was introduced for each 100 g of the monomer component; and 1.18 mol of the compound (modifier (9)) containing a nitrogen atom and/or a silicon atom was introduced per mol of the alkali metal derived from the polymerization initiator introduced.

<Synthesis of copolymer (54)>

A copolymer (54) was produced based on the same formulation as that for the synthesis of the copolymer (4), except that the modifier (9) (20 mL) was used instead of the modifier (2) (20 mL). Here, 0.32 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (9)) containing a nitrogen atom and/or a silicon atom was introduced per mol of the alkali metal derived from the polymerization initiator introduced.

<Synthesis of copolymer (55)>

A copolymer (55) was produced based on the same formulation as that for the synthesis of the copolymer (5), except that the modifier (9) (20 mL) was used instead of the modifier (2) (20 mL). Here, 1.19 g of the silicon-containing vinyl compound (modifier (1)) was introduced for each 100 g of the monomer component; 0.85 mmol of the polymerization initiator (initiator (1)) was introduced for each 100 g of the monomer component; and 1.18 mol of the compound (modifier (9)) containing a nitrogen atom and/or a silicon atom was introduced per mol of the alkali metal derived from the polymerization initiator introduced.

<Synthesis of copolymer (56)>

A copolymer (56) was produced based on the same formulation as that for the synthesis of the copolymer (7), except that the modifier (9) (20 mL) was used instead of the modifier (2) (20 mL). Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (9)) containing a nitrogen atom and/or a silicon atom was introduced per mol of the alkali metal derived from the polymerization initiator introduced.

<Synthesis of copolymer (57)>

A copolymer (57) was produced based on the same formulation as that for the synthesis of the copolymer (56), except that a coagulum was recovered from the polymer solution by, instead of steam stripping treatment, evaporating the polymer solution at room temperature for 24 hours, followed by drying under reduced pressure. Here, 0.32 g of the silicon-containing vinyl compound (modifier (3)) was introduced for each 100 g of the monomer component; 0.85 mmol of the polymerization initiator (initiator (1)) was introduced for each 100 g of the monomer component; and 1.18 mol of the compound (modifier (9)) containing a nitrogen atom and/or a silicon atom was introduced per mol of the alkali metal derived from the polymerization initiator introduced.

<Synthesis of copolymer (58)>

A copolymer (58) was produced based on the same formulation as that for the synthesis of the copolymer (56), except that a butyllithium solution (10.6 mL) was used instead of the initiator (1) (19 mL), and the amount of the modifier (3) was changed from 40 mL to 0 mL. Here, 1.18 mol of the compound (modifier (9)) containing a nitrogen atom and/or a silicon atom was introduced per mol of the alkali metal derived from the polymerization initiator introduced.

Tables 1 to 5 summarize the monomer components and others of the copolymers (1) to (58).

[Table 1]

| Examples in which a compound represented by the formula (IIId) is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit ten thousand) |
| Copolymer (1) | Initiator (2) | Styrene, 1,3-Butadiene, Modifier (1) | Modifier (2) | 30 | 56 | 1.21 | 26.5 |
| Copolymer (2) | Initiator (3) | Styrene, 1,3-Butadiene, Modifier (1) | Modifier (2) | 30 | 57 | 1.23 | 26.8 |
| Copolymer (3) | Initiator (2) | Styrene, 1, 3-Butadiene, Modifier (1) | Modifier (2) | 45 | 56 | 1.23 | 26.9 |
| Copolymer (4) | Initiator (1) | Styrene, 1,3-Butadiene, Modifier (1) | Modifier (2) | 30 | 56 | 1.13 | 24.8 |
| Copolymer (5) | Initiator (1) | Styrene, 1,3-Butadiene, Modifier (1) | Modifier (2) | 30 | 56 | 1.20 | 27.1 |
| Copolymer (6) | Initiator (1) | 1,3-Butadiene, Modifier (1) | Modifier (2) | 0 | 14.2 | 1.17 | 28.9 |
| Copolymer (7) | Initiator (1) | Styrene, 1, 3-Butadiene, Modifier (3) | Modifier (2) | 30 | 56 | 1.18 | 26.0 |
| Copolymer (8) | n-Butyllithium solution | Styrene, 1,3-Butadiene, Modifier (3) | Modifier (2) | 30 | 55 | 1.17 | 24.5 |
| Copolymer (9) | n-Butyllithium solution | 1,3-Butadiene, Modifier (1) | Modifier (2) | 0 | 13.5 | 1.16 | 29.3 |
| Copolymer (10) | Initiator (2) | Styrene, 1,3-Butadiene | Modifier (2) | 30 | 56 | 1.19 | 25.0 |
| Copolymer (11) | Initiator (2) | Styrene, 1,3-Butadiene, Modifier (1) | Not added | 30 | 56 | 1.25 | 25.4 |
| Copolymer (12) | n-Butyllithium solution | Styrene, 1, 3-Butadiene | Not added | 30 | 56 | 1.09 | 26.5 |
| Copolymer (13) | Initiator (1) | Styrene, 1,3-Butadiene, Modifier (3) | Modifier (2) | 30 | 57 | 1.19 | 25.2 |

(continued)

| Examples in which a compound represented by the formula (IIId) is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit ten thousand) |
| Copolymer (14) | Initiator (1) | Styrene, 1,3-Butadiene | Not added | 30 | 57 | 1.16 | 26.1 |
| Copolymer (15) | n-Butyllithium solution | Styrene, 1,3-Butadiene, Modifier (3) | Not added | 30 | 56 | 1.13 | 27.9 |
| Copolymer (16) | n-Butyllithium solution | Styrene, 1,3-Butadiene | Modifier (2) | 30 | 55 | 1.10 | 27.4 |
| Copolymer (17) | Initiator (4) | Styrene, 1,3-Butadiene, Modifier (1) | Modifier (2) | 30 | 55 | 1.29 | 28.9 |
| Copolymer (18) | Initiator (1) | 1,3-Butadiene, Modifier (3) | Modifier (2) | 0 | 14.2 | 1.19 | 26.2 |
| Copolymer (19) | n-Butyllithium solution | 1,3-Butadiene, Modifier (3) | Modifier (2) | 0 | 13.7 | 1.16 | 252 |
| Copolymer (20) | n-Butyllithium solution | 1, 3-Butadiene | Not added | 0 | 13.9 | 1.11 | 27.1 |
| Copolymer (21) | Initiator (1) | 1,3-Butadiene, Modifier (3) | Modifier (2) | 0 | 14 | 1.21 | 26.3 |

[Table 2]

| Examples in which a compound represented by the formula (IV) is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit: ten thousand) |
| Copolymer (22) | Initiator (2) | Styrene, 1, 3-Butadiene, Modifier (1) | Modifier (4) | 30 | 57 | 126 | 28.3 |
| Copolymer (23) | Initiator (3) | Styrene, 1, 3-Butadiene, Modifier (1) | Modifier (4) | 30 | 57 | 1.28 | 28.0 |
| Copolymer (24) | Initiator (2) | Styrene, 1, 3-Butadiene, Modifier (1) | Modifier (4) | 45 | 56 | 125 | 29.2 |
| Copolymer (25) | Initiator (1) | Styrene, 1, 3-Butadiene, Modifier (1) | Modifier (4) | 30 | 56 | 1.19 | 27.2 |
| Copolymer (26) | Initiator (1) | Styrene, 1, 3-Butadiene, Modifier (1) | Modifier (4) | 30 | 57 | 1.17 | 26.1 |
| Copolymer (27) | Initiator (1) | 1, 3-Butadiene, Modifier (1) | Modifier (4) | 0 | 13.9 | 1.17 | 25.9 |

(continued)

| Examples in which a compound represented by the formula (IV) is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit: ten thousand) |
| Copolymer (28) | Initiator (1) | Styrene, 1, 3-Butadiene, Modifier (3) | Modifier (4) | 30 | 56 | 120 | 25.8 |
| Copolymer (29) | Initiator (1) | Styrene, 1,3-Butadiene, Modifier (3) | Modifier (4) | 30 | 58 | 1.18 | 26.2 |
| Copolymer (30) | n-Butyllithium solution | Styrene, 1,3-Butadiene | Modifier (4) | 30 | 56 | 1.14 | 27.1 |
| Copolymer (31) | Initiator (1) | 1,3-Butadiene, Modifier (3) | Modifier (4) | 0 | 14.1 | 121 | 26.2 |
| Copolymer (32) | Initiator (1) | 1,3-Butadiene, Modifier (3) | Modifier (4) | 0 | 14.2 | 1.18 | 26.8 |

[Table 3]

| Examples in which a compound represented by the formula (IIIb) is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit ten thousand) |
| Copolymer (33) | Initiator (2) | Styrene, 1, 3-butadiene, Modifier (1) | Modifier (5) | 30 | 57 | 1.18 | 27.1 |
| Copolymer (34) | Initiator (3) | Styrene, 1, 3-Butadiene, Modifier (1) | Modifier (5) | 30 | 56 | 1.16 | 26.3 |
| Copolymer (35) | Initiator (2) | Styrene, 1, 3-Butadiene, Modifier (1) | Modifier (5) | 45 | 56 | 1.16 | 24.6 |
| Copolymer (36) | Initiator (1) | Styrene, 1, 3-Butadiene, Modifier (1) | Modifier (5) | 30 | 57 | 1.12 | 24.9 |
| Copolymer (37) | Initiator (1) | Styrene, 1, 3-Butadiene, Modifier (1) | Modifier (5) | 30 | 56 | 1.13 | 26.7 |
| Copolymer (38) | Initiator (1) | Styrene, 1, 3-Butadiene, Modifier (3) | Modifier (5) | 30 | 56 | 1.13 | 25.6 |
| Copolymer (39) | Initiator (1) | Styrene, 1, 3-Butadiene, Modifier (3) | Modifier (5) | 30 | 56 | 1.10 | 25.5 |

(continued)

| Examples in which a compound represented by the formula (IIIb) is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit ten thousand) |
| Copolymer (40) | Initiator (1) | Styrene, 1, 3-Butadiene, Modifier (3) | Modifier (6) | 30 | 57 | 1.14 | 25.2 |
| Copolymer (41) | Initiator (1) | Styrene, 1, 3-Butadiene, Modifier (3) | Modifier (7) | 30 | 56 | 1.15 | 25.9 |
| Copolymer (42) | n-Butyllithium solution | Styrene, 1, 3-Butadiene | Modifier (5) | 30 | 55 | 1.09 | 26.3 |

[Table 4]

| Examples in which a compound containing an alkoxysilyl group, a nitrogen atom and a carbonyl group is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit ten thousand) |
| Copolymer (43) | Initiator (2) | Styrene, 1, 3-Butadiene, Modifier (1) | Modifier (8) | 30 | 56 | 1.24 | 27.5 |
| Copolymer (44) | Initiator (3) | Styrene, 1,3-Butadiene, Modifier (1) | Modifier (8) | 30 | 56 | 122 | 28.3 |
| Copolymer (45) | Initiator (2) | Styrene, 1,3-Butadiene, Modifier (1) | Modifier (8) | 45 | 57 | 1.23 | 27.8 |
| Copolymer (46) | Initiator (1) | Styrene, 1,3-Butadiene, Modifier (1) | Modifier (8) | 30 | 56 | 120 | 28.5 |
| Copolymer (47) | Initiator (1) | Styrene, 1,3-Butadiene, Modifier (1) | Modifier (8) | 30 | 55 | 1.19 | 28.6 |
| Copolymer (48) | Initiator (1) | Styrene, 1,3-Butadiene, Modifier (3) | Modifier (8) | 30 | 56 | 1.22 | 28.3 |
| Copolymer (49) | Initiator (1) | Styrene, 1, 3-Butadiene, Modifier (3) | Modifier (8) | 30 | 57 | 1.18 | 28.0 |
| Copolymer (50) | n-Butyllithium solution | Styrene, 1,3-Butadiene | Modifier (8) | 30 | 56 | 1.16 | 27.3 |

[Table 5]

| Examples in which an N,N-dialkyl-substituted carboxylic acid amide dialkyl acetal compound is used as a Terminal modifier | | | | | | | |
|---|---|---|---|---|---|---|---|
| Copolymer | Initiator | Monomer component | Terminal modifier | Styrene content (% by mass) | Vinyl content (mol%) | Molecular weight distribution Mw/Mn | Molecular weight Mw (unit ten thousand) |
| Copolymer (51) | Initiator (2) | Styrene, 1,3-Butadiene, Modifier (1) | Modifier (9) | 30 | 57 | 1.20 | 27.2 |
| Copolymer (52) | Initiator (3) | Styrene, 1, 3-Butadiene, Modifier (1) | Modifier (9) | 30 | 56 | 1.21 | 27.3 |
| Copolymer (53) | Initiator (2) | Styrene, 1, 3-Butadiene, Modifier (1) | Modifier (9) | 45 | 55 | 1.21 | 27.8 |
| Copolymer (54) | Initiator (1) | Styrene, 1, 3-Butadiene, Modifier (1) | Modifier (9) | 30 | 56 | 1.20 | 27.6 |
| Copolymer (55) | Initiator (1) | Styrene, 1,3-Butadiene, Modifier (1) | Modifier (9) | 30 | 56 | 1.19 | 26.9 |
| Copolymer (56) | Initiator (1) | Styrene, 1,3-Butadiene, Modifier (3) | Modifier (9) | 30 | 57 | 1.18 | 26.8 |
| Copolymer (57) | Initiator (1) | Styrene, 1,3-Butadiene, Modifier (3) | Modifier (9) | 30 | 56 | 1.20 | 28.1 |
| Copolymer (58) | n-Butyllithium solution | Styrene, 1, 3-Butadiene | Modifier (9) | 30 | 57 | 1.17 | 27.1 |

The following describes the chemicals used in the examples and comparative examples.

Copolymers (1) to (58): synthesized as above
Natural Rubber: TSR20
High-cis polybutadiene (high-cis BR): Ubepol BR150B (cis content: 97% by mass) produced by Ube Industries, Ltd.
Silica A: ULTRASIL VN3-G ($N_2SA$: 175 $m^2/g$) produced by Evonik Degussa
Silica B: ZEOSIL 1205MP ($N_2SA$: 200 $m^2/g$) produced by Rhodia
Silica C: ULTRASIL 360 ($N_2SA$: 50 $m^2/g$) produced by Evonik Degussa
Silane coupling agent A: Si69 (bis(3-triethoxysilylpropyl)tetrasulfide) produced by Evonik Degussa
Silane coupling agent B: Si363 produced by Evonik Degussa
Silane coupling agent C: NXT-Z45 (a compound containing linking unit A and linking unit B (linking unit A: 55 mol%, linking unit B: 45 mol%)) produced by Momentive Performance Materials
Carbon black: Diablack N339 ($N_2SA$: 96 $m^2/g$, DBP absorption: 124 mL/100 g) produced by Mitsubishi Chemical Corporation
Coumarone-indene resin (solid resin): NOVARES C90 (Tg: 90°C) produced by Rutgers chemicals
Oil: X-140 produced by JX Nippon Oil & Energy Corporation
Antioxidant: Antigene 3C produced by Sumitomo Chemical Co., Ltd.
Stearic acid: TSUBAKI stearic acid beads produced by NOF Corporation
Zinc oxide: Zinc oxide #1 produced by Mitsui Mining & Smelting Co., Ltd.
Wax: Sunnoc N produced by Ouchi Shinko Chemical Industrial Co., Ltd.

Sulfur: sulfur powder produced by Tsurumi Chemical Industry Co., Ltd.
Vulcanization accelerator 1: Soxinol CZ produced by Sumitomo Chemical Co., Ltd.
Vulcanization accelerator 2: Soxinol D produced by Sumitomo Chemical Co., Ltd.

(Examples and Comparative Examples)

According to each of the formulations shown in Tables 6 to 25, the materials other than the sulfur and vulcanization accelerators were kneaded for 5 minutes at 150°C using a 1.7-L Banbury mixer (produced by Kobe Steel, Ltd.) to give a kneadate. The sulfur and vulcanization accelerators were then added to the kneadate, followed by kneading for 5 minutes at 80°C using an open roll mill to give an unvulcanized rubber composition. The unvulcanized rubber composition was press-vulcanized for 20 minutes at 170°C in a 0.5 mm-thick mold to obtain a vulcanized rubber composition.

Separately, the unvulcanized rubber composition was formed into a tread shape and assembled with other tire components on a tire building machine to build an unvulcanized tire. The unvulcanized tire was vulcanized for 12 minutes at 170°C to prepare a test tire (DS-2 studless winter tire having a size of 195/65R15 for passenger vehicles).

<Evaluation items and test methods>

In the evaluations below, Comparative Example 1 was taken as a standard comparative example in Tables 6 to 12; Comparative Example 22 was taken as a standard comparative example in Tables 13 to 19; and Comparative Example 45 was taken as a standard comparative example in Tables 20 to 25.

<Rubber strength index>

Each sample was subjected to a tensile test in accordance with JIS K 6251:2010 to measure the elongation at break. The measurement result is expressed as an index relative to that of a standard comparative example (=100). A higher index indicates higher rubber strength (tensile strength at break).

(Rubber strength index) = (Elongation at break of each formulation)/(Elongation at break of standard comparative example) × 100

<Low-heat-build-up property index>

The tan δ of each vulcanized rubber composition was measured at a dynamic strain amplitude of 1%, a frequency of 10 Hz, and a temperature of 50°C using a spectrometer (produced by Ueshima Seisakusho Co., Ltd.). The reciprocal of tan δ is expressed as an index relative to that of a standard comparative example (=100). A higher index indicates a smaller rolling resistance (less heat build-up), which in turn indicates better fuel economy.

<Handling performance index>

The test tires were mounted on a front-engine, front-wheel drive (FF) vehicle (2000 cc, made in Japan), and the vehicle was driven on ice and snow under the conditions mentioned below. Sensory evaluation was performed on starting, accelerating, and stopping. The sensory evaluation was performed using a scoring method as follows. When compared to the performance of a standard comparative example (=100), for example, those with a rating of "clearly improved performance" from a test driver are given a score of 120; those with a rating of "high performance at a level as never before" are given a score of 140.

| | on ice | on snow |
|---|---|---|
| Test location | Test course in Nayoro, Hokkaido | ← |
| Temperature | -6 to -1C° | -10 to -2C° |

<Braking performance on ice index>

The above-mentioned vehicle was driven on ice. The distance (brake stopping distance on ice) required for the vehicle to stop after the brake that locks up was applied at 30 km/h was measured. The result is expressed as an index relative to that of a standard comparative example (=100), using the equation below. A higher index indicates better braking performance on ice.

(Breaking performance on ice index) = (Brake stopping distance on ice of standard comparative example)/(Brake stopping distance on ice of each formulation) × 100

<Abrasion resistance index>

The test tires were mounted on a front-engine, front-wheel drive (FF) vehicle (made in Japan). The groove depth in the tire tread part was measured after the vehicle had run 8000 km. From the measured value, the running distance that decreased the tire groove depth by 1 mm was calculated. The result is expressed as an index relative to that of a standard comparative example (=100), using the equation below. A higher index indicates better abrasion resistance.

(Abrasion resistance index) = (Running distance of each formulation)/(Running distance of standard comparative example) × 100

<Wet-grip performance index>

The test tires were mounted on all the wheels of a vehicle (front-engine, front-wheel drive (FF) vehicle, 2000 cc, made in Japan). The braking distance from an initial speed of 100 km/h was determined on a wet asphalt road. The result is expressed as an index. A higher index indicates better wet-skid performance (wet-grip performance). The index was calculated according to the following equation.

(Wet-grip performance index) = (Braking distance of standard comparative example)/(Braking distance of each formulation) × 100

<Dry handling stability>

The test tires were mounted on all the wheels of a front-engine, front-wheel drive (FF) vehicle (2000 cc, made in Japan). The dry handling stability on a test course (on a dry road) was evaluated based on the sensory evaluation by a driver. The evaluation was made on a scale of 1 to 10 (the best), relative to a standard comparative example taken as 4. A higher rating indicates better handling stability.

[Table 6]

Examples in which a compound represented by the formula (IIId) is used as a terminal modifier

| | | Example | | | | | | | | | | Comparative Example | | | | | | | | | | | | |
|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 | 7 | 8 | 9 | 10 | 11 | 12 | 13 |
| Formulation (parts by mass) | Copolymer (1) | 20 | — | — | — | — | — | — | — | — | — | — | — | — | — | — | — | — | — | — | — | — | — | — |
| | Copolymer (2) | — | 20 | — | — | — | — | — | — | — | — | — | — | — | — | — | — | — | — | — | — | — | — | — |
| | Copolymer (3) | — | — | 20 | — | — | — | — | — | — | — | — | — | — | — | — | — | — | — | — | — | — | — | — |
| | Copolymer (4) | — | — | — | 20 | — | — | — | — | — | — | — | — | — | — | — | — | — | — | — | — | — | — | — |
| | Copolymer (5) | — | — | — | — | 20 | — | — | — | — | — | — | — | — | — | — | — | — | — | — | — | — | — | — |
| | Copolymer (6) | — | — | — | — | — | — | — | 20 | — | — | — | — | — | — | — | — | — | — | — | — | — | — | — |
| | Copolymer (7) | — | — | — | — | — | 20 | — | — | — | — | — | — | — | — | — | — | — | — | — | — | — | — | — |
| | Copolymer (8) | — | — | — | — | — | — | — | 20 | 20 | 20 | 20 | — | — | — | — | — | — | — | 20 | 20 | 20 | 20 | — |
| | Copolymer (9) | — | — | — | — | — | — | — | — | — | — | — | — | — | — | — | — | — | — | 20 | — | — | — | — |
| | Copolymer (10) | — | — | — | — | — | — | — | — | — | — | — | 20 | — | — | — | — | — | — | — | — | — | — | — |
| | Copolymer (11) | — | — | — | — | — | — | — | — | — | — | — | — | 20 | — | — | — | — | — | — | — | — | — | — |
| | Copolymer (12) | — | — | — | — | — | — | — | — | — | — | — | — | — | 20 | — | — | — | — | — | — | — | — | — |
| | Copolymer (13) | — | — | — | — | — | — | 20 | — | — | — | — | — | — | — | — | — | — | — | — | — | — | — | — |
| | Copolymer (14) | — | — | — | — | — | — | — | — | — | — | — | — | — | — | 20 | — | — | — | — | — | — | — | — |
| | Copolymer (15) | — | — | — | — | — | — | — | — | — | — | — | — | — | — | — | 20 | — | — | — | — | — | — | — |
| | Copolymer (16) | — | — | — | — | — | — | — | — | — | — | — | — | — | — | — | — | 20 | — | — | — | — | — | — |
| | Copolymer (17) | — | — | — | — | — | — | — | — | — | — | — | — | — | — | — | — | — | 20 | — | — | — | — | — |
| | Copolymer (18) | — | — | — | — | — | — | — | — | 20 | — | — | — | — | — | — | — | — | — | — | — | — | — | — |
| | Copolymer (19) | — | — | — | — | — | — | — | — | — | — | — | — | — | — | — | — | — | — | — | 20 | — | — | — |
| | Copolymer (20) | — | — | — | — | — | — | — | — | — | — | — | — | — | — | — | — | — | — | — | — | 20 | — | — |
| | Copolymer (21) | — | — | — | — | — | — | — | — | — | 20 | — | — | — | — | — | — | — | — | — | — | — | — | — |
| | Natural rubber | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 20 | 20 | 20 | 40 | 40 | 40 | 40 | 40 | 40 | 40 | 40 | 20 | 20 | 20 | 40 | 60 |
| | Silica A | 75 | 75 | 75 | 75 | 75 | 75 | 75 | 75 | 75 | 75 | 75 | 75 | 75 | 75 | 75 | 75 | 75 | 75 | 75 | 75 | 75 | 75 | 75 |
| | Silane coupling agent A | — | — | — | — | — | — | — | — | — | — | — | — | — | — | — | — | — | — | — | — | — | 6 | — |
| | Silane coupling agent B | — | — | — | — | — | — | — | — | — | — | — | — | — | — | — | — | — | — | — | — | — | — | — |
| | Silane coupling agent C | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | — | 3.75 |
| | Carbon black | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 103 | 104 | 105 | 102 | 101 | 101 | 104 | 101 | 100 | 102 | 100 | 103 | 101 | 106 | 101 | 100 | 102 | 100 | 97 | 97 | 99 | 93 | 97 |
| | Low-heat-build-up property index | 125 | 127 | 126 | 137 | 134 | 136 | 110 | 124 | 130 | 111 | 100 | 93 | 96 | 91 | 103 | 97 | 95 | 102 | 103 | 104 | 96 | 103 | 114 |
| | Handling performance | 124 | 126 | 127 | 137 | 134 | 138 | 110 | 125 | 130 | 112 | 100 | 95 | 99 | 94 | 104 | 98 | 98 | 105 | 106 | 107 | 98 | 108 | 110 |
| | Braking performance on ice | 107 | 109 | 110 | 113 | 114 | 116 | 113 | 107 | 104 | 105 | 100 | 99 | 97 | 103 | 104 | 98 | 94 | 99 | 96 | 94 | 90 | 103 | 97 |
| | Abrasion resistance index | 105 | 107 | 105 | 103 | 105 | 106 | 106 | 104 | 104 | 103 | 100 | 102 | 100 | 97 | 95 | 92 | 98 | 90 | 103 | 104 | 98 | 100 | 115 |
| | Wet-grip performance index | 110 | 111 | 110 | 110 | 110 | 112 | 109 | 108 | 109 | 107 | 100 | 102 | 102 | 98 | 96 | 96 | 96 | 100 | 107 | 106 | 102 | 97 | 80 |
| | Dry handling stability | 4.25 | 4.25 | 4.25 | 4.25 | 4.25 | 4.25 | 4.25 | 4 | 4 | 4 | 4 | 4 | 4 | 4 | 4 | 4 | 4 | 4 | 3.5 | 3.5 | 3.5 | 4.25 | 3 |

[Table 7]

Examples in which a compound represented by the formula (IV) is used as a terminal modifier

| | | Example | | | | | | | Comparative Example | | | | | | Example | | |
|---|---|---|---|---|---|---|---|---|---|---|---|---|---|---|---|---|---|
| | | 11 | 12 | 13 | 14 | 15 | 16 | 17 | 14 | 1 | 4 | 5 | 6 | 15 | 18 | 19 | 20 |
| Formulation (parts by mass) | Copolymer (8) | – | – | – | – | – | – | – | – | 20 | – | – | – | – | 10 | 10 | 10 |
| | Copolymer (12) | – | – | – | – | – | – | – | – | – | 20 | - | - | - | – | – | – |
| | Copolymer (14) | – | – | – | – | – | – | – | – | – | – | 20 | – | – | – | – | – |
| | Copolymer (15) | – | – | – | – | – | – | – | – | – | – | – | 20 | 10 | – | – | – |
| | Copolymer (19) | – | – | – | – | – | – | – | – | – | – | – | – | 10 | – | – | – |
| | Copolymer (22) | 20 | – | – | – | – | – | – | – | – | – | – | – | – | – | – | – |
| | Copolymer (23) | – | 20 | – | – | – | – | – | – | – | – | – | – | – | – | – | – |
| | Copolymer (24) | – | – | 20 | – | – | – | – | – | – | – | – | – | – | – | – | – |
| | Copolymer (25) | – | – | – | 20 | – | – | – | – | – | – | – | – | – | – | – | – |
| | Copolymer (26) | – | – | – | – | 20 | – | – | – | – | – | – | – | – | – | – | – |
| | Copolymer (27) | – | – | – | – | – | – | – | – | – | – | – | – | – | 10 | – | – |
| | Copolymer (28) | – | – | – | – | – | 20 | – | – | – | – | – | – | – | – | – | – |
| | Copolymer (29) | – | – | – | – | – | – | 20 | – | – | – | – | – | – | – | – | – |
| | Copolymer (30) | – | – | – | – | – | – | – | 20 | – | – | – | – | – | – | – | – |
| | Copolymer (31) | – | – | – | – | – | – | – | – | – | – | – | – | – | – | 10 | – |
| | Copolymer (32) | – | – | – | – | – | – | – | – | – | – | – | – | – | – | – | 10 |
| | Natural rubber | 40 | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 | 75 | 75 | 75 |
| | Silane coupling agent A | – | – | – | – | – | – | – | – | – | – | – | – | – | – | – | – |
| | Silane coupling agent B | – | – | – | – | – | – | – | – | – | – | – | – | – | – | – | – |
| | Silane coupling agent C | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 |
| | Carbon black | 5 | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 107 | 106 | 105 | 107 | 108 | 105 | 109 | 95 | 100 | 106 | 101 | 100 | 97 | 105 | 105 | 104 |
| | Low-heat-build-up property index | 130 | 125 | 126 | 126 | 121 | 123 | 113 | 103 | 100 | 91 | 103 | 97 | 107 | 109 | 110 | 108 |
| | Handling performance | 130 | 128 | 127 | 126 | 125 | 125 | 115 | 100 | 100 | 94 | 104 | 98 | 110 | 113 | 112 | 110 |
| | Braking performance on ice | 105 | 100 | 100 | 105 | 105 | 100 | 100 | 98 | 100 | 103 | 104 | 98 | 95 | 103 | 105 | 105 |
| | Abrasion resistance index | 113 | 110 | 115 | 113 | 110 | 112 | 114 | 95 | 100 | 97 | 95 | 92 | 105 | 106 | 113 | 115 |
| | Wet-grip performance index | 107 | 106 | 104 | 108 | 109 | 108 | 106 | 94 | 100 | 98 | 96 | 96 | 95 | 107 | 108 | 105 |
| | Dry handling stability | 4 | 4 | 4 | 4 | 4 | 4 | 4 | 4 | 4 | 4 | 4 | 4 | 3.5 | 4 | 4 | 4 |

[Table 8]

Examples in which a compound represented by the formula (IIId) is used as a terminal modifier

| | | Comparative Example | | Example | | | | | |
|---|---|---|---|---|---|---|---|---|---|
| | | 1 | 4 | 6 | 21 | 22 | 23 | 24 | 25 |
| Formulation (parts by mass) | Copolymer (7) | — | — | 20 | 20 | 20 | 20 | 20 | 20 |
| | Copolymer (8) | 20 | — | — | — | — | — | — | — |
| | Copolymer (12) | — | 20 | — | — | — | — | — | — |
| | Natural rubber | 40 | 40 | 40 | 40 | 40 | 40 | 40 | 55 |
| | High-cis polybutadiene | 40 | 40 | 40 | 40 | 40 | 40 | 40 | 25 |
| | Silica A | 75 | 75 | 75 | 75 | 75 | 75 | 75 | 75 |
| | Silane coupling agent A | — | — | — | — | — | 3 | — | — |
| | Silane coupling agent B | — | — | — | 6 | — | — | 3 | — |
| | Silane coupling agent C | 3.75 | 3.75 | 3.75 | — | 10 | 2 | 2 | 3.75 |
| | Carbon black | 5 | 5 | 5 | 5 | 5 | 5 | 5 | 5 |
| | Oil | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 |
| | Wax | 1 | 1 | 1 | 1 | 1 | 1 | 1 | 1 |
| | Sulfur | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 |
| Evaluation | Rubber strength index | 100 | 106 | 101 | 101 | 107 | 105 | 106 | 115 |
| | Low-heat-build-up property index | 100 | 93 | 136 | 133 | 132 | 131 | 135 | 131 |
| | Handling performance | 100 | 93 | 138 | 136 | 132 | 134 | 137 | 132 |
| | Braking performance on ice | 100 | 102 | 116 | 113 | 110 | 115 | 118 | 101 |
| | Abrasion resistance index | 100 | 97 | 106 | 102 | 104 | 103 | 105 | 103 |
| | Wet-grip performance index | 100 | 98 | 112 | 114 | 121 | 113 | 115 | 104 |
| | Dry handling stability | 4 | 4 | 4.25 | 4.25 | 4 | 4.25 | 4.5 | 4.25 |

[Table 9]

[Table 10]

Examples in which a compound represented by the formula (IIId) is used as a terminal modifier

| | | Com. Ex. | Ex. | | | |
|---|---|---|---|---|---|---|
| | | 1 | 6 | 26 | 27 | 28 |
| Formulation (parts by mass) | Copolymer (7) | — | 20 | 20 | 20 | 20 |
| | Copolymer (8) | 20 | — | — | — | — |
| | Copolymer (12) | — | — | — | — | — |
| | Natural rubber | 40 | 40 | 40 | 40 | 40 |
| | High-cis polybutadiene | 40 | 40 | 40 | 40 | 40 |
| | Silica A | 75 | 75 | — | 75 | — |
| | Silica B | — | — | 55 | — | 55 |
| | Silica C | — | — | 20 | — | 20 |
| | Silane coupling agent A | — | — | — | — | — |
| | Silane coupling agent B | — | — | — | — | — |
| | Silane coupling agent C | 3.75 | 3.75 | 3.75 | 3.75 | 3.75 |
| | Carbon black | 5 | 5 | 5 | 5 | 5 |
| | Oil | 40 | 40 | 40 | 40 | 40 |
| | Coumarone indene resin | — | — | — | 5 | 5 |
| | Antioxidant | 1.5 | 1.5 | 1.5 | 1.5 | 1.5 |
| | Stearic acid | 2 | 2 | 2 | 2 | 2 |
| | Zinc oxide | 2.5 | 2.5 | 2.5 | 2.5 | 2.5 |
| | Wax | 1 | 1 | 1 | 1 | 1 |
| | Sulfur | 2 | 2 | 2 | 2 | 2 |
| | Vulcanization accelerator 1 | 1.8 | 1.8 | 1.8 | 1.8 | 1.8 |
| | Vulcanization accelerator 2 | 1.2 | 1.2 | 1.2 | 1.2 | 1.2 |
| Evaluation | Rubber strength index | 100 | 101 | 100 | 106 | 106 |
| | Low-heat-build-up property index | 100 | 136 | 158 | 135 | 160 |
| | Handling performance | 100 | 138 | 145 | 139 | 147 |
| | Braking performance on ice | 100 | 116 | 129 | 132 | 136 |
| | Abrasion resistance index | 100 | 106 | 105 | 111 | 116 |
| | Wet-grip performance index | 100 | 112 | 123 | 139 | 143 |
| | Dry handling stability | 4 | 4.25 | 4.25 | 4.25 | 4.25 |

Examples in which a compound represented by the formula (IIIb) is used as a terminal modifier

| | | Example | | | | | | | | | Comparative Example | | | | | |
|---|---|---|---|---|---|---|---|---|---|---|---|---|---|---|---|---|
| | | 29 | 30 | 31 | 32 | 33 | 34 | 35 | 36 | 37 | 16 | 1 | 4 | 5 | 6 | 17 |
| Formulation (parts by mass) | Copolymer (8) | – | – | – | – | – | – | – | – | – | – | 20 | – | – | – | – |
| | Copolymer (12) | – | – | – | – | – | – | – | – | – | – | – | 20 | – | – | – |
| | Copolymer (14) | – | – | – | – | – | – | – | – | – | – | – | – | 20 | – | – |
| | Copolymer (15) | – | – | – | – | – | – | – | – | – | – | – | – | – | 20 | 10 |
| | Copolymer (19) | – | – | – | – | – | – | – | – | – | – | – | – | – | – | 10 |
| | Copolymer (33) | 20 | – | – | – | – | – | – | – | – | – | – | – | – | – | – |
| | Copolymer (34) | – | 20 | – | – | – | – | – | – | – | – | – | – | – | – | – |
| | Copolymer (35) | – | – | 20 | – | – | – | – | – | – | – | – | – | – | – | – |
| | Copolymer (36) | – | – | – | 20 | – | – | – | – | – | – | – | – | – | – | – |
| | Copolymer (37) | – | – | – | – | 20 | – | – | – | – | – | – | – | – | – | – |
| | Copolymer (38) | – | – | – | – | – | 20 | – | – | – | – | – | – | – | – | – |
| | Copolymer (39) | – | – | – | – | – | – | 20 | – | – | – | – | – | – | – | – |
| | Copolymer (40) | – | – | – | – | – | – | – | 20 | – | – | – | – | – | – | – |
| | Copolymer (41) | – | – | – | – | – | – | – | – | 20 | – | – | – | – | – | – |
| | Copolymer (42) | – | – | – | – | – | – | – | – | – | 20 | – | – | – | – | – |
| | Natural rubber | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 | 75 | 75 |
| | Silane coupling agent A | – | – | – | – | – | – | – | – | – | – | – | – | – | – | – |
| | Silane coupling agent B | – | – | – | – | – | – | – | – | – | – | – | – | – | – | – |
| | Silane coupling agent C | 3.75 | 3.75 | 3.75 | 3.75 | 3.75 | 3.75 | 3.75 | 3.75 | 3.75 | 3.75 | 3.75 | 3.75 | 3.75 | 3.75 | 3.75 |
| | Carbon black | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 102 | 103 | 101 | 101 | 101 | 101 | 101 | 101 | 100 | 103 | 100 | 106 | 101 | 100 | 97 |
| | Low-heat-build-up property index | 120 | 124 | 110 | 108 | 109 | 111 | 110 | 111 | 104 | 120 | 100 | 91 | 103 | 97 | 107 |
| | Handling performance | 121 | 125 | 110 | 108 | 110 | 112 | 110 | 112 | 105 | 121 | 100 | 94 | 104 | 98 | 110 |
| | Braking performance on ice | 102 | 101 | 106 | 103 | 104 | 102 | 101 | 102 | 106 | 100 | 100 | 103 | 104 | 98 | 95 |
| | Abrasion resistance index | 107 | 107 | 106 | 116 | 106 | 105 | 115 | 109 | 112 | 97 | 100 | 97 | 95 | 92 | 105 |
| | Wet-grip performance index | 103 | 104 | 111 | 106 | 108 | 105 | 104 | 106 | 108 | 99 | 100 | 98 | 96 | 96 | 95 |
| | Dry handling stability | 4 | 4 | 4 | 4 | 4 | 4 | 4 | 4 | 4 | 4 | 4 | 4 | 4 | 4 | 4 |

[Table 11]

Examples in which a compound containing an alkoxysilyl group, a nitrogen atom and a carbonyl group is used as a terminal modifier

| | | Example | | | | | | | Comparative Example | | | | | |
|---|---|---|---|---|---|---|---|---|---|---|---|---|---|---|
| | | 38 | 39 | 40 | 41 | 42 | 43 | 44 | 18 | 1 | 4 | 5 | 6 | 19 |
| Formulation (parts by mass) | Copolymer (8) | — | — | — | — | — | — | — | — | 20 | — | — | — | — |
| | Copolymer (12) | — | — | — | — | — | — | — | — | — | 20 | - | - | - |
| | Copolymer (14) | — | — | — | — | — | — | — | — | — | — | 20 | — | — |
| | Copolymer (15) | — | — | — | — | — | — | — | — | — | — | — | 20 | 10 |
| | Copolymer (19) | — | — | — | — | — | — | — | — | — | — | — | — | 10 |
| | Copolymer (43) | 20 | — | — | — | — | — | — | — | — | — | — | — | — |
| | Copolymer (44) | — | 20 | — | — | — | — | — | — | — | — | — | — | — |
| | Copolymer (45) | — | — | 20 | — | — | — | — | — | — | — | — | — | — |
| | Copolymer (46) | — | — | — | 20 | — | — | — | — | — | — | — | — | — |
| | Copolymer (47) | — | — | — | — | 20 | — | — | — | — | — | — | — | — |
| | Copolymer (48) | — | — | — | — | — | 20 | — | — | — | — | — | — | — |
| | Copolymer (49) | — | — | — | — | — | — | 20 | — | — | — | — | — | — |
| | Copolymer (50) | — | — | — | — | — | — | — | 20 | — | — | — | — | — |
| | Natural rubber | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 |
| | Silane coupling agent A | — | — | — | — | — | — | — | — | — | — | — | — | — |
| | Silane coupling agent B | — | — | — | — | — | — | — | — | — | — | — | — | — |
| | Silane coupling agent C | 3.75 | 3.75 | 3.75 | 3.75 | 3.75 | 3.75 | 3.75 | 3.75 | 3.75 | 3.75 | 3.75 | 3.75 | 3.75 |
| | Carbon black | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 104 | 103 | 104 | 104 | 105 | 103 | 103 | 100 | 100 | 106 | 101 | 100 | 97 |
| | Low-heat-build-up property index | 106 | 104 | 107 | 107 | 108 | 105 | 105 | 106 | 100 | 91 | 103 | 97 | 107 |
| | Handling performance | 107 | 105 | 107 | 108 | 110 | 106 | 105 | 106 | 100 | 94 | 104 | 98 | 110 |
| | Braking performance on ice | 101 | 107 | 106 | 105 | 108 | 107 | 108 | 100 | 100 | 103 | 104 | 98 | 95 |
| | Abrasion resistance index | 110 | 109 | 105 | 106 | 107 | 105 | 106 | 100 | 100 | 97 | 95 | 92 | 105 |
| | Wet-grip performance index | 104 | 110 | 108 | 111 | 112 | 110 | 112 | 101 | 100 | 98 | 96 | 96 | 95 |
| | Dry handling stability | 4 | 4 | 4 | 4 | 4 | 4 | 4 | 4 | 4 | 4 | 4 | 4 | 3.5 |

[Table 12]

Examples in which an N,N-dialkyl-substituted carboxylic acid amide dialkyl acetal compound is used as a terminal modifier

| | | Example | | | | | | | Comparative Example | | | | | |
|---|---|---|---|---|---|---|---|---|---|---|---|---|---|---|
| | | 45 | 46 | 47 | 48 | 49 | 50 | 51 | 20 | 1 | 4 | 5 | 6 | 21 |
| Formulation (parts by mass) | Copolymer (8) | – | – | – | – | – | – | – | – | 20 | – | – | – | – |
| | Copolymer (12) | – | – | – | – | – | – | – | – | – | 20 | - | - | - |
| | Copolymer (14) | – | – | – | – | – | – | – | – | – | – | 20 | – | – |
| | Copolymer (15) | – | – | – | – | – | – | – | – | – | – | – | 20 | 10 |
| | Copolymer (19) | – | – | – | – | – | – | – | – | – | – | – | – | 10 |
| | Copolymer (51) | 20 | – | – | – | – | – | – | – | – | – | – | – | – |
| | Copolymer (52) | – | 20 | – | – | – | – | – | – | – | – | – | – | – |
| | Copolymer (53) | – | – | 20 | – | – | – | – | – | – | – | – | – | – |
| | Copolymer (54) | – | – | – | 20 | – | – | – | – | – | – | – | – | – |
| | Copolymer (55) | – | – | – | – | 20 | – | – | – | – | – | – | – | – |
| | Copolymer (56) | – | – | – | – | – | 20 | – | – | – | – | – | – | – |
| | Copolymer (57) | – | – | – | – | – | – | 20 | – | – | – | – | – | – |
| | Copolymer (58) | – | – | – | – | – | – | – | 20 | – | – | – | – | – |
| | Natural rubber | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 |
| | Silane coupling agent A | – | – | – | – | – | – | – | – | – | – | – | – | – |
| | Silane coupling agent B | – | – | – | – | – | – | – | – | – | – | – | – | – |
| | Silane coupling agent C | 3.75 | 3.75 | 3.75 | 3.75 | 3.75 | 3.75 | 3.75 | 3.75 | 3.75 | 3.75 | 3.75 | 3.75 | 3.75 |
| | Carbon black | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 104 | 104 | 104 | 104 | 105 | 101 | 103 | 100 | 100 | 106 | 101 | 100 | 97 |
| | Low-heat-build-up property index | 106 | 106 | 105 | 106 | 109 | 103 | 104 | 105 | 100 | 91 | 103 | 97 | 107 |
| | Handling performance | 108 | 107 | 106 | 106 | 111 | 105 | 104 | 105 | 100 | 94 | 104 | 98 | 110 |
| | Braking performance on ice | 101 | 105 | 108 | 106 | 110 | 106 | 108 | 99 | 100 | 103 | 104 | 98 | 95 |
| | Abrasion resistance index | 111 | 110 | 106 | 105 | 106 | 105 | 105 | 101 | 100 | 97 | 95 | 92 | 105 |
| | Wet-grip performance index | 103 | 108 | 112 | 109 | 114 | 109 | 111 | 100 | 100 | 98 | 96 | 96 | 95 |
| | Dry handling stability | 4 | 4 | 4 | 4 | 4 | 4 | 4 | 4 | 4 | 4 | 4 | 4 | 3.5 |

[Table 13]

Examples in which a compound represented by the formula (IIId) is used as a terminal modifier

| | | Example | | | | | | | | | | Comparative Example | | | | | | | | | | | | |
|---|---|---|---|---|---|---|---|---|---|---|---|---|---|---|---|---|---|---|---|---|---|---|---|---|
| | | 52 | 53 | 54 | 55 | 56 | 57 | 58 | 59 | 60 | 61 | 22 | 23 | 24 | 25 | 26 | 27 | 28 | 29 | 30 | 31 | 32 | 33 | 34 |
| Formulation (parts by mass) | Copolymer (1) | 20 | — | — | — | — | — | — | — | — | — | — | — | — | — | — | — | — | — | — | — | — | — | — |
| | Copolymer (2) | — | 20 | — | — | — | — | — | — | — | — | — | — | — | — | — | — | — | — | — | — | — | — | — |
| | Copolymer (3) | — | — | 20 | — | — | — | — | — | — | — | — | — | — | — | — | — | — | — | — | — | — | — | — |
| | Copolymer (4) | — | — | — | 20 | — | — | — | — | — | — | — | — | — | — | — | — | — | — | — | — | — | — | — |
| | Copolymer (5) | — | — | — | — | 20 | — | — | — | — | — | — | — | — | — | — | — | — | — | — | — | — | — | — |
| | Copolymer (6) | — | — | — | — | — | — | — | 20 | — | — | — | — | — | — | — | — | — | — | — | — | — | — | — |
| | Copolymer (7) | — | — | — | — | — | 20 | — | — | — | — | — | — | — | — | — | — | — | — | — | — | — | — | — |
| | Copolymer (8) | — | — | — | — | — | — | — | 20 | 20 | 20 | 20 | — | — | — | — | — | — | — | 20 | 20 | 20 | 20 | — |
| | Copolymer (9) | — | — | — | — | — | — | — | — | — | — | — | — | — | — | — | — | — | — | 20 | — | — | — | — |
| | Copolymer (10) | — | — | — | — | — | — | — | — | — | — | — | 20 | — | — | — | — | — | — | — | — | — | — | — |
| | Copolymer (11) | — | — | — | — | — | — | — | — | — | — | — | — | 20 | — | — | — | — | — | — | — | — | — | — |
| | Copolymer (12) | — | — | — | — | — | — | — | — | — | — | — | — | — | 20 | — | — | — | — | — | — | — | — | — |
| | Copolymer (13) | — | — | — | — | — | — | 20 | — | — | — | — | — | — | — | — | — | — | — | — | — | — | — | — |
| | Copolymer (14) | — | — | — | — | — | — | — | — | — | — | — | — | — | — | 20 | — | — | — | — | — | — | — | — |
| | Copolymer (15) | — | — | — | — | — | — | — | — | — | — | — | — | — | — | — | 20 | — | — | — | — | — | — | — |
| | Copolymer (16) | — | — | — | — | — | — | — | — | — | — | — | — | — | — | — | — | 20 | — | — | — | — | — | — |
| | Copolymer (17) | — | — | — | — | — | — | — | — | — | — | — | — | — | — | — | — | — | 20 | — | — | — | — | — |
| | Copolymer (18) | — | — | — | — | — | — | — | — | 20 | — | — | — | — | — | — | — | — | — | — | — | — | — | — |
| | Copolymer (19) | — | — | — | — | — | — | — | — | — | — | — | — | — | — | — | — | — | — | — | 20 | — | — | — |
| | Copolymer (20) | — | — | — | — | — | — | — | — | — | — | — | — | — | — | — | — | — | — | — | — | 20 | — | — |
| | Copolymer (21) | — | — | — | — | — | — | — | — | — | 20 | — | — | — | — | — | — | — | — | — | — | — | — | — |
| | Natural rubber | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 20 | 20 | 20 | 40 | 40 | 40 | 40 | 40 | 40 | 40 | 40 | 20 | 20 | 20 | 40 | 60 |
| | Silica A | — | — | — | — | — | — | — | — | — | — | — | — | — | — | — | — | — | — | — | — | — | 75 | — |
| | Silica B | 55 | 55 | 55 | 55 | 55 | 55 | 55 | 55 | 55 | 55 | 55 | 55 | 55 | 55 | 55 | 55 | 55 | 55 | 55 | 55 | 55 | — | 55 |
| | Silica C | 20 | 20 | 20 | 20 | 20 | 20 | 20 | 20 | 20 | 20 | 20 | 20 | 20 | 20 | 20 | 20 | 20 | 20 | 20 | 20 | 20 | — | 20 |
| | Silane coupling agent A | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 103 | 104 | 105 | 102 | 101 | 103 | 107 | 105 | 101 | 103 | 100 | 105 | 103 | 106 | 103 | 101 | 105 | 102 | 98 | 99 | 100 | 95 | 99 |
| | Low-heat-build-up property index | 129 | 131 | 130 | 141 | 138 | 139 | 114 | 127 | 133 | 114 | 100 | 97 | 98 | 94 | 105 | 99 | 98 | 102 | 106 | 107 | 99 | 107 | 117 |
| | Handling performance | 124 | 126 | 127 | 137 | 134 | 137 | 108 | 122 | 125 | 110 | 100 | 91 | 95 | 90 | 100 | 94 | 94 | 101 | 102 | 104 | 95 | 105 | 105 |
| | Braking performance on ice | 107 | 109 | 110 | 113 | 114 | 116 | 113 | 107 | 104 | 105 | 100 | 99 | 97 | 103 | 104 | 98 | 94 | 99 | 96 | 94 | 90 | 103 | 97 |
| | Abrasion resistance index | 105 | 107 | 105 | 103 | 105 | 106 | 106 | 103 | 102 | 100 | 100 | 100 | 98 | 95 | 93 | 90 | 95 | 88 | 103 | 104 | 95 | 98 | 110 |
| | Wet-grip performance index | 110 | 111 | 110 | 110 | 110 | 113 | 111 | 110 | 110 | 109 | 100 | 103 | 102 | 99 | 97 | 97 | 97 | 100 | 108 | 107 | 103 | 97 | 82 |
| | Dry handling stability | 4.25 | 4.25 | 4.25 | 4.25 | 4.25 | 4.25 | 4.25 | 4 | 4 | 4 | 4 | 4 | 4 | 4 | 4 | 4 | 4 | 4 | 3.5 | 3.5 | 3.5 | 4.25 | 3 |

[Table 14]

Examples in which a compound represented by the formula (IV) is used as a terminal modifier

| | | Example | | | | | | | Comparative Example | | | | | | Example | | |
|---|---|---|---|---|---|---|---|---|---|---|---|---|---|---|---|---|---|
| | | 62 | 63 | 64 | 65 | 66 | 67 | 68 | 35 | 22 | 25 | 26 | 27 | 36 | 69 | 70 | 71 |
| Formulation (parts by mass) | Copolymer (8) | — | — | — | — | — | — | — | — | 20 | — | — | — | — | 10 | 10 | 10 |
| | Copolymer (12) | — | — | — | — | — | — | — | — | — | 20 | — | — | — | — | — | — |
| | Copolymer (14) | — | — | — | — | — | — | — | — | — | — | 20 | — | — | — | — | — |
| | Copolymer (15) | — | — | — | — | — | — | — | — | — | — | — | 20 | 10 | — | — | — |
| | Copolymer (19) | — | — | — | — | — | — | — | — | — | — | — | — | 10 | — | — | — |
| | Copolymer (22) | 20 | — | — | — | — | — | — | — | — | — | — | — | — | — | — | — |
| | Copolymer (23) | — | 20 | — | — | — | — | — | — | — | — | — | — | — | — | — | — |
| | Copolymer (24) | — | — | 20 | — | — | — | — | — | — | — | — | — | — | — | — | — |
| | Copolymer (25) | — | — | — | 20 | — | — | — | — | — | — | — | — | — | — | — | — |
| | Copolymer (26) | — | — | — | — | 20 | — | — | — | — | — | — | — | — | — | — | — |
| | Copolymer (27) | — | — | — | — | — | — | — | — | — | — | — | — | — | 10 | — | — |
| | Copolymer (28) | — | — | — | — | — | 20 | — | — | — | — | — | — | — | — | — | — |
| | Copolymer (29) | — | — | — | — | — | — | 20 | — | — | — | — | — | — | — | — | — |
| | Copolymer (30) | — | — | — | — | — | — | — | 20 | — | — | — | — | — | — | — | — |
| | Copolymer (31) | — | — | — | — | — | — | — | — | — | — | — | — | — | — | 10 | — |
| | Copolymer (32) | — | — | — | — | — | — | — | — | — | — | — | — | — | — | — | 10 |
| | Natural rubber | 40 | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 | 40 | 40 | 40 |
| | Silica A | — | — | — | — | — | — | — | — | — | — | — | — | — | — | — | — |
| | Silica B | 55 | 55 | 55 | 55 | 55 | 55 | 55 | 55 | 55 | 55 | 55 | 55 | 55 | 55 | 55 | 55 |
| | Silica C | 20 | 20 | 20 | 20 | 20 | 20 | 20 | 20 | 20 | 20 | 20 | 20 | 20 | 20 | 20 | 20 |
| | Silane coupling agent A | 6 | 6 | 6 | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 107 | 106 | 105 | 107 | 108 | 107 | 111 | 95 | 100 | 106 | 103 | 101 | 101 | 103 | 106 | 106 |
| | Low-heat-build-up property index | 130 | 125 | 126 | 126 | 121 | 126 | 116 | 99 | 100 | 94 | 105 | 99 | 109 | 110 | 111 | 109 |
| | Handling performance | 130 | 128 | 127 | 126 | 125 | 125 | 115 | 101 | 100 | 90 | 100 | 94 | 110 | 106 | 112 | 110 |
| | Braking performance on ice | 105 | 100 | 100 | 105 | 105 | 100 | 100 | 98 | 100 | 103 | 104 | 98 | 96 | 105 | 107 | 107 |
| | Abrasion resistance index | 113 | 110 | 115 | 113 | 110 | 110 | 111 | 95 | 100 | 95 | 93 | 90 | 102 | 108 | 110 | 111 |
| | Wet-grip performance index | 107 | 106 | 104 | 108 | 109 | 107 | 105 | 97 | 100 | 99 | 97 | 97 | 94 | 108 | 107 | 106 |
| | Dry handling stability | 4 | 4 | 4 | 4 | 4 | 4 | 4 | 4 | 4 | 4 | 4 | 4 | 3.5 | 4 | 4 | 4 |

[Table 15]

Examples in which a compound represented by the formula (IIId) is used as a terminal modifier

| | | Com. Ex. | | Ex. | | | | | | Com. Ex. | | Ex. |
|---|---|---|---|---|---|---|---|---|---|---|---|---|
| | | 22 | 25 | 57 | 72 | 73 | 74 | 75 | 76 | 37 | 38 | 77 |
| Formulation (parts by mass) | Copolymer (7) | — | — | 20 | 20 | 20 | 20 | 20 | 20 | 20 | 20 | 20 |
| | Copolymer (8) | 20 | — | — | — | — | — | — | — | — | — | — |
| | Copolymer (12) | — | 20 | — | — | — | — | — | — | — | — | — |
| | Natural rubber | 40 | 40 | 40 | 40 | 40 | 40 | 40 | 40 | 40 | 40 | 55 |
| | High-cis polybutadiene | 40 | 40 | 40 | 40 | 40 | 40 | 40 | 40 | 40 | 40 | 25 |
| | Silica A | — | — | — | — | — | — | 10 | 10 | — | — | — |
| | Silica B | 55 | 55 | 55 | 70 | 60 | 40 | 45 | 55 | 130 | 3 | 55 |
| | Silica C | 20 | 20 | 20 | 5 | 15 | 35 | 20 | 10 | 30 | 1 | 20 |
| | Silane coupling agent A | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 |
| Evaluation | Rubber strength index | 100 | 106 | 103 | 110 | 105 | 107 | 104 | 108 | 58 | 86 | 115 |
| | Low-heat-build-up property index | 100 | 94 | 139 | 118 | 133 | 142 | 140 | 135 | 95 | 148 | 138 |
| | Handling performance | 100 | 90 | 137 | 130 | 133 | 135 | 139 | 138 | 98 | 86 | 135 |
| | Braking performance on ice | 100 | 103 | 116 | 105 | 113 | 121 | 115 | 116 | 90 | 84 | 103 |
| | Abrasion resistance index | 100 | 95 | 106 | 109 | 105 | 105 | 108 | 106 | 85 | 66 | 100 |
| | Wet-grip performance index | 100 | 99 | 113 | 102 | 116 | 121 | 118 | 116 | 127 | 118 | 104 |
| | Dry handling stability | 4 | 4 | 4.25 | 4.25 | 4.25 | 4 | 4.25 | 4.5 | 3 | 3 | 4.25 |

[Table 16]

Examples in which a compound represented by the formula (IIId) is used as a terminal modifier

| | | Com. Ex. | Ex. | |
|---|---|---|---|---|
| | | 22 | 57 | 78 |
| Formulation (parts by mass) | Copolymer (7) | — | 20 | 20 |
| | Copolymer (8) | 20 | — | — |
| | Copolymer (12) | — | — | — |
| | Natural rubber | 40 | 40 | 40 |
| | High-cis polybutadiene | 40 | 40 | 40 |
| | Silica A | 20 | 20 | 20 |
| | Silica B | 55 | 55 | 55 |
| | Silica C | — | — | — |
| | Silane coupling agent A | 6 | 6 | 6 |
| | Carbon black | 5 | 5 | 5 |
| | Oil | 40 | 40 | 40 |
| | Coumarone indene resin | — | — | 5 |
| | Antioxidant | 1.5 | 1.5 | 1.5 |
| | Stearic acid | 2 | 2 | 2 |
| | Zinc oxide | 2.5 | 2.5 | 2.5 |
| | Wax | 1 | 1 | 1 |
| | Sulfur | 2 | 2 | 2 |
| | Vulcanization accelerator 1 | 1.8 | 1.8 | 1.8 |
| | Vulcanization accelerator 2 | 1.2 | 1.2 | 1.2 |
| Evaluation | Rubber strength index | 100 | 103 | 107 |
| | Low-heat-build-up property index | 100 | 139 | 139 |
| | Handling performance | 100 | 137 | 138 |
| | Braking performance on ice | 100 | 116 | 135 |
| | Abrasion resistance index | 100 | 106 | 112 |
| | Wet-grip performance index | 100 | 113 | 140 |
| | Dry handling stability | 4 | 4.25 | 4.25 |

[Table 17]

Examples in which a compound represented by the formula (IIIb) is used as a terminal modifier

| | | Example | | | | | | | | | Comparative Example | | | | | |
|---|---|---|---|---|---|---|---|---|---|---|---|---|---|---|---|---|
| | | 79 | 80 | 81 | 82 | 83 | 84 | 85 | 86 | 87 | 39 | 22 | 25 | 26 | 27 | 40 |
| Formulation (parts by mass) | Copolymer (8) | — | — | — | — | — | — | — | — | — | — | 20 | — | — | — | — |
| | Copolymer (12) | — | — | — | — | — | — | — | — | — | — | — | 20 | — | — | — |
| | Copolymer (14) | — | — | — | — | — | — | — | — | — | — | — | — | 20 | — | — |
| | Copolymer (15) | — | — | — | — | — | — | — | — | — | — | — | — | — | 20 | 10 |
| | Copolymer (19) | — | — | — | — | — | — | — | — | — | — | — | — | — | — | 10 |
| | Copolymer (33) | 20 | — | — | — | — | — | — | — | — | — | — | — | — | — | — |
| | Copolymer (34) | — | 20 | — | — | — | — | — | — | — | — | — | — | — | — | — |
| | Copolymer (35) | — | — | 20 | — | — | — | — | — | — | — | — | — | — | — | — |
| | Copolymer (36) | — | — | — | 20 | — | — | — | — | — | — | — | — | — | — | — |
| | Copolymer (37) | — | — | — | — | 20 | — | — | — | — | — | — | — | — | — | — |
| | Copolymer (38) | — | — | — | — | — | 20 | — | — | — | — | — | — | — | — | — |
| | Copolymer (39) | — | — | — | — | — | — | 20 | — | — | — | — | — | — | — | — |
| | Copolymer (40) | — | — | — | — | — | — | — | 20 | — | — | — | — | — | — | — |
| | Copolymer (41) | — | — | — | — | — | — | — | — | 20 | — | — | — | — | — | — |
| | Copolymer (42) | — | — | — | — | — | — | — | — | — | 20 | — | — | — | — | — |
| | Natural rubber | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 | 40 | 40 |
| | Silica A | — | — | — | — | — | — | — | — | — | — | — | — | — | — | — |
| | Silica B | 55 | 55 | 55 | 55 | 55 | 55 | 55 | 55 | 55 | 55 | 55 | 55 | 55 | 55 | 55 |
| | Silica C | 20 | 20 | 20 | 20 | 20 | 20 | 20 | 20 | 20 | 20 | 20 | 20 | 20 | 20 | 20 |
| | Silane coupling agent A | 6 | 6 | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 104 | 105 | 103 | 103 | 103 | 103 | 103 | 103 | 102 | 105 | 100 | 106 | 103 | 101 | 99 |
| | Low-heat-build-up property index | 118 | 122 | 108 | 106 | 107 | 109 | 108 | 109 | 102 | 118 | 100 | 94 | 105 | 99 | 105 |
| | Handling performance | 120 | 124 | 109 | 107 | 109 | 110 | 108 | 111 | 103 | 120 | 100 | 90 | 100 | 94 | 105 |
| | Braking performance on ice | 101 | 103 | 109 | 104 | 106 | 105 | 102 | 105 | 106 | 99 | 100 | 103 | 104 | 98 | 95 |
| | Abrasion resistance index | 109 | 109 | 108 | 118 | 108 | 107 | 117 | 111 | 114 | 99 | 100 | 95 | 93 | 90 | 107 |
| | Wet-grip performance index | 104 | 105 | 112 | 107 | 109 | 106 | 105 | 107 | 109 | 100 | 100 | 99 | 97 | 97 | 96 |
| | Dry handling stability | 4 | 4 | 4 | 4 | 4 | 4 | 4 | 4 | 4 | 4 | 4 | 4 | 4 | 4 | 3.5 |

[Table 18]

Examples in which a compound containing an alkoxysilyl group, a nitrogen atom and a carbonyl group is used as a terminal modifier

| | | Example | | | | | | | Comparative Example | | | | | |
|---|---|---|---|---|---|---|---|---|---|---|---|---|---|---|
| | | 88 | 89 | 90 | 91 | 92 | 93 | 94 | 41 | 22 | 25 | 26 | 27 | 42 |
| Formulation (parts by mass) | Copolymer (8) | – | – | – | – | – | – | – | – | 20 | – | – | – | – |
| | Copolymer (12) | – | – | – | – | – | – | – | – | – | 20 | – | – | – |
| | Copolymer (14) | – | – | – | – | – | – | – | – | – | – | 20 | – | – |
| | Copolymer (15) | – | – | – | – | – | – | – | – | – | – | – | 20 | 10 |
| | Copolymer (19) | – | – | – | – | – | – | – | – | – | – | – | – | 10 |
| | Copolymer (43) | 20 | – | – | – | – | – | – | – | – | – | – | – | – |
| | Copolymer (44) | – | 20 | – | – | – | – | – | – | – | – | – | – | – |
| | Copolymer (45) | – | – | 20 | – | – | – | – | – | – | – | – | – | – |
| | Copolymer (46) | – | – | – | 20 | – | – | – | – | – | – | – | – | – |
| | Copolymer (47) | – | – | – | – | 20 | – | – | – | – | – | – | – | – |
| | Copolymer (48) | – | – | – | – | – | 20 | – | – | – | – | – | – | – |
| | Copolymer (49) | – | – | – | – | – | – | 20 | – | – | – | – | – | – |
| | Copolymer (50) | – | – | – | – | – | – | – | 20 | – | – | – | – | – |
| | Natural rubber | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 |
| | Silica A | – | – | – | – | – | – | – | – | – | – | – | – | – |
| | Silica B | 55 | 55 | 55 | 55 | 55 | 55 | 55 | 55 | 55 | 55 | 55 | 55 | 55 |
| | Silica C | 20 | 20 | 20 | 20 | 20 | 20 | 20 | 20 | 20 | 20 | 20 | 20 | 20 |
| | Silane coupling agent A | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 106 | 105 | 106 | 106 | 107 | 105 | 105 | 102 | 100 | 106 | 103 | 101 | 99 |
| | Low-heat-build-up property index | 105 | 103 | 106 | 106 | 107 | 104 | 104 | 105 | 100 | 94 | 105 | 99 | 106 |
| | Handling performance | 106 | 104 | 108 | 106 | 107 | 105 | 105 | 105 | 100 | 90 | 100 | 94 | 107 |
| | Braking performance on ice | 103 | 109 | 106 | 108 | 108 | 107 | 109 | 100 | 100 | 103 | 104 | 98 | 95 |
| | Abrasion resistance index | 112 | 111 | 107 | 108 | 109 | 107 | 108 | 102 | 100 | 95 | 93 | 90 | 107 |
| | Wet-grip performance index | 105 | 111 | 109 | 112 | 113 | 111 | 113 | 102 | 100 | 99 | 97 | 97 | 96 |
| | Dry handling stability | 4 | 4 | 4 | 4 | 4 | 4 | 4 | 4 | 4 | 4 | 4 | 4 | 3.5 |

[Table 19]

Examples in which an N,N-dialkyl-substituted carboxylic acid amide dialkyl acetal compound is used as a terminal modifier

| | | Example | | | | | | | Comparative Example | | | | | |
|---|---|---|---|---|---|---|---|---|---|---|---|---|---|---|
| | | 95 | 96 | 97 | 98 | 99 | 100 | 101 | 43 | 22 | 25 | 26 | 27 | 44 |
| Formulation (parts by mass) | Copolymer (8) | – | – | – | – | – | – | – | – | 20 | – | – | – | – |
| | Copolymer (12) | – | – | – | – | – | – | – | – | – | 20 | – | – | – |
| | Copolymer (14) | – | – | – | – | – | – | – | – | – | – | 20 | – | – |
| | Copolymer (15) | – | – | – | – | – | – | – | – | – | – | – | 20 | 10 |
| | Copolymer (19) | – | – | – | – | – | – | – | – | – | – | – | – | 10 |
| | Copolymer (51) | 20 | – | – | – | – | – | – | – | – | – | – | – | – |
| | Copolymer (52) | – | 20 | – | – | – | – | – | – | – | – | – | – | – |
| | Copolymer (53) | – | – | 20 | – | – | – | – | – | – | – | – | – | – |
| | Copolymer (54) | – | – | – | 20 | – | – | – | – | – | – | – | – | – |
| | Copolymer (55) | – | – | – | – | 20 | – | – | – | – | – | – | – | – |
| | Copolymer (56) | – | – | – | – | – | 20 | – | – | – | – | – | – | – |
| | Copolymer (57) | – | – | – | – | – | – | 20 | – | – | – | – | – | – |
| | Copolymer (58) | – | – | – | – | – | – | – | 20 | – | – | – | – | – |
| | Natural rubber | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 |
| | Silica A | – | – | – | – | – | – | – | – | – | – | – | – | – |
| | Silica B | 55 | 55 | 55 | 55 | 55 | 55 | 55 | 55 | 55 | 55 | 55 | 55 | 55 |
| | Silica C | 20 | 20 | 20 | 20 | 20 | 20 | 20 | 20 | 20 | 20 | 20 | 20 | 20 |
| | Silane coupling agent A | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 |
| | Antioxidant | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 106 | 106 | 106 | 106 | 107 | 103 | 105 | 102 | 100 | 106 | 103 | 101 | 99 |
| | Low-heat-build-up property index | 105 | 105 | 104 | 105 | 108 | 102 | 103 | 104 | 100 | 94 | 105 | 99 | 106 |
| | Handling performance | 106 | 107 | 106 | 105 | 111 | 103 | 103 | 105 | 100 | 90 | 100 | 94 | 108 |
| | Braking performance on ice | 102 | 106 | 107 | 107 | 110 | 105 | 107 | 99 | 100 | 103 | 104 | 98 | 95 |
| | Abrasion resistance index | 113 | 112 | 108 | 107 | 108 | 107 | 107 | 103 | 100 | 95 | 93 | 90 | 107 |
| | Wet-grip performance index | 104 | 109 | 113 | 110 | 115 | 110 | 112 | 101 | 100 | 99 | 97 | 97 | 96 |
| | Dry handling stability | 4 | 4 | 4 | 4 | 4 | 4 | 4 | 4 | 4 | 4 | 4 | 4 | 3.5 |

[Table 20]

Examples in which a compound represented by the formula (IIId) is used as a terminal modifier

| | | Example | | | | | | | | | | Comparative Example | | | | | | | | | | | | |
|---|---|---|---|---|---|---|---|---|---|---|---|---|---|---|---|---|---|---|---|---|---|---|---|---|
| | | 102 | 103 | 104 | 105 | 106 | 107 | 108 | 109 | 110 | 111 | 45 | 46 | 47 | 48 | 49 | 50 | 51 | 52 | 53 | 54 | 55 | 56 | 57 |
| Formulation (parts by mass) | Copolymer (1) | 20 | — | — | — | — | — | — | — | — | — | — | — | — | — | — | — | — | — | — | — | — | — | — |
| | Copolymer (2) | — | 20 | — | — | — | — | — | — | — | — | — | — | — | — | — | — | — | — | — | — | — | — | — |
| | Copolymer (3) | — | — | 20 | — | — | — | — | — | — | — | — | — | — | — | — | — | — | — | — | — | — | — | — |
| | Copolymer (4) | — | — | — | 20 | — | — | — | — | — | — | — | — | — | — | — | — | — | — | — | — | — | — | — |
| | Copolymer (5) | — | — | — | — | 20 | — | — | — | — | — | — | — | — | — | — | — | — | — | — | — | — | — | — |
| | Copolymer (6) | — | — | — | — | — | — | — | 20 | — | — | — | — | — | — | — | — | — | — | — | — | — | — | — |
| | Copolymer (7) | — | — | — | — | — | 20 | — | — | — | — | — | — | — | — | — | — | — | — | — | — | — | — | — |
| | Copolymer (8) | — | — | — | — | — | — | — | 20 | 20 | 20 | 20 | — | — | — | — | — | — | — | 20 | 20 | 20 | 20 | — |
| | Copolymer (9) | — | — | — | — | — | — | — | — | — | — | — | — | — | — | — | — | — | — | 20 | — | — | — | — |
| | Copolymer (10) | — | — | — | — | — | — | — | — | — | — | — | 20 | — | — | — | — | — | — | — | — | — | — | — |
| | Copolymer (11) | — | — | — | — | — | — | — | — | — | — | — | — | 20 | — | — | — | — | — | — | — | — | — | — |
| | Copolymer (12) | — | — | — | — | — | — | — | — | — | — | — | — | — | 20 | — | — | — | — | — | — | — | — | — |
| | Copolymer (13) | — | — | — | — | — | — | 20 | — | — | — | — | — | — | — | — | — | — | — | — | — | — | — | — |
| | Copolymer (14) | — | — | — | — | — | — | — | — | — | — | — | — | — | — | 20 | — | — | — | — | — | — | — | — |
| | Copolymer (15) | — | — | — | — | — | — | — | — | — | — | — | — | — | — | — | 20 | — | — | — | — | — | — | — |
| | Copolymer (16) | — | — | — | — | — | — | — | — | — | — | — | — | — | — | — | — | 20 | — | — | — | — | — | — |
| | Copolymer (17) | — | — | — | — | — | — | — | — | — | — | — | — | — | — | — | — | — | 20 | — | — | — | — | — |
| | Copolymer (18) | — | — | — | — | — | — | — | — | 20 | — | — | — | — | — | — | — | — | — | — | — | — | — | — |
| | Copolymer (19) | — | — | — | — | — | — | — | — | — | — | — | — | — | — | — | — | — | — | — | 20 | — | — | — |
| | Copolymer (20) | — | — | — | — | — | — | — | — | — | — | — | — | — | — | — | — | — | — | — | — | 20 | — | — |
| | Copolymer (21) | — | — | — | — | — | — | — | — | — | 20 | — | — | — | — | — | — | — | — | — | — | — | — | — |
| | Natural rubber | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 20 | 20 | 20 | 40 | 40 | 40 | 40 | 40 | 40 | 40 | 40 | 20 | 20 | 20 | 40 | 60 |
| | Silica A | 75 | 75 | 75 | 75 | 75 | 75 | 75 | 75 | 75 | 75 | 75 | 75 | 75 | 75 | 75 | 75 | 75 | 75 | 75 | 75 | 75 | 75 | 75 |
| | Silane coupling agent A | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 |
| | Coumarone indene resin 1 (Tg: 90°C) | 5 | 5 | 5 | 5 | 5 | 5 | 5 | 5 | 5 | 5 | 5 | 5 | 5 | 5 | 5 | 5 | 5 | 5 | 5 | 5 | 5 | — | — |
| | Coumarone indene resin 2 (Tg: 10°C) | — | — | — | — | — | — | — | — | — | — | — | — | — | — | — | — | — | — | — | — | — | — | — |
| | Coumarone indene resin 3 (Tg: -30°C) | — | — | — | — | — | — | — | — | — | — | — | — | — | — | — | — | — | — | — | — | — | — | — |
| | α-Methyl styrene resin (Tg: 95°C) | — | — | — | — | — | — | — | — | — | — | — | — | — | — | — | — | — | — | — | — | — | — | — |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 103 | 104 | 105 | 102 | 101 | 101 | 104 | 101 | 100 | 102 | 100 | 103 | 101 | 106 | 101 | 100 | 102 | 100 | 97 | 97 | 99 | 93 | 97 |
| | Low-heat-build-up property index | 120 | 122 | 121 | 133 | 130 | 132 | 104 | 120 | 125 | 106 | 100 | 91 | 94 | 88 | 100 | 94 | 93 | 101 | 102 | 103 | 93 | 103 | 110 |
| | Handling performance | 125 | 127 | 126 | 138 | 135 | 137 | 109 | 125 | 130 | 111 | 100 | 96 | 99 | 93 | 105 | 99 | 98 | 106 | 107 | 108 | 98 | 108 | 110 |
| | Braking performance on ice | 108 | 109 | 110 | 115 | 114 | 116 | 112 | 107 | 105 | 106 | 100 | 99 | 98 | 102 | 104 | 98 | 95 | 100 | 95 | 95 | 90 | 103 | 95 |
| | Abrasion resistance index | 103 | 104 | 103 | 101 | 102 | 104 | 103 | 102 | 104 | 100 | 100 | 101 | 99 | 97 | 93 | 92 | 96 | 88 | 101 | 102 | 95 | 98 | 115 |
| | Wet-grip performance index | 111 | 111 | 110 | 109 | 109 | 112 | 107 | 106 | 107 | 105 | 100 | 101 | 101 | 96 | 96 | 97 | 96 | 100 | 105 | 104 | 102 | 97 | 82 |
| | Dry handling stability | 4.25 | 4.25 | 4.25 | 4.25 | 4.25 | 4.25 | 4.25 | 4 | 4 | 4 | 4 | 4 | 4 | 4 | 4 | 4 | 4 | 4 | 3.5 | 3.5 | 3.5 | 4.25 | 3 |

[Table 21]

Examples in which a compound represented by the formula (IV) is used as a terminal modifier

| | | Example | | | | | | | Comparative Example | | | | | | Example | | |
|---|---|---|---|---|---|---|---|---|---|---|---|---|---|---|---|---|---|
| | | 112 | 113 | 114 | 115 | 116 | 117 | 118 | 58 | 45 | 48 | 49 | 50 | 59 | 119 | 120 | 121 |
| Formulation (parts by mass) | Copolymer (8) | – | – | – | – | – | – | – | – | 20 | – | – | – | – | 10 | 10 | 10 |
| | Copolymer (12) | – | – | – | – | – | – | – | – | – | 20 | – | – | – | – | – | – |
| | Copolymer (14) | – | – | – | – | – | – | – | – | – | – | 20 | – | – | – | – | – |
| | Copolymer (15) | – | – | – | – | – | – | – | – | – | – | – | 20 | 10 | – | – | – |
| | Copolymer (19) | – | – | – | – | – | – | – | – | – | – | – | – | 10 | – | – | – |
| | Copolymer (22) | 20 | – | – | – | – | – | – | – | – | – | – | – | – | – | – | – |
| | Copolymer (23) | – | 20 | – | – | – | – | – | – | – | – | – | – | – | – | – | – |
| | Copolymer (24) | – | – | 20 | – | – | – | – | – | – | – | – | – | – | – | – | – |
| | Copolymer (25) | – | – | – | 20 | – | – | – | – | – | – | – | – | – | – | – | – |
| | Copolymer (26) | – | – | – | – | 20 | – | – | – | – | – | – | – | – | – | – | – |
| | Copolymer (27) | – | – | – | – | – | – | – | – | – | – | – | – | – | 10 | – | – |
| | Copolymer (28) | – | – | – | – | – | 20 | – | – | – | – | – | – | – | – | – | – |
| | Copolymer (29) | – | – | – | – | – | – | 20 | – | – | – | – | – | – | – | – | – |
| | Copolymer (30) | – | – | – | – | – | – | – | 20 | – | – | – | – | – | – | – | – |
| | Copolymer (31) | – | – | – | – | – | – | – | – | – | – | – | – | – | – | 10 | – |
| | Copolymer (32) | – | – | – | – | – | – | – | – | – | – | – | – | – | – | – | 10 |
| | Natural rubber | 40 | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 | 75 | 75 | 75 |
| | Silane coupling agent A | 6 | 6 | 6 | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 | 40 |
| | Coumarone indene resin 1 ($T_g$: 90°C) | 5 | 5 | 5 | 5 | 5 | 5 | 5 | 5 | 5 | 5 | 5 | 5 | 5 | 5 | 5 | 5 |
| | Coumarone indene resin 2 ($T_g$: 10°C) | – | – | – | – | – | – | – | – | – | – | – | – | – | – | – | – |
| | Coumarone indene resin 3 ($T_g$: -30°C) | – | – | – | – | – | – | – | – | – | – | – | – | – | – | – | – |
| | $\alpha$-Methyl styrene resin ($T_g$: 95°C) | – | – | – | – | – | – | – | – | – | – | – | – | – | – | – | – |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 107 | 106 | 105 | 107 | 108 | 105 | 109 | 95 | 100 | 106 | 101 | 100 | 97 | 104 | 105 | 104 |
| | Low-heat-build-up property index | 124 | 121 | 122 | 121 | 117 | 118 | 108 | 101 | 100 | 88 | 100 | 94 | 103 | 108 | 105 | 103 |
| | Handling performance | 129 | 126 | 127 | 126 | 122 | 123 | 113 | 102 | 100 | 93 | 105 | 99 | 108 | 110 | 110 | 108 |
| | Braking performance on ice | 105 | 100 | 100 | 105 | 105 | 100 | 100 | 98 | 100 | 102 | 104 | 98 | 95 | 103 | 105 | 105 |
| | Abrasion resistance index | 111 | 108 | 112 | 111 | 109 | 110 | 112 | 100 | 100 | 97 | 93 | 92 | 102 | 104 | 110 | 112 |
| | Wet-grip performance index | 107 | 106 | 105 | 108 | 109 | 107 | 106 | 105 | 100 | 96 | 96 | 97 | 95 | 105 | 107 | 105 |
| | Dry handling stability | 4 | 4 | 4 | 4 | 4 | 4 | 4 | 4 | 4 | 4 | 4 | 4 | 3.5 | 4 | 4 | 4 |

[Table 22]

Examples in which a compound represented by the formula (IIId) is used as a terminal modifier

| | | Com. Ex. | | Ex. | | | | | Com. Ex. | Ex. |
|---|---|---|---|---|---|---|---|---|---|---|
| | | 45 | 48 | 107 | 122 | 123 | 124 | 125 | 60 | 126 |
| Formulation (parts by mass) | Copolymer (7) | — | — | 20 | 20 | 20 | 20 | 20 | 50 | 20 |
| | Copolymer (8) | 20 | — | — | — | — | — | — | — | — |
| | Copolymer (12) | — | 20 | — | — | — | — | — | — | — |
| | Natural rubber | 40 | 40 | 40 | 40 | 40 | 40 | 40 | 40 | 55 |
| | High-cis polybutadiene rubber | 40 | 40 | 40 | 40 | 40 | 40 | 40 | 10 | 25 |
| | Silica A | 75 | 75 | 75 | 75 | 75 | 75 | 75 | 75 | 75 |
| | Silane coupling agent A | 6 | 6 | 6 | 6 | 6 | 6 | 6 | 6 | 6 |
| | Carbon black | 5 | 5 | 5 | 5 | 5 | 5 | 5 | 5 | 5 |
| | Oil | 40 | 40 | 40 | 40 | 40 | 40 | 40 | 40 | 40 |
| | Coumarone indene resin 1 (Tg: 90°C) | 5 | 5 | 5 | — | 15 | 5 | 5 | 5 | 5 |
| | Coumarone indene resin 2 (Tg: 10°C) | — | — | — | — | — | 5 | — | — | — |
| | Coumarone indene resin 3 (Tg: -30°C) | — | — | — | — | — | — | 5 | — | — |
| | α-Methyl styrene resin (Tg: 95°C) | — | — | — | 5 | — | — | — | — | — |
| | Antioxidant | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 |
| | Sulfur | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 |
| Evaluation | Rubber strength index | 100 | 106 | 101 | 101 | 107 | 105 | 106 | 106 | 115 |
| | Low-heat-build-up property index | 100 | 88 | 132 | 131 | 127 | 129 | 132 | 110 | 127 |
| | Handling performance | 100 | 93 | 137 | 136 | 132 | 134 | 137 | 118 | 132 |
| | Braking performance on ice | 100 | 102 | 116 | 113 | 110 | 115 | 118 | 88 | 101 |
| | Abrasion resistance index | 100 | 97 | 104 | 100 | 102 | 102 | 105 | 83 | 103 |
| | Wet-grip performance index | 100 | 96 | 112 | 114 | 121 | 112 | 114 | 130 | 102 |
| | Dry handling stability | 4 | 4 | 4.25 | 4.25 | 4 | 4.25 | 4.5 | 4.5 | 4.25 |

[Table 23]

Examples in which a compound represented by the formula (IIIb) is used as a terminal modifier

| | | Example | | | | | | | | | Comparative Example | | | | | |
|---|---|---|---|---|---|---|---|---|---|---|---|---|---|---|---|---|
| | | 127 | 128 | 129 | 130 | 131 | 132 | 133 | 134 | 135 | 61 | 45 | 48 | 49 | 50 | 62 |
| Formulation (parts by mass) | Copolymer (8) | — | — | — | — | — | — | — | — | — | — | 20 | — | — | — | — |
| | Copolymer (12) | — | — | — | — | — | — | — | — | — | — | — | 20 | — | — | — |
| | Copolymer (14) | — | — | — | — | — | — | — | — | — | — | — | — | 20 | — | — |
| | Copolymer (15) | — | — | — | — | — | — | — | — | — | — | — | — | — | 20 | 10 |
| | Copolymer (19) | — | — | — | — | — | — | — | — | — | — | — | — | — | — | 10 |
| | Copolymer (33) | 20 | — | — | — | — | — | — | — | — | — | — | — | — | — | — |
| | Copolymer (34) | — | 20 | — | — | — | — | — | — | — | — | — | — | — | — | — |
| | Copolymer (35) | — | — | 20 | — | — | — | — | — | — | — | — | — | — | — | — |
| | Copolymer (36) | — | — | — | 20 | — | — | — | — | — | — | — | — | — | — | — |
| | Copolymer (37) | — | — | — | — | 20 | — | — | — | — | — | — | — | — | — | — |
| | Copolymer (38) | — | — | — | — | — | 20 | — | — | — | — | — | — | — | — | — |
| | Copolymer (39) | — | — | — | — | — | — | 20 | — | — | — | — | — | — | — | — |
| | Copolymer (40) | — | — | — | — | — | — | — | 20 | — | — | — | — | — | — | — |
| | Copolymer (41) | — | — | — | — | — | — | — | — | 20 | — | — | — | — | — | — |
| | Copolymer (42) | — | — | — | — | — | — | — | — | — | 20 | — | — | — | — | — |
| | Natural rubber | 40 | 40 | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 | 75 | 75 |
| | Silane coupling agent A | 6 | 6 | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 |
| | Coumarone indene resin 1 (Tg: 90°C) | 5 | 5 | 5 | 5 | 5 | 5 | 5 | 5 | 5 | 5 | 5 | 5 | 5 | 5 | 5 |
| | Coumarone indene resin 2 (Tg: 10°C) | — | — | — | — | — | — | — | — | — | — | — | — | — | — | — |
| | Coumarone indene resin 3 (Tg: -30°C) | — | — | — | — | — | — | — | — | — | — | — | — | — | — | — |
| | α-Methyl styrene resin (Tg: 95°C) | — | — | — | — | — | — | — | — | — | — | — | — | — | — | — |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 102 | 103 | 101 | 101 | 101 | 101 | 101 | 101 | 100 | 103 | 100 | 106 | 101 | 100 | 97 |
| | Low-heat-build-up property index | 118 | 122 | 108 | 106 | 107 | 109 | 108 | 109 | 102 | 118 | 100 | 88 | 100 | 94 | 105 |
| | Handling performance | 120 | 125 | 109 | 108 | 107 | 112 | 109 | 111 | 104 | 120 | 100 | 93 | 105 | 99 | 107 |
| | Braking performance on ice | 103 | 104 | 110 | 105 | 106 | 103 | 104 | 105 | 107 | 100 | 100 | 102 | 104 | 98 | 98 |
| | Abrasion resistance index | 110 | 110 | 109 | 119 | 109 | 108 | 118 | 112 | 115 | 100 | 100 | 97 | 93 | 92 | 108 |
| | Wet-grip performance index | 106 | 107 | 114 | 109 | 111 | 108 | 107 | 109 | 111 | 102 | 100 | 96 | 96 | 97 | 98 |
| | Dry handling stability | 4 | 4 | 4 | 4 | 4 | 4 | 4 | 4 | 4 | 4 | 4 | 4 | 4 | 4 | 3.5 |

[Table 24]

Examples in which a compound containing an alkoxysilyl group, a nitrogen atom and a carbonyl group is used as a terminal modifier

| | | Example | | | | | | | Comparative Example | | | | | |
|---|---|---|---|---|---|---|---|---|---|---|---|---|---|---|
| | | 136 | 137 | 138 | 139 | 140 | 141 | 142 | 63 | 45 | 48 | 49 | 50 | 64 |
| Formulation (parts by mass) | Copolymer (8) | – | – | – | – | – | – | – | – | 20 | – | – | – | – |
| | Copolymer (12) | – | – | – | – | – | – | – | – | – | 20 | – | – | – |
| | Copolymer (14) | – | – | – | – | – | – | – | – | – | – | 20 | – | – |
| | Copolymer (15) | – | – | – | – | – | – | – | – | – | – | – | 20 | 10 |
| | Copolymer (19) | – | – | – | – | – | – | – | – | – | – | – | – | 10 |
| | Copolymer (43) | 20 | – | – | – | – | – | – | – | – | – | – | – | – |
| | Copolymer (44) | – | 20 | – | – | – | – | – | – | – | – | – | – | – |
| | Copolymer (45) | – | – | 20 | – | – | – | – | – | – | – | – | – | – |
| | Copolymer (46) | – | – | – | 20 | – | – | – | – | – | – | – | – | – |
| | Copolymer (47) | – | – | – | – | 20 | – | – | – | – | – | – | – | – |
| | Copolymer (48) | – | – | – | – | – | 20 | – | – | – | – | – | – | – |
| | Copolymer (49) | – | – | – | – | – | – | 20 | – | – | – | – | – | – |
| | Copolymer (50) | – | – | – | – | – | – | – | 20 | – | – | – | – | – |
| | Natural rubber | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 |
| | Silane coupling agent A | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 |
| | Coumarone indene resin 1 (Tg: 90°C) | 5 | 5 | 5 | 5 | 5 | 5 | 5 | 5 | 5 | 5 | 5 | 5 | 5 |
| | Coumarone indene resin 2 (Tg: 10°C) | – | – | – | – | – | – | – | – | – | – | – | – | – |
| | Coumarone indene resin 3 (Tg: -30°C) | – | – | – | – | – | – | – | – | – | – | – | – | – |
| | α-Methyl styrene resin (Tg: 95°C) | – | – | – | – | – | – | – | – | – | – | – | – | – |
| | Antioxidant | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 104 | 103 | 104 | 104 | 105 | 103 | 103 | 100 | 100 | 106 | 101 | 100 | 97 |
| | Low-heat-build-up property index | 105 | 103 | 106 | 106 | 107 | 104 | 104 | 105 | 100 | 88 | 100 | 94 | 106 |
| | Handling performance | 107 | 105 | 108 | 107 | 108 | 105 | 105 | 106 | 100 | 93 | 105 | 99 | 108 |
| | Braking performance on ice | 104 | 107 | 106 | 108 | 109 | 108 | 110 | 100 | 100 | 102 | 104 | 98 | 98 |
| | Abrasion resistance index | 113 | 112 | 108 | 109 | 110 | 108 | 109 | 103 | 100 | 97 | 93 | 92 | 108 |
| | Wet-grip performance index | 107 | 113 | 111 | 114 | 115 | 113 | 115 | 104 | 100 | 96 | 96 | 97 | 98 |
| | Dry handling stability | 4 | 4 | 4 | 4 | 4 | 4 | 4 | 4 | 4 | 4 | 4 | 4 | 3.5 |

[Table 25]

Examples in which an N,N-dialkyl-substituted carboxylic acid amide dialkyl acetal compound is used as a terminal modifier

| | | Example | | | | | | | | Comparative Example | | | | |
|---|---|---|---|---|---|---|---|---|---|---|---|---|---|---|
| | | 143 | 144 | 145 | 146 | 147 | 148 | 149 | 65 | 45 | 48 | 49 | 50 | 66 |
| Formulation (parts by mass) | Copolymer (8) | - | - | - | - | - | - | - | - | 20 | - | - | - | - |
| | Copolymer (12) | - | - | - | - | - | - | - | - | - | 20 | - | - | - |
| | Copolymer (14) | - | - | - | - | - | - | - | - | - | - | 20 | - | - |
| | Copolymer (15) | - | - | - | - | - | - | - | - | - | - | - | 20 | 10 |
| | Copolymer (19) | - | - | - | - | - | - | - | - | - | - | - | - | 10 |
| | Copolymer (51) | 20 | - | - | - | - | - | - | - | - | - | - | - | - |
| | Copolymer (52) | - | 20 | - | - | - | - | - | - | - | - | - | - | - |
| | Copolymer (53) | - | - | 20 | - | - | - | - | - | - | - | - | - | - |
| | Copolymer (54) | - | - | - | 20 | - | - | - | - | - | - | - | - | - |
| | Copolymer (55) | - | - | - | - | 20 | - | - | - | - | - | - | - | - |
| | Copolymer (56) | - | - | - | - | - | 20 | - | - | - | - | - | - | - |
| | Copolymer (57) | - | - | - | - | - | - | 20 | - | - | - | - | - | - |
| | Copolymer (58) | - | - | - | - | - | - | - | 20 | - | - | - | - | - |
| | Natural rubber | 40 | 40 | 40 | 40 | 40 | 40 | 40 | 40 | 40 | 40 | 40 | 40 | 40 |
| | High-cis polybutadiene | 40 | 40 | 40 | 40 | 40 | 40 | 40 | 40 | 40 | 40 | 40 | 40 | 40 |
| | Silica A | 75 | 75 | 75 | 75 | 75 | 75 | 75 | 75 | 75 | 75 | 75 | 75 | 75 |
| | Silane coupling agent A | 6 | 6 | 6 | 6 | 6 | 6 | 6 | 6 | 6 | 6 | 6 | 6 | 6 |
| | Carbon black | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 |
| | Coumarone indene resin 1 (Tg: 90°C) | 5 | 5 | 5 | 5 | 5 | 5 | 5 | 5 | 5 | 5 | 5 | 5 | 5 |
| | Coumarone indene resin 2 (Tg: 10°C) | - | - | - | - | - | - | - | - | - | - | - | - | - |
| | Coumarone indene resin 3 (Tg: -30°C) | - | - | - | - | - | - | - | - | - | - | - | - | - |
| | α-Methyl styrene resin (Tg: 95°C) | - | - | - | - | - | - | - | - | - | - | - | - | - |
| | Antioxidant | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber strength index | 104 | 104 | 104 | 104 | 105 | 101 | 103 | 100 | 100 | 106 | 101 | 100 | 97 |
| | Low-heat-build-up property index | 105 | 105 | 104 | 105 | 108 | 102 | 103 | 104 | 100 | 88 | 100 | 94 | 106 |
| | Handling performance | 106 | 107 | 105 | 105 | 110 | 103 | 104 | 105 | 100 | 93 | 105 | 99 | 106 |
| | Braking performance on ice | 102 | 108 | 111 | 109 | 113 | 109 | 110 | 101 | 100 | 102 | 104 | 98 | 98 |
| | Abrasion resistance index | 114 | 113 | 109 | 108 | 109 | 108 | 108 | 104 | 100 | 97 | 93 | 92 | 108 |
| | Wet-grip performance index | 106 | 111 | 115 | 112 | 117 | 112 | 114 | 103 | 100 | 96 | 96 | 97 | 98 |
| | Dry handling stability | 4 | 4 | 4 | 4 | 4 | 4 | 4 | 4 | 4 | 4 | 4 | 4 | 4 |

As shown in Tables 6 to 25, since each of the rubber compositions of the examples contains a specific amount of a conjugated diene copolymer having a specific amine structure at an initiation terminal, a structural unit derived from a silicon-containing compound at a main chain, and a structural unit derived from a compound containing a nitrogen atom and/or a silicon atom at a termination terminal, a specific amount of a high-cis polybutadiene having a cis microstructure content of not less than 95% by mass, a specific amount of a polyisoprene-based rubber, a specific amount of a silica, and a specific amount of a mercapto group-containing silane coupling agent, these rubber compositions exhibited balanced improvements in performance on ice and snow, abrasion resistance, rubber strength, fuel economy, wet-grip performance, and dry handling stability, as compared to the rubber compositions of the comparative examples. Moreover, the comparison between the conjugated diene polymer in which the three sites, the initiation terminal, main chain, and termination terminal, are modified by specific compounds, and a copolymer in which only one of the initiation terminal, main chain, and termination terminal is modified shows that the modification of the three sites, the initiation terminal, main chain, and termination terminal, synergistically increases the effects of improving those properties.

The rubber composition of Example 28, which contains the conjugated diene polymer mercapto group together with a mercapto group-containing silane coupling agent, two kinds of silica having specific nitrogen adsorption specific surface areas, and a solid resin having a specific glass transition temperature, exhibited particularly better properties than those in the other examples.

Each of the rubber compositions of Comparative Example 8, 29, and 52 contains, instead of the conjugated

diene polymer, the copolymer (17) which has a structural unit derived from a silicon-containing compound at a main chain and a structural unit derived from a compound containing a nitrogen atom and/or a silicon atom at a termination terminal but does not have a specific amine structure at an initiation terminal. Thus, these rubber compositions exhibited inferior properties to those in the examples, and even had poorer abrasion resistance than that of the respective standard comparative examples.

**Claims**

1. A rubber composition, comprising:

   a conjugated diene polymer,
   a high-cis polybutadiene having a cis microstructure content of not less than 95% by mass,
   a polyisoprene-based rubber, and
   a silica having a nitrogen adsorption specific surface area of 40 to 400 $m^2/g$,
   the conjugated diene polymer being obtained by polymerizing a monomer component including a conjugated diene compound and a silicon-containing vinyl compound in the presence of a polymerization initiator represented by the following formula (I):

   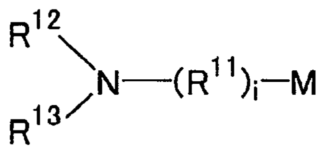

   (I)

   wherein i represents 0 or 1; $R^{11}$ represents a $C_{1-100}$ hydrocarbylene group; $R^{12}$ and $R^{13}$ each represent an optionally substituted hydrocarbyl group or a trihydrocarbylsilyl group, or $R^{12}$ and $R^{13}$ are bonded to each other to form a hydrocarbylene group optionally containing at least one, as a hetero atom, selected from the group consisting of a silicon atom, a nitrogen atom, and an oxygen atom; and M represents an alkali metal atom, to produce a copolymer, and
   then reacting a compound containing at least one of a nitrogen atom and a silicon atom with an active terminal of the copolymer,
   wherein the rubber composition comprises, based on 100% by mass of a rubber component, 1 to 45% by mass of the conjugated diene polymer, 20 to 64% by mass of the high-cis polybutadiene, and 35 to 60% by mass of the polyisoprene-based rubber, and
   the rubber composition comprises 5 to 150 parts by mass of the silica for each 100 parts by mass of the rubber component.

2. The rubber composition according to claim 1, wherein $R^{11}$ in the formula (I) is a group represented by the following formula (Ia):

   $$-(CH_2)_n-R^{14}- \quad (Ia)$$

   wherein $R^{14}$ represents a hydrocarbylene group comprising at least one of a structural unit derived from a conjugated diene compound and a structural unit derived from an aromatic vinyl compound; and n represents an integer of 1 to 10.

3. The rubber composition according to claim 2, wherein $R^{14}$ in the formula (Ia) is a hydrocarbylene group-comprising from one to ten isoprene-derived structural unit(s).

4. The rubber composition according to any one of claims 1 to 3,
   wherein the silicon-containing vinyl compound is a compound represented by the following formula (II):

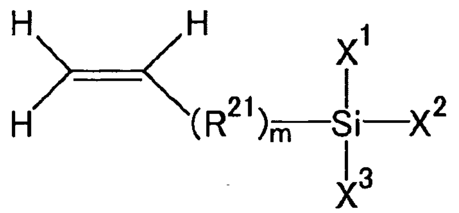

(II)

wherein m represents 0 or 1; $R^{21}$ represents a hydrocarbylene group; and $X^1$, $X^2$, and $X^3$ each represent a substituted amino group, a hydrocarbyloxy group, or an optionally substituted hydrocarbyl group.

**5.** The rubber composition according to any one of claims 1 to 4,
wherein the conjugated diene polymer contains a structural unit derived from an aromatic vinyl compound.

**6.** The rubber composition according to any one of claims 1 to 5,
wherein the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$.

**7.** The rubber composition according to any one of claims 1 to 6, comprising
a solid resin having a glass transition temperature of 60 to 120°C in an amount of 1 to 30 parts by mass for each 100 parts by mass of the rubber component.

**8.** The rubber composition according to any one of claims 1 to 7,
wherein the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$, and
the rubber composition comprises a solid resin having a glass transition temperature of 60 to 120°C in an amount of 1 to 30 parts by mass for each 100 parts by mass of the rubber component.

**9.** The rubber composition according to any one of claims 1 to 8, comprising
a mercapto group-containing silane coupling agent in an amount of 0.5 to 20 parts by mass for each 100 parts by mass of the silica.

**10.** The rubber composition according to any one of claims 1 to 9,
wherein the rubber composition comprises a mercapto group-containing silane coupling agent in an amount of 0.5 to 20 parts by mass for each 100 parts by mass of the silica, and
the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$.

**11.** The rubber composition according to any one of claims 1 to 10, comprising
a mercapto group-containing silane coupling agent in an amount of 0.5 to 20 parts by mass for each 100 parts by mass of the silica, and
a solid resin having a glass transition temperature of 60 to 120°C in an amount of 1 to 30 parts by mass for each 100 parts by mass of the rubber component.

**12.** The rubber composition according to any one of claims 1 to 11,
wherein the rubber composition comprises a mercapto group-containing silane coupling agent in an amount of 0.5 to 20 parts by mass for each 100 parts by mass of the silica,
the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$, and
the rubber composition comprises a solid resin having a glass transition temperature of 60 to 120°C in an amount of 1 to 30 parts by mass for each 100 parts by mass of the rubber component.

**13.** The rubber composition according to any one of claims 1 to 12,
wherein the rubber composition comprises a mercapto group-containing silane coupling agent in an amount of 0.5 to 20 parts by mass for each 100 parts by mass of the silica, and
the silane coupling agent is at least one of a compound represented by the formula (1) below, and a compound containing a linking unit A represented by the formula (2) below and a linking unit B represented by the formula (3) below,

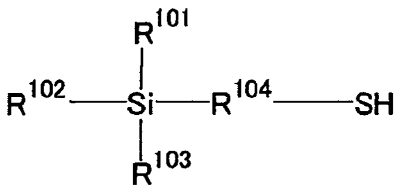

(1)

wherein $R^{101}$ to $R^{103}$ each represent a branched or unbranched $C_{1-12}$ alkyl group, a branched or unbranched $C_{1-12}$ alkoxy group, or a group represented by $-O-(R^{111}-O)_z-R^{112}$ where z $R^{111}$s each represent a branched or unbranched $C_{1-30}$ divalent hydrocarbon group, and z $R^{111}$s may be the same as or different from one another; $R^{112}$ represents a branched or unbranched $C_{1-30}$ alkyl group, a branched or unbranched $C_{2-30}$ alkenyl group, a $C_{6-30}$ aryl group, or a $C_{7-30}$ aralkyl group; and z represents an integer of 1 to 30, and $R^{101}$ to $R^{103}$ may be the same as or different from one another; and $R^{104}$ represents a branched or unbranched $C_{1-6}$ alkylene group;

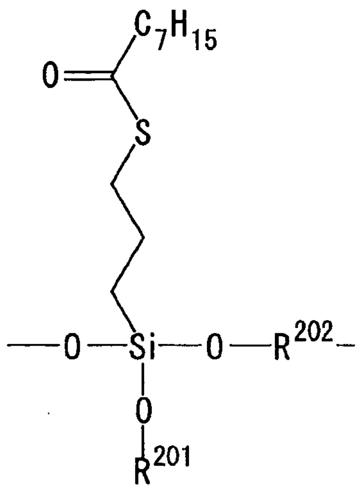

(2)

and

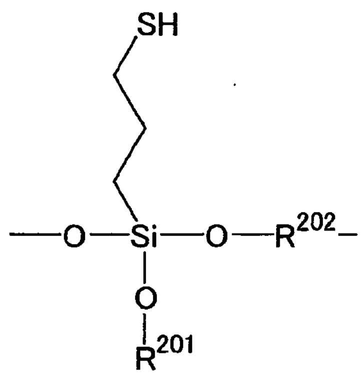

(3)

wherein $R^{201}$ represents a hydrogen atom, a halogen atom, a branched or unbranched $C_{1-30}$ alkyl group, a branched or unbranched $C_{2-30}$ alkenyl group, a branched or unbranched $C_{2-30}$ alkynyl group, or the alkyl group in which a terminal hydrogen atom is replaced with a hydroxy group or a carboxyl group; $R^{202}$ represents a branched or unbranched $C_{1-30}$ alkylene group, a branched or unbranched $C_{2-30}$ alkenylene group, or a branched or unbranched $C_{2-30}$ alkynylene group; and $R^{201}$ and $R^{202}$ may be joined together to form a cyclic structure.

**14.** The rubber composition according to any one of claims 1 to 13,
wherein the silica includes silica (1) having a nitrogen adsorption specific surface area of at least 40 $m^2/g$ but less than 120 $m^2/g$, and silica (2) having a nitrogen adsorption specific surface area of not less than 120 $m^2/g$, and
the nitrogen adsorption specific surface areas and amounts of the silica (1) and the silica (2) satisfy the following inequalities:

$$\text{(Nitrogen adsorption specific surface area of silica (2))} / \text{(Nitrogen adsorption specific surface area of silica (1))} \geq 1.4, \text{ and}$$

$$\text{(Amount of silica (1))} \times 0.06 \leq \text{(Amount of silica (2))} \leq \text{(Amount of silica (1))} \times 15.$$

**15.** The rubber composition according to any one of claims 1 to 14, which is for use in a tread of a studless winter tire.

**16.** A studless winter tire, formed from the rubber composition according to any one of claims 1 to 15.

**Patentansprüche**

**1.** Kautschukzusammensetzung umfassend:

ein konjugiertes Dienpolymer,
ein Hoch-Cis-Polybutadien mit einem Cis-Mikrostrukturgehalt von nicht weniger als 95 Massen-%,
ein Polyisopren-basierter Kautschuk und
ein Silica mit einer durch Stickstoffadsorption gemessenen spezifischen Oberfläche von 40 bis 400 $m^2$/g,
wobei das konjugierte Dienpolymer durch Polymerisieren einer Monomerkomponente, die eine konjugierte Dienverbindung und eine Silicium enthaltende Vinylverbindung enthält, in der Gegenwart eines Polymerisationsinitiators, der durch die Formel (I) dargestellt ist, erhalten wird:

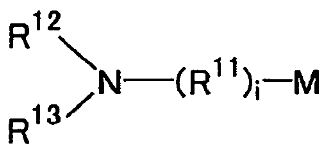

(I)

worin i 0 oder 1 ist; $R^{11}$ eine $C_{1-100}$ Hydrocarbylengrupe ist; $R^{12}$ und $R^{13}$ jeweils eine optional substituierte Hydrocarbylgruppe oder eine Trihydrocarbylsilylgruppe sind oder $R^{12}$ und $R^{13}$ miteinander verbunden sind, um eine Hydrocarbylengruppe zu bilden, die optional als ein Heteroatom wenigstens eines enthält, das aus der Gruppe bestehend aus einem Siliciumatom, einem Stickstoffatom und einem Sauerstoffatom ausgewählt ist; und M für ein Alkalimetallatom steht, um ein Copolymer zu erzeugen, und dann
Reagieren einer Verbindung, die wenigstens eines von einem Stickstoffatom und einem Siliciumatom enthält, mit einem aktiven Ende des Copolymers,
wobei die Kautschukzusammensetzung basierend auf 100 Massenteile der Kautschukkomponente 1 bis 45 Massen-% des konjugierten Dienpolymers, 20 bis 64 Massen-% des Hoch-Cis-Polybutadiens und 35 bis 60 Massen-% des Polyisopren-basierten Kautschuks umfasst und
die Kautschukzusammensetzung 5 bis 150 Massenteile des Silica bezogen auf jeweils 100 Massenteile der Kautschukkomponente umfasst.

**2.** Kautschukzusammensetzung nach Anspruch 1,
wobei $R^{11}$ in der Formel (I) eine Gruppe ist, die durch die folgende Formel (Ia) wiedergegeben wird:

$$-(CH_2)_n-R^{14}- \qquad \text{(I a)}$$

worin $R^{14}$ eine Hydrocarbylengruppe ist, die wenigstens eine von einer Struktureinheit, die von einer konjugierten Dienverbindung abgeleitet ist, und von einer Struktureinheit, die von einer aromatischen Vinylverbindung abgeleiteten ist, umfasst; und n ist eine ganze Zahl von 1 bis 10.

**3.** Kautschukzusammensetzung nach Anspruch 2,

wobei $R^{14}$ in der Formel (Ia) eine Hydrocarbylengruppe ist, eine bis zehn von Isopren abgeleitete Struktureinheit(en) umfasst.

4. Kautschukzusammensetzung nach einem der Ansprüche 1 bis 3,
wobei die Silicium enthaltende Vinylverbindung eine durch die folgende Formel (II) dargestellte Verbindung ist:

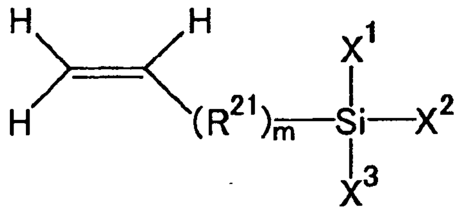

(II)

worin m 0 oder 1 ist; $R^{21}$ eine Hydrocarbylengruppe ist und $X^1$, $X^2$ und $X^3$ jeweils eine substituierte Aminogruppe, eine Hydrocarbyloxygruppe oder eine optional substituierte Hydrocarbylgruppe sind.

5. Kautschukzusammensetzung nach einem der Ansprüche 1 bis 4, wobei das konjugierte Dienpolymer eine Struktureinheit enthält, die von einer aromatischen Vinylverbindung abgeleitet ist.

6. Kautschukzusammensetzung nach einem der Ansprüche 1 bis 5, wobei das Silica Silica (1) mit einer durch Stickstoffadsorption gemessenen spezifischen Oberfläche von wenigstens 40 $m^2/g$, aber weniger als 120 $m^2/g$ und Silica (2) mit einer durch Stickstoffadsorption gemessenen spezifischen Oberfläche von nicht weniger als 120 $m^2/g$ enthält.

7. Kautschukzusammensetzung nach einem der Ansprüche 1 bis 6, umfassend ein festes Harz mit einer Glasübergangstemperatur von 60 bis 120°C in einer Menge von 1 bis 30 Massenteilen bezogen auf jeweils 100 Massenteile der Kautschukkomponente.

8. Kautschukzusammensetzung nach einem der Ansprüche 1 bis 7, wobei das Silica Silica (1) mit einer durch Stickstoffadsorption gemessenen spezifischen Oberfläche von wenigstens 40 $m^2/g$, aber weniger als 120 $m^2/g$ und Silica (2) mit einer durch Stickstoffadsorption gemessenen spezifischen Oberfläche von nicht weniger als 120 $m^2/g$ enthält und die Kautschukzusammensetzung ein festes Harz mit einer Glasübergangstemperatur von 60 bis 120°C in einer Menge von 1 bis 30 Massenteilen bezogen auf jeweils 100 Massenteile der Kautschukkomponente umfasst.

9. Kautschukzusammensetzung nach einem der Ansprüche 1 bis 8, umfassend ein Mercaptogruppe enthaltendes Silan-Kupplungsmittel in einer Menge von 0,5 bis 20 Massenteilen bezogen auf jeweils 100 Massenteile des Silica.

10. Kautschukzusammensetzung nach einem der Ansprüche 1 bis 9, wobei die Kautschukzusammensetzung ein Mercaptogruppe enthaltendes Silan-Kupplungsmittel in einer Menge von 0,5 bis 20 Massenteilen bezogen auf jeweils 100 Massenteile des Silica umfasst und
das Silica Silica (1) mit einer durch Stickstoffadsorption gemessenen spezifischen Oberfläche von wenigstens 40 $m^2/g$, aber weniger als 120 $m^2/g$ und Silica (2) mit einer durch Stickstoffadsorption gemessenen spezifischen Oberfläche von nicht weniger als 120 $m^2/g$ enthält.

11. Kautschukzusammensetzung nach einem der Ansprüche 1 bis 10, umfassend
ein Mercaptogruppe enthaltendes Silan-Kupplungsmittel in einer Menge von 0,5 bis 20 Massenteilen bezogen auf jeweils 100 Massenteile des Silica und ein festes Harz mit einer Glasübergangstemperatur von 60 bis 120°C in einer Menge von 1 bis 30 Massenteilen bezogen auf jeweils 100 Massenteile der Kautschukkomponente.

12. Kautschukzusammensetzung nach einem der Ansprüche 1 bis 11,
wobei die Kautschukzusammensetzung ein Mercaptogruppe enthaltendes Silan-Kupplungsmittel in einer Menge von 0,5 bis 20 Massenteilen bezogen auf jeweils 100 Massenteile des Silica umfasst,
das Silica Silica (1) mit einer durch Stickstoffadsorption gemessenen spezifischen Oberfläche von wenigstens 40 $m^2/g$, aber weniger als 120 $m^2/g$ und Silica (2) mit einer durch Stickstoffadsorption gemessenen spezifischen Oberfläche von nicht weniger als 120 $m^2/g$ enthält und die Kautschukzusammensetzung ein festes Harz mit einer Glasübergangstemperatur von 60 bis 120°C in einer Menge von 1 bis 30 Massenteile bezogen auf jeweils 100 Massenteile der Kautschukkomponente umfasst.

**13.** Kautschukzusammensetzung nach einem der Ansprüche 1 bis 12, wobei die Kautschukzusammensetzung ein Mercaptogruppe enthaltendes Silan-Kupplungsmittel in einer Menge von 0,5 bis 20 Massenteilen bezogen auf jeweils 100 Massenteile des Silica umfasst und
das Silan-Kupplungsmittel wenigstens eine der durch die nachfolgende Formel (1) dargestellte Verbindungen und einer Verbindung enthaltend eine Kopplungsgruppe A dargestellt durch die nachfolgende Formel (2) und eine Kopplungsgruppe B dargestellt durch die nachfolgende Formel (3) ist,

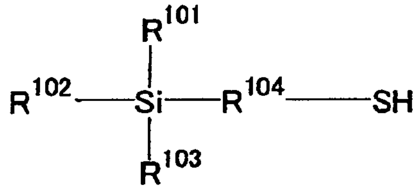

(1)

worin $R^{101}$ bis $R^{103}$ jeweils eine verzweigte oder unverzweigte $C_{1-12}$-Alkylgruppe, eine verzweigte oder unverzweigte $C_{1-12}$-Alkoxygruppe oder eine durch $-O-(R^{111}-O)_z-R^{112}$ dargestellte Gruppe sind, worin z $R^{111}$ jeweils eine verzweigte oder unverzweigte divalente $C_{1-30}$-Kohlenwasserstoffgruppe sind und z $R^{111}$ gleich oder unterschiedlich voneinander sein können, $R^{112}$ eine verzweigte oder unverzweigte $C_{1-30}$-Alkylgruppe, eine verzweigte oder unverzweigte $C_{2-30}$-Alkenylgruppe, eine $C_{6-30}$-Arylgruppe oder eine $C_{7-30}$-Aralkylgruppe ist und z eine ganze Zahl von 1 bis 30 ist und $R^{101}$ bis $R^{103}$ gleich oder voneinander verschieden sein können und $R^{104}$ eine verzweigte oder unverzweigte $C_{1-6}$-Alkylengruppe ist;

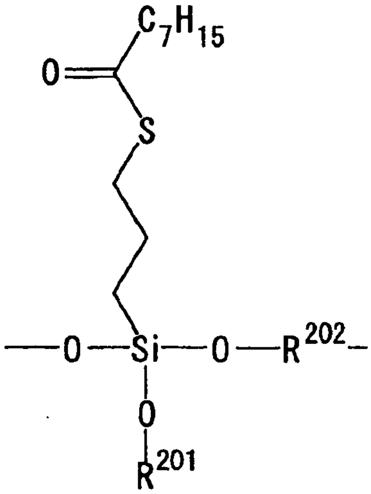

(2)

und

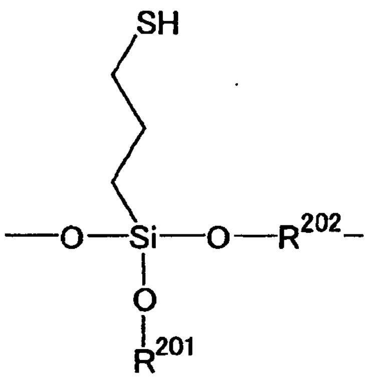

(3)

worin $R^{201}$ ein Wasserstoffatom, ein Halogenatom, eine verzweigte oder unverzweigte $C_{1-30}$-Alkylgruppe, eine verzweigte oder unverzweigte $C_{2-30}$-Alkylengruppe, eine verzweigte oder unverzweigte $C_{2-30}$-Alkynylgruppe oder eine Alkylgruppe ist, in welcher ein endständiges Wasserstoffatom durch eine Hydroxylgruppe oder eine Carboxyl-

gruppe ausgetauscht ist; $R^{202}$ eine verzweigte oder unverzweigte $C_{1-30}$-Alkylengruppe, eine verzweigte oder unverzweigte $C_{2-30}$-Alkenylengruppe oder eine verzweigte oder unverzweigte $C_{2-30}$-Alkynylengruppe ist und $R^{201}$ und $R^{202}$ miteinander verbunden sein können, um eine zyklische Struktur zu bilden.

**14.** Kautschukzusammensetzung nach einem der Ansprüche 1 bis 13, wobei das Silica Silica (1) mit einer durch Stickstoffadsorption gemessenen spezifischen Oberfläche von wenigstens 40 $m^2/g$, aber weniger als 120 $m^2/g$ und Silica (2) mit einer durch Stickstoffadsorption gemessenen spezifischen Oberfläche von nicht weniger als 120 $m^2/g$ enthält und die durch Stickstoffadsorption gemessenen spezifischen Oberflächen und Mengen des Silica (1) und des Silica (2) die folgenden Ungleichungen erfüllen:

$$\text{(stickstoffadsorptionsspezifische Oberfläche von Silica (2))} / \text{(stickstoffadsorptionsspezifische Oberfläche von Silica (1))} \geq 1{,}4 \text{ und}$$

$$\text{(Menge von Silica (1))} \times 0{,}06 \leq \text{(Menge von Silica (2))} \leq \text{(Menge von Silica (1))} \times 15.$$

**15.** Kautschukzusammensetzung nach einem der Ansprüche 1 bis 14, welche für die Verwendung in einer Lauffläche eines spikelosen Winterreifens ist.

**16.** Spikeloser Winterreifen, gebildet aus der Kautschukzusammensetzung nach einem der Ansprüche 1 bis 15.

## Revendications

**1.** Composition de caoutchouc comprenant :

un polymère de diène conjugué,
un polybutadiène à forte teneur en cis ayant une teneur en microstructure cis d'au moins 95 % en masse,
un caoutchouc à base de polyisoprène, et
une silice ayant une surface spécifique d'adsorption d'azote de 40 à 400 $m^2/g$,
le polymère de diène conjugué étant obtenu par polymérisation d'un composant monomère contenant un composé diène conjugué et un composé vinyle contenant du silicium en présence d'un amorceur de polymérisation représenté par la formule (I) suivante :

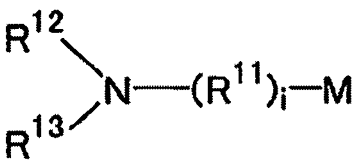

(I)

dans laquelle i vaut 0 ou 1 ; $R^{11}$ représente un groupe hydrocarbylène en $C_1$ à $C_{100}$ ; chacun de $R^{12}$ et $R^{13}$ représente un groupe hydrocarbyle éventuellement substitué ou un groupe trihydrocarbylsilyle, ou bien $R^{12}$ et $R^{13}$ sont liés l'un à l'autre pour former un groupe hydrocarbylène contenant éventuellement au moins un hétéroatome choisi dans l'ensemble constitué par un atome de silicium, un atome d'azote et un atome d'oxygène ; et M représente un atome de métal alcalin,
pour produire un copolymère, et ensuite
réaction d'un composé contenant au moins l'un parmi un atome d'azote et un atome de silicium avec une extrémité réactive du copolymère,
laquelle composition de caoutchouc comprend, pour 100 parties en masse de composant caoutchouc, 1 à 45 % en masse du polymère de diène conjugué, 20 à 64 % en masse du polybutadiène à forte teneur en cis, et 35 à 60 % en masse du caoutchouc à base de polyisoprène, et
laquelle composition de caoutchouc comprend 5 à 150 parties en masse de la silice pour 100 parties en masse du composant caoutchouc.

**2.** Composition de caoutchouc selon la revendication 1, dans laquelle $R^{11}$ dans la formule (I) est un groupe représenté par la formule (Ia) suivante :

$$-(CH_2)_n-R^{14}- \quad (Ia)$$

dans laquelle $R^{14}$ représente un groupe hydrocarbylène comprenant au moins l'un parmi un motif structurel dérivé d'un composé diène conjugué et un motif structurel dérivé d'un composé vinylaromatique, et n est un entier de 1 à 10.

**3.** Composition de caoutchouc selon la revendication 2, dans laquelle $R^{14}$ dans la formule (Ia) est un groupe hydrocarbylène comprenant d'un à dix motifs structurels dérivés d'isoprène.

**4.** Composition de caoutchouc selon l'une quelconque des revendications 1 à 3,
dans laquelle le composé vinylique contenant du silicium est un composé représenté par la formule (II) suivante :

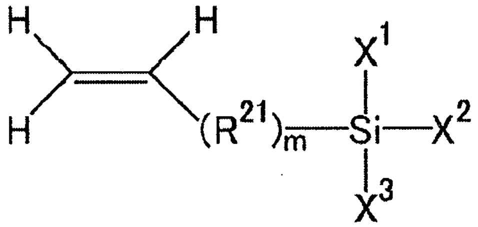

(II)

dans laquelle m vaut 0 ou 1 ; $R^{21}$ représente un groupe hydrocarbylène ; chacun de $X^1$, $X^2$ et $X^3$ représente un groupe amino substitué, un groupe hydrocarbyloxy, ou un groupe hydrocarbyle éventuellement substitué.

**5.** Composition de caoutchouc selon l'une quelconque des revendications 1 à 4,
dans laquelle le polymère de diène conjugué contient un motif structurel dérivé d'un composé vinylaromatique.

**6.** Composition de caoutchouc selon l'une quelconque des revendications 1 à 5,
dans laquelle la silice comprend une silice (1) ayant une surface spécifique d'adsorption d'azote d'au moins 40 $m^2/g$ mais inférieure à 120 $m^2/g$, et une silice (2) ayant une surface spécifique d'adsorption d'azote non inférieure à 120 $m^2/g$.

**7.** Composition de caoutchouc selon l'une quelconque des revendications 1 à 6, comprenant
une résine solide ayant une température de transition vitreuse de 60 à 120°C en une quantité de 1 à 30 parties en masse pour 100 parties en masse du composant caoutchouc.

**8.** Composition de caoutchouc selon l'une quelconque des revendications 1 à 7, dans laquelle
la silice comprend une silice (1) ayant une surface spécifique d'adsorption d'azote d'au moins 40 $m^2/g$ mais inférieure à 120 $m^2/g$, et une silice (2) ayant une surface spécifique d'adsorption d'azote non inférieure à 120 $m^2/g$, et
la composition de caoutchouc comprend une résine solide ayant une température de transition vitreuse de 60 à 120°C en une quantité de 1 à 30 parties en masse pour 100 parties en masse du composant caoutchouc.

**9.** Composition de caoutchouc selon l'une quelconque des revendications 1 à 8, comprenant un agent de couplage au silane contenant un groupe mercapto en une quantité de 0,5 à 20 parties en masse pour 100 parties en masse de la silice.

**10.** Composition de caoutchouc selon l'une quelconque des revendications 1 à 9, dans laquelle
la composition de caoutchouc comprend un agent de couplage au silane contenant un groupe mercapto en une quantité de 0,5 à 20 parties en masse pour 100 parties en masse de la silice, et
la silice comprend une silice (1) ayant une surface spécifique d'adsorption d'azote d'au moins 40 $m^2/g$ mais inférieure à 120 $m^2/g$, et une silice (2) ayant une surface spécifique d'adsorption d'azote non inférieure à 120 $m^2/g$.

**11.** Composition de caoutchouc selon l'une quelconque des revendications 1 à 10, comprenant
un agent de couplage au silane contenant un groupe mercapto en une quantité de 0,5 à 20 parties en masse pour

100 parties en masse de la silice, et
une résine solide ayant une température de transition vitreuse de 60 à 120°C en une quantité de 1 à 30 parties en masse pour 100 parties en masse du composant caoutchouc.

**12.** Composition de caoutchouc selon l'une quelconque des revendications 1 à 11, dans laquelle
la composition de caoutchouc comprend un agent de couplage au silane contenant un groupe mercapto en une quantité de 0,5 à 20 parties en masse pour 100 parties en masse de la silice,
la silice comprend une silice (1) ayant une surface spécifique d'adsorption d'azote d'au moins 40 $m^2/g$ mais inférieure à 120 $m^2/g$, et une silice (2) ayant une surface spécifique d'adsorption d'azote non inférieure à 120 $m^2/g$, et
la composition de caoutchouc comprend une résine solide ayant une température de transition vitreuse de 60 à 120°C en une quantité de 1 à 30 parties en masse pour 100 parties en masse du composant caoutchouc.

**13.** Composition de caoutchouc selon l'une quelconque des revendications 1 à 12, dans laquelle
la composition de caoutchouc comprend un agent de couplage au silane contenant un groupe mercapto en une quantité de 0,5 à 20 parties en masse pour 100 parties en masse de la silice, et
l'agent de couplage au silane est au moins l'un parmi un composé représenté par la formule (1) ci-dessous et un composé contenant un motif de liaison A représenté par la formule (2) ci-dessous et un motif de liaison B représenté par la formule (3) ci-dessous,

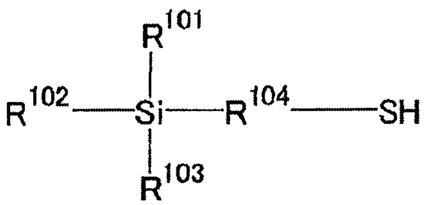

(1)

dans laquelle chacun de $R^{101}$ à $R^{103}$ représente un groupe alkyle en $C_1$ à $C_{12}$ ramifié ou non ramifié, un groupe alcoxy en $C_1$ à $C_{12}$ ramifié ou non ramifié, ou un groupe représenté par $-O-(R^{111}-O)_z-R^{112}$ où chacun des z $R^{111}$ représente un groupe hydrocarboné divalent en $C_1$ à $C_{30}$ ramifié ou non ramifié, et les z $R^{111}$ peuvent être identiques ou différents ; $R^{112}$ représente un groupe alkyle en $C_1$ à $C_{30}$ ramifié ou non ramifié, un groupe alcényle en $C_2$ à $C_{30}$ ramifié ou non ramifié, un groupe aryle en $C_6$ à $C_{30}$, ou un groupe aralkyle en $C_7$ à $C_{30}$ ; et z représente un entier de 1 à 30, et $R^{101}$ à $R^{103}$ peuvent être identiques ou différents ; et $R^{104}$ représente un groupe alkylène en $C_1$ à $C_6$ ramifié ou non ramifié ;

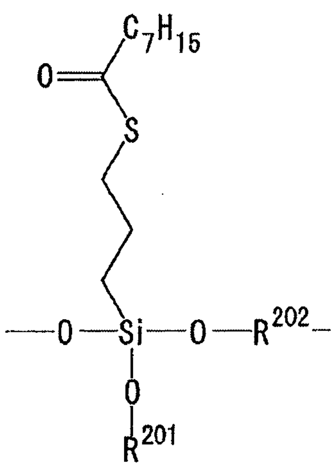

(2)

et

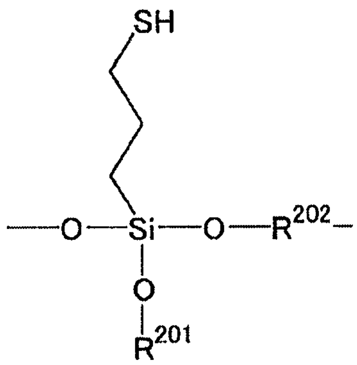 (3)

dans lesquelles $R^{201}$ représente un atome d'hydrogène, un atome d'halogène, un groupe alkyle en $C_1$ à $C_{30}$ ramifié ou non ramifié, un groupe alcényle en $C_2$ à $C_{30}$ ramifié ou non ramifié, un groupe alcynyle en $C_2$ à $C_{30}$ ramifié ou non ramifié, ou un groupe alkyle dont un atome d'hydrogène terminal est remplacé par un groupe hydroxyle ou un groupe carboxyle ; $R^{202}$ représente un groupe alkylène en $C_1$ à $C_{30}$ ramifié ou non ramifié, un groupe alcénylène en $C_2$ à $C_{30}$ ramifié ou non ramifié, ou un groupe alcynylène en $C_2$ à $C_{30}$ ramifié ou non ramifié ; et $R^{201}$ et $R^{202}$ peuvent être joints ensemble pour former une structure cyclique.

**14.** Composition de caoutchouc selon l'une quelconque des revendications 1 à 13, dans laquelle
la silice comprend une silice (1) ayant une surface spécifique d'adsorption d'azote d'au moins 40 $m^2/g$ mais inférieure à 120 $m^2/g$, et une silice (2) ayant une surface spécifique d'adsorption d'azote non inférieure à 120 $m^2/g$, et
les surfaces spécifiques d'adsorption d'azote et les quantités de la silice (1) et de la silice (2) satisfont aux inégalités suivantes :

$$\text{(surface spécifique d'adsorption d'azote de la silice (2))} / \text{(surface spécifique d'adsorption d'azote de la silice (1))} \geq 1{,}4, \text{ et}$$

$$\text{(quantité de silice (1))} \times 0{,}06 \leq \text{(quantité de silice (2))} \leq \text{(quantité de silice (1))} \times 15.$$

**15.** Composition de caoutchouc selon l'une quelconque des revendications 1 à 14, qui est destinée à être utilisée dans une bande de roulement d'un pneu neige sans crampons.

**16.** Pneu neige sans crampons formé à partir de la composition de caoutchouc de l'une quelconque des revendications 1 à 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000344955 A